(19) Europäisches Patentamt / European Patent Office / Office européen des brevets

(11) **EP 3 909 766 B1**

(12) **EUROPEAN PATENT SPECIFICATION**

(45) Date of publication and mention of the grant of the patent:
**07.05.2025 Bulletin 2025/19**

(21) Application number: **21173830.7**

(22) Date of filing: **14.05.2021**

(51) International Patent Classification (IPC):
*B32B 27/30* (2006.01)   *C08F 8/04* (2006.01)
*C08F 287/00* (2006.01)   *C08F 297/04* (2006.01)
*C08L 53/02* (2006.01)

(52) Cooperative Patent Classification (CPC):
(C-Sets available)
**C08F 297/04; C08F 8/04; C08F 287/00; C08L 53/025**                    (Cont.)

(54) **MODIFIED CONJUGATED DIENE POLYMER, MODIFIED CONJUGATED DIENE POLYMER COMPOSITION, MULTILAYER ARTICLE, METHOD FOR PRODUCING MULTILAYER ARTICLE, AND MOLDED ARTICLE**

MODIFIZIERTES KONJUGIERTES DIENPOLYMER, MODIFIZIERTE KONJUGIERTE DIENPOLYMERZUSAMMENSETZUNG, MEHRSCHICHTIGER ARTIKEL, VERFAHREN ZUR HERSTELLUNG MEHRSCHICHTIGER ARTIKEL UND GEFORMTER ARTIKEL

POLYMÈRE DE DIÈNE CONJUGUÉ MODIFIÉ, COMPOSITION DE POLYMÈRE DE DIÈNE CONJUGUÉ MODIFIÉ, ARTICLE MULTICOUCHE, PROCÉDÉ DE PRODUCTION D'ARTICLE MULTICOUCHE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2020 JP 2020085762**
**11.05.2021 JP 2021080451**

(43) Date of publication of application:
**17.11.2021 Bulletin 2021/46**

(73) Proprietor: **Asahi Kasei Kabushiki Kaisha**
**Tokyo 1000006 (JP)**

(72) Inventors:
• **SUKEGAWA, Takashi**
**Tokyo, 1000006 (JP)**
• **HORIUCHI, Mika**
**Tokyo, 1000006 (JP)**

(74) Representative: **Strehl & Partner mbB**
**Maximilianstrasse 54**
**80538 München (DE)**

(56) References cited:
**EP-A1- 1 338 621       EP-A2- 1 431 342**
**JP-A- 2009 215 360     US-A- 4 869 963**

(52) Cooperative Patent Classification (CPC): (Cont.)

C-Sets
**C08F 8/04, C08F 287/00;**
**C08F 287/00, C08F 222/06;**
**C08L 53/025, C08L 53/02, C08L 23/12**

**Description**

TECHNICAL FIELD

The present invention relates to a modified conjugated diene polymer, a modified conjugated diene polymer composition, a multilayered article, a method for producing a multilayered article and a molded article.

DESCRIPTION OF THE RELATED ART

BACKGROUND ART

Conjugated diene (co)polymers are known to exhibit various properties depending on the proportion of a monomer unit having a side chain such as a 1,2-bond, a microstructure (the proportion of a block moiety and the location of the block moiety in a block copolymer, and the structure of a random copolymer, etc.) upon copolymerization with another monomer, and the degree of hydrogenation, etc. In recent years, a conjugated diene (co)polymer having a modifying group such as an affinity group capable of causing an intermolecular force to another material, or a reactive group capable of forming a chemical bond to another material (hereinafter, referred to as a "modified conjugated diene polymer") has been proposed for the purpose of conferring further performance.

For example, Patent Literature 1 discloses an acid anhydride-modified conjugated diene polymer produced by reacting a conjugated diene block copolymer with an acid anhydride.

The modified conjugated diene polymer reacts with a polar resin and/or causes an intermolecular force such as a hydrogen bond, via its modifying group, and is therefore excellent in adhesiveness to the polar resin. Hence, modified conjugated diene polymer compositions, in which the modified conjugated diene polymer is blended to polyolefin or the like as an adhesiveness-imparting agent for polar resins, are widely used.

For example, polyamide resin is one of the polar resins. Patent Literature 2 discloses a technique related to the adhesion of polyamide resin using a modified conjugated diene polymer resin composition including a modified block copolymer.

A molded product prepared by the adhesion of such a modified conjugated diene polymer resin composition to a polar resin is useful for various purposes such as automobile parts, power tools, toys, electrical and electronic equipment parts, medical appliances, building and piping member, housewares, cosmetic products, industrial parts, various hoses, various housings, various module cases, various power control unit parts and medical appliances. Furthermore, flexible texture can be imparted to a molded product by forming the surface layer of the molded article using a flexible modified conjugated diene polymer resin composition.

LIST OF PRIOR ART DOCUMENTS

PATENT DOCUMENT

[Patent Literature 1]
Japanese Patent Laid-Open No. 1988-254119
[Patent Literature 2]
Japanese Translation of PCT International Application Publication No. 2007-527461

EP 1 338 621 A1 discloses a thermoplastic polymer composition obtained through vulcanization of an ethylene-vinyl alcohol copolymer, a modified block copolymer comprising and aromatic vinyl polymer block and a conjugated diene polymer block having a carboxyl group and an amine crosslinking agent.

JP 2009 215360 A discloses a modified block copolymer comprising one or more polymer blocks A mainly composed of vinyl aromatic monomer units having at least 1 mass % or more of alkylstyrene-derived structural units (a) in which at least one alkyl group having 1 to 8 carbon atoms is bonded to a benzene ring, and at least one polymer block selected from B: a polymer block mainly composed of conjugated diene units; C: a polymer block mainly composed of conjugated diene units, in which some or all of the double bonds are hydrogenated; D: a polymer block mainly composed of alkylene units; E: a hydrogenated copolymer block mainly composed of conjugated diene units and vinyl aromatic monomer units.

EP 1 431 342 A2 discloses a thermoplastic polymer composition comprising an ethylene-vinyl alcohol copolymer, a polymer mixture of a modified block copolymer mainly comprising a vinyl aromatic polymer block and a conjugated diene polymer block which may be hydrogenated and a rubber softener.

US 4 869 963 A discloses a multilayer composite comprising a layer of an ethylene vinylalcohol polymer tied to a thermoplastic polymer with a hydrogenated alkadiene vinyl aromatic block copolymer which is graft modified with an unsatureated acid anhydride or unsaturated dicarboxylic acid thereof.

SUMMARY OF INVENTION

PROBLEMS TO BE SOLVED BY INVENTION

There is a demand for the development of a modified conjugated diene polymer composition that is thermally fused with various polar resins and exhibits excellent adhesiveness, regardless of the type of a polar resin, the type of a polymer structure and the presence or absence of a filler. Also, there is a demand for the development of a modified conjugated diene polymer composition that is thermally fused with a polar resin and exhibits excellent adhesiveness, regardless of whether a molding method is any of injection molding (insert molding), two-color molding, coextrusion and multilayer blow molding, etc.

Such a modified conjugated diene polymer composition is also required not only to have excellent adhesiveness but to have high fluidity during melting so as to be able to respond to a complicated or thinned molded product, and to have high flexibility in order to obtain favorable texture of a molded product that comes in contact with human bodies. However, the conventional modified conjugated diene polymer compositions including the one disclosed in Patent Literature 2 still fail to produce sufficient fluidity or flexibility.

Accordingly, in light of the problems described above, an objective of the present invention is to provide a modified conjugated diene polymer and a modified conjugated diene polymer composition that have adhesiveness by thermal fusion to a polar resin, are excellent in fluidity during melting, and have excellent flexibility, and a multilayered article including the same, a method for producing a multilayered article, and a molded article.

MEANS FOR SOLVING PROBLEMS

The present inventors have conducted diligent studies to attain the objective and consequently completed the present invention by finding that a modified conjugated diene polymer having a modifying group and having a specific polymer structure can attain the objective.

Specifically, the present invention is set out in the appended claims.

ADVANTAGES OF INVENTION

The present invention can provide a modified conjugated diene polymer and a modified conjugated diene polymer composition that have adhesiveness by thermal fusion to a polar resin, are excellent in fluidity during melting, and have excellent flexibility, and a multilayered article including the same, a method for producing a multilayered article, and a molded article.

BRIEF DESCRIPTION OF THE DRAWINGS

Figure 1 is a schematic view showing one aspect of the molded article of the present invention;
Figure 2 is a schematic view showing another aspect of the molded article of the present invention;
Figure 3 is a schematic view showing a further alternative aspect of the molded article of the present invention; and
Figure 4 is a schematic view showing a still further alternative aspect of the molded article of the present invention.

DETAILED DESCRIPTION OF THE PREFERRED EMBODIMENTS

Hereinafter, the mode for carrying out the present invention (hereinafter, referred to as the "present embodiment") will be described in detail.

The present embodiment described below is given for illustrating the present invention and is not intended to limit the present invention by the contents described below.

The "polymer" described herein includes both of a polymer composed of a single type of monomer unit, and a copolymer having plural types of monomer units.

The "conjugated diene polymer" described herein includes an unmodified conjugated diene polymer and a modified conjugated diene polymer, unless otherwise specified or unless clearly distinguished, for example, by parallel description such as "conjugated diene polymer or modified conjugated diene polymer". In the paratactic description such as "conjugated diene polymer or modified conjugated diene polymer", the "conjugated diene polymer" means an unmodified conjugated diene polymer.

(Modified conjugated diene polymer (A))

The modified conjugated diene polymer (A) of the present embodiment has a polymer block mainly including conjugated diene monomer units and satisfies the following conditions (a), (b), (c) and (d):

(a) a vinyl bond content before hydrogenation in the polymer block mainly including conjugated diene monomer units is 65% by mol or more based on 100% by mol of total of the conjugated diene monomer units;
(b) at least one or more conjugated diene monomer units in the polymer block mainly including conjugated diene monomer units are hydrogenated;
(c) a content of a polymer block mainly including vinyl aromatic monomer units in the modified conjugated diene polymer is 20% by mass or less based on the total amount of the modified conjugated diene polymer; and
(d) the modified conjugated diene polymer has a modifying group.

The conjugated diene monomer constituting the modified conjugated diene polymer is diolefin having a pair of conjugated double bonds.

Examples of such diolefin include, but are not limited to, 1,3-butadiene, 2-methyl-1,3-butadiene (isoprene), 2,3-dimethyl-1,3-butadiene, 1,3-pentadiene, 1,3-cyclopentadiene, 2-methyl-1,3-pentadiene, 1,3-hexadiene, 1,3-cyclohexadiene and farnesene. Among them, 1,3-butadiene and isoprene are preferred from the viewpoint of availability and productivity, and 1,3-butadiene is more preferred from the viewpoint of heat stability.

The modified conjugated diene polymer (A) may include only one type of or two or more types of conjugated diene monomer unit(s).

The polymer block mainly including conjugated diene monomer units means a polymer block having a content of the conjugated diene monomer units of more than 70% by mass based on the whole polymer block. The content of the conjugated diene monomer units contained in the polymer block mainly including conjugated diene monomer units mentioned above is preferably 80% by mass or more, more preferably 90% by mass or more, further preferably 95% by mass or more, from the viewpoint of further improving the adhesiveness of the modified conjugated diene polymer composition to a polar resin. The content of the conjugated diene monomer units in the polymer block mainly including conjugated diene monomer units may be 100% by mass or less or may be 99% by mass or less.

The modifying group of the modified conjugated diene polymer is not particularly limited as long as the modifying group is an affinity group or a reactive group for a polar resin. Examples thereof include an acid anhydride group, a hydroxyl group, a carbonyl group, a thiocarbonyl group, an acid halide group, a carboxyl group, a thiocarboxyl group, an aldehyde group, a thioaldehyde group, a carboxylic acid ester group, amide group, a sulfonic acid ester group, a phosphoric acid ester group, an amino group, an imino group, a cyano group, a urethane group, a urea group, a pyridyl group, a quinoline group, an epoxy group, a thioepoxy group, a sulfide group, an isocyanate group, an isothiocyanate group, a silicon halide group, a silanol group, an alkoxysilane group, a tin halide group, an alkoxy tin group, a phenyl tin group and an ionic group. The modified conjugated diene polymer has one of these modifying groups as described above singly, or two or more thereof in combination. Examples of the ionic group include a sulfonic acid group, a sulfonimide group, a sulfuric acid group, a phosphonic acid group, a phosphoric acid group, a carboxylic acid group and an ammonium group, and their salts.

Among them, the modifying group of the modified conjugated diene polymer is preferably an acid anhydride group, a carbonyl group, a carboxyl group, an amino group, an epoxy group, an alkoxysilane group, a hydroxyl group, an isocyanate group and an ionic group from the viewpoint of further improving reactivity with a polar resin.

Among them, the modifying group is more preferably an acid anhydride group, a carboxyl group, an amino group, an epoxy group and a hydroxyl group from the viewpoint of further improving reactivity with polyamide resin (hereinafter, also simply referred to as "polyamide"), polyphenylene sulfide resin (hereinafter, also simply referred to as "polyphenylene sulfide") and polyester resin (hereinafter, also simply referred to as "polyester"), which are used as materials for main structures of various molded products. The modifying group is further preferably an acid anhydride group or a carboxyl group from the viewpoint of high productivity and easy obtainment, and among them, an acid anhydride group (particularly, a maleic anhydride group and a succinic anhydride group are preferred, and a succinic anhydride group is more preferred) is particularly preferred.

The maleic anhydride group and the succinic anhydride group mean groups obtained by removing one hydrogen atom from the C-H bonds of maleic anhydride and succinic anhydride, respectively.

The polyamide resin is widely used as a portion of molded articles having a grip portion, such as power tools, or molded articles required to have strength or heat resistance, whereas having poor adhesiveness to a conventional modified conjugated diene polymer. Among the modifying groups described above, the acid anhydride group is excellent in reactivity with an amino group, a carboxyl group and an amide group of the polyamide resin. Thus, the modified conjugated diene polymer for use in adhesion to the polyamide resin preferably contains an acid anhydride group. Among them, the modified conjugated diene polymer for use in adhesion to the polyamide resin preferably contains a maleic anhydride group or a succinic anhydride group from the viewpoint of high productivity and easy obtainment. The maleic anhydride group and the succinic anhydride group can form a chemical bond at the interface between the polyamide resin and the modified conjugated diene polymer in a modified conjugated diene polymer composition, thereby causing strong adhesion therebetween.

The modifying group of the modified conjugated diene polymer for use in adhesion to the polyphenylene sulfide resin is particularly preferably an acid anhydride group, a carbonyl group, a carboxyl group, an amino group, an epoxy group, an alkoxysilane group, a hydroxyl group, an isocyanate group and an ionic group. The above-mentioned modifying groups have higher reactivity with terminal carboxylic acid of the polymer chain of the polyphenylene sulfide.

The polyester resin has an ester structure in the backbone and has a terminal hydroxy group or carboxyl group. Hence, the modifying group of the modified conjugated diene polymer for use in adhesion to the polyester resin is preferably an acid anhydride group, a carbonyl group, a carboxyl group, an amino group, an epoxy group, an alkoxysilane group, a hydroxyl group, an isocyanate group and an ionic group.

Polycarbonate resin (hereinafter, also referred to as "polycarbonate") has carboxylic acid ester in the backbone and has a terminal hydroxyl group. Hence, the modifying group of the modified conjugated diene polymer in a modified conjugated diene polymer composition for use in adhesion to the polycarbonate resin is preferably an acid anhydride group, a carbonyl group, a carboxyl group, an amino group, an epoxy group, an alkoxysilane group, a hydroxyl group, an isocyanate group and an ionic group.

Acrylonitrile-butadiene-styrene copolymer (ABS) resin (hereinafter, also simply referred to as "ABS") has a nitrile group. Hence, the modifying group of the modified conjugated diene polymer in a modified conjugated diene polymer composition for use in adhesion to the ABS resin is preferably an acid anhydride group, a carboxyl group, an amino group and a hydroxyl group.

(Meth)acrylic resin is a generic name for polyacrylic acid, polyacrylic acid ester, polymethacrylic acid and polymethacrylic acid ester, and has a carboxyl group and/or an ester group. Hence, the modifying group of the modified conjugated diene polymer in a modified conjugated diene polymer composition for use in adhesion to the (meth)acrylic resin is preferably an acid anhydride group, a carbonyl group, a carboxyl group, an amino group, an epoxy group, an alkoxysilane group, a hydroxyl group, an isocyanate group and an ionic group.

Polyacetal resin (hereinafter, also simply referred to as "polyacetal") has an ether structure. Hence, the modifying group of the modified conjugated diene polymer in a modified conjugated diene polymer composition for use in adhesion to the polyacetal resin is preferably an acid anhydride group, a carbonyl group, a carboxyl group, an amino group, an epoxy group, an alkoxysilane group, a hydroxyl group, an isocyanate group and an ionic group.

The polyamide resin, the ABS resin, the polyester resin and the polycarbonate resin are typically used in industrial tools, housings of electronic equipment and shavers. The polyamide resin, the polyester resin and the polyphenylene sulfide resin are typically used in connector housings. The polyamide resin and the polyester resin are typically used in electrical wire members. The polyacetal resin are typically used in toothbrushes and cutleries. The polycarbonate resin, the ABS resin and the polyester resin are typically used in writing implements. The polyamide resin, the ABS resin, the polyester resin and the polycarbonate resin are typically used in robot hands. The polyamide resin, the ABS resin, the polyester resin, the polycarbonate resin and the (meth)acrylic resin are typically used in automobile interior members. The polyamide resin, the polyphenylene sulfide resin and the polyester resin are typically used in automobile members or power modules required to have heat resistance. The polyamide resin, the polyphenylene sulfide resin and the polyester resin are typically used in automobile members required to have flexibility and chemical resistance.

The writing implement includes not only writing implements, such as pens, which write directly on a subject by transferring coloring matter (e.g., ink and graphite) to the subject, but writing implements, such as touch pens and stylus pens, which are used for displaying corresponding characters or graphics on the screen of an electronic device (e.g., a tablet terminal) by tracing a portion of the electronic device.

When the modified conjugated diene polymer has a functional group that does not correspond to the affinity group capable of causing an intermolecular force to a polar resin or the reactive group capable of forming a chemical bond thereto, an additional compound capable of interacting with both the functional group and the polar resin can be reacted with the functional group of the modified conjugated diene polymer so that the adhesiveness of the modified conjugated diene polymer to the polar resin is further improved. Specifically, the functional group of the modified conjugated diene polymer interacts with the additional compound through an intermolecular force or a chemical bond, and the additional compound thus interacted with the functional group can further interact with the polar resin through an intermolecular force or a chemical bond. As a result, the modified conjugated diene polymer can interact indirectly with the polar resin.

Examples of such an additional compound include, but are not limited to, amide condensing agents such as carbodiimide compounds and diphenylphosphorylazide, alkoxysilane compounds, amino compounds, hydroxy compounds, isocyanate compounds and epoxy compounds. One of these additional compounds is used singly, or two or more thereof are used in combination.

Examples of the carbodiimide compound include N,N'-dicyclohexylcarbodiimide, N,N'-diisopropylcarbodiimide and 1-(3-dimethylaminopropyl)-3-ethylcarbodiimide.

Examples of the alkoxysilane compound include tetramethoxysilane, tetraethoxysilane, tetrapropoxysilane, tetraisopropoxysilane, tetrabutoxysilane, 3-aminopropyltrimethoxysilane, 3-aminopropyltriethoxysilane, 3-glycidyloxypropyltrimethoxysilane, 3-glycidyloxypropyltriethoxysilane, 2-(3,4-epoxycyclohexyl)ethyltrimethoxysilane and 2-(3,4-epoxycyclohexyl)ethyltriethoxysilane.

Examples of the amine compound include diaminobutane, diaminopentane, diaminohexane, diaminoheptane and diaminooctane.

Examples of the hydroxy compound include dihydroxybutane, dihydroxypentane, dihydroxyhexane, dihydroxyheptane and dihydroxyoctane.

Examples of the isocyanate compound include hexamethylene diisocyanate, 1,4-phenylene diisocyanate and dicyclohexylmethane 4,4'-diisocyanate.

Examples of the epoxy compound include ethylene glycol diglycidyl ether and 1,4-butanediol diglycidyl ether.

These compounds can also be used in a modified conjugated diene polymer having an affinity group capable of causing an intermolecular force to a polar resin or a reactive group capable of forming a chemical bond thereto.

The content of the modifying group of the modified conjugated diene polymer mentioned above is not particularly limited and is preferably 0.5 groups/chain or more from the viewpoint of further improving adhesiveness to a polar resin. From the same viewpoint, the content is more preferably 2.0 groups/chain or more, further preferably 4.0 groups/chain or more.

When the content of the modifying group is 0.5 groups/chain or more, the modifying group can interact sufficiently with a polar resin and further improves thermal fusion properties.

The content of the modifying group is preferably 30 groups/chain or less from the viewpoint of further preventing problems such as the gelation of a modified conjugated diene polymer composition. In this context, the "chain" refers to one molecular chain in a polymer such as a modified conjugated diene polymer. For a polymer structure branched through a chemical bond, one branch chain is counted as one molecular chain.

In the case of obtaining the modified conjugated diene polymer through the reaction of a conjugated diene polymer with a modifying agent, the content of the modifying group may be controlled by adjusting the mass of the modifying agent to be reacted with the polymer. When the modifying agent is, for example, an acid anhydride (e.g., maleic anhydride), the mass of the acid anhydride reacted with (or added to) the conjugated diene polymer may be 0.1 parts by mass or more and 20 parts by mass or less based on 100 parts by mass of the modified conjugated diene polymer and is preferably 0.2 parts by mass or more and 10 parts by mass or less, more preferably 0.3 parts by mass or more and 5.0 parts by mass or less, further preferably 0.3 parts by mass or more and 2.0 parts by mass or less, still more preferably 0.3 parts by mass or more and 1.3 parts by mass or less, particularly preferably 0.7 parts by mass or more and 1.3 parts by mass or less.

The position at which the modifying group is introduced in the conjugated diene polymer is not particularly limited. For example, the modifying group may be bonded to an end of the conjugated diene polymer, may be bonded to a moiety other than a terminal moiety in the backbone of the conjugated diene polymer, or may be bonded, particularly, in a block, random, or tapered pattern, to a side chain of the conjugated diene polymer. The modifying group is preferably located in a side chain of the conjugated diene polymer and more preferably located at random in the side chain, from the viewpoint of forming a physically cross-linked block of the modified conjugated diene polymer upon adhesion of the modified conjugated diene polymer or its composition to a layer including a polar resin and thereby improving adhesion strength by an anchor effect. The modifying group is further preferably located in a portion (particularly, a side chain) of the polymer block mainly including conjugated diene monomer units, from the viewpoint of improving adhesion strength without inhibiting the physical cross-linking of a polymer block mainly including vinyl aromatic monomer units in the modified conjugated diene polymer. The modifying group is also preferably positioned in the side chain from the viewpoint of increasing the number of modifying groups for the purpose of improving adhesiveness.

Examples of the method for examining the bonding position of the modifying group include a method of analyzing the position at which the modifying group is present by observing the spatial distance between the modifying group and the polymer block using a two-dimensional nuclear magnetic resonance (NMR) apparatus. Specifically, the position can be determined by measuring two-dimensional NMR and observing the interaction of the modifying group with either of the polymer block mainly including conjugated diene monomer units or a polymer block mainly including vinyl aromatic monomer units. When the modifying group is positioned in a side chain of the conjugated diene polymer block, an exemplary method involves degrading residual double bonds of the polymer block mainly including conjugated diene monomer units by an appropriate method and detecting the modifying group by a matrix-assisted laser desorption/ionization method or the like. In any of the methods, a sample having terminal modification and a sample having side chain modification can be produced and analyzed as references, and compared with the modified conjugated diene polymer to be analyzed to accurately examine the site at which the modifying group is located.

The vinyl bond content before hydrogenation in the polymer block mainly including conjugated diene monomer units is 65% by mol or more based on 100% by mol of total of the conjugated diene monomer units from the viewpoint of further improving the adhesiveness of the modified conjugated diene polymer in a modified conjugated diene polymer composition to a polar resin. From the same viewpoint and from the viewpoint of improving the fluidity of a modified conjugated diene polymer composition, the vinyl bond content is preferably 70% by mol or more. Particularly, when the modified conjugated diene polymer composition includes a polyolefin and this polyolefin has an alkyl group in a side chain, as in polypropylene, a copolymer of ethylene and α-olefin having 3 to 8 carbon atoms and a random copolymer of propylene and α-olefin having 4 to 20 carbon atoms, etc., the vinyl bond content before hydrogenation that is 65% by mol or more presumably improves the compatibility of the modified conjugated diene polymer with the polyolefin and further improves the adhesiveness and fluidity of the modified conjugated diene polymer composition. The upper limit of the vinyl bond content before hydrogenation in the polymer block mainly including conjugated diene monomer units is not particularly limited and may be 100% by mol or less, may be 90% by mol or less, may be 85% by mol or less, or may be 80% by mol or less, based on 100% by mol of total of the conjugated diene monomer units.

The "vinyl bond content before hydrogenation" refers to the ratio (molar ratio), in the modified conjugated diene polymer before hydrogenation, of the amount of a conjugated diene monomer moiety incorporated in the polymer through a 1,2-bond (hereinafter, referred to as a "1,2-bond moiety") to the total amount of a conjugated diene monomer moiety incorporated in the polymer through a 1,4-bond (including cis and trans) (hereinafter, referred to as a "1,4-bond moiety") and the 1,2-bond moiety. In other words, this term means the ratio of a 1,2-added monomer to all conjugated diene monomers. However, when a conjugated diene monomer unit is incorporated in the polymer through a 3,4-bond, this term refers to the ratio (molar ratio) of the total amount of the 1,2-bond moiety and a conjugated diene monomer moiety incorporated in the polymer through a 3,4-bond (hereinafter, referred to as a "1,3-bond moiety") to the total amount of the 1,4-bond moiety, the 1,2-bond moiety and the 3,4-bond moiety.

The vinyl bond content before hydrogenation of the modified conjugated diene polymer can be measured by a method such as a method using a nuclear magnetic resonance (NMR) apparatus or a method using an infrared spectrophotometer (Hampton technique) and, specifically, can be measured by a method described in Examples mentioned later.

The vinyl bond content before hydrogenation may be estimated by a proton nuclear magnetic resonance (¹H-NMR) method using the modified conjugated diene polymer after hydrogenation as a sample. The method will be specifically described by taking, as an example, a conjugated diene polymer having styrene as a vinyl aromatic monomer unit and 1,3-butadiene as a conjugated diene monomer unit.

The measurement is performed under the following conditions using ECS400 (name of the product manufactured by JEOL Ltd.) as measurement equipment, deuterated chloroform as a solvent and a sample concentration of 50 mg/mL.

(Measurement conditions)

Observation frequency: 400 MHz
Chemical shift reference: chloroform (7.26 ppm)
Pulse delay: 3 sec
The number of scans: 256
Pulse width: 45°
Measurement temperature: 26°C

The vinyl bond content before hydrogenation can be determined using the area values of signals in the chemical shift range of 10.0 ppm to 0.0 ppm in the resulting NMR spectra. More specifically, the vinyl bond content before hydrogenation can be determined according to the following formulas (1) to (6):

$$\text{Area value per a proton of styrene monomer unit} = (X_2 - X_1)/5 \tag{1}$$

$$\text{Area value per a proton of unhydrogenated 1,2-bond butadiene monomer unit} = X_3/2 \tag{2}$$

$$\text{Area value per a proton of unhydrogenated 1,4-bond butadiene monomer unit} = (X_4 - (X_3/2))/2 \tag{3}$$

$$\text{Area value per a proton of hydrogenated 1,2-bond butadiene monomer unit} = X_5/3 \tag{4}$$

Area value per a proton of hydrogenated 1,4-bond butadiene monomer unit = $(X_6 - (1) \times 3 - (2) \times 3 - (3) \times 4 - (4) \times 8 - X_7)/8$ ... (5)

Vinyl bond content before hydrogenation = $((2) + (4))/((2) + (3) + (4) + (5)) \times 100$ ... (6)

In the formulas (1) to (5), the symbols $X_1$, $X_2$, $X_3$, $X_4$, $X_5$, $X_6$ and $X_7$ are defined as follows.

$X_1$: area value of a region surrounded by a line connecting positions with the smallest signal intensity in a zone from 7.26 ppm to 7.25 ppm and a zone from 7.27 ppm to 7.26 ppm, respectively, with 7.26 ppm as the center, and by the NMR spectra

$X_2$: area value of a region surrounded by a line connecting signal positions of 8.0 ppm and 6.0 ppm and by the NMR spectra

$X_3$: area value of a region of the part, of a region surrounded by a line connecting signal positions of 6.0 ppm and 4.0 ppm and by the NMR spectra, ranging from a chemical shift at a position with the smallest signal intensity from 5.2 ppm to 4.9 ppm, to 4.0 ppm

$X_4$: area value of a region of the part, of a region surrounded by a line connecting signal positions of 6.0 ppm and 4.0 ppm and by the NMR spectra, ranging from a chemical shift at a position with the smallest signal intensity from 5.2 ppm to 4.9 ppm, to 6.0 ppm

$X_5$: area value of a region of the part, of a region surrounded by a line connecting signal positions of 4.0 ppm and 0.3 ppm and by the NMR spectra, ranging from a chemical shift at a position with the smallest signal intensity among valley(s) in the NMR spectra from 1.05 ppm to 0.85 ppm, to 0.3 ppm (if no valley is present from 1.05 ppm to 0.85 ppm, $X_5$ represents an area value of a region of the part, of a region surrounded by the line connecting signal positions of 4.0 ppm and 0.3 ppm and by the NMR spectra, ranging from a chemical shift at a position with the smallest signal intensity from 1.05 ppm to 0.85 ppm, to 0.3 ppm.).

$X_6$: area value of a region surrounded by a line connecting signal positions of 4.0 ppm and 0.3 ppm and by the NMR spectra

$X_7$: area value of a region surrounded by a line connecting positions with the smallest signal intensity in a zone from 1.49 ppm to 1.50 ppm and a zone from 1.50 ppm to 1.51 ppm, respectively, with 1.50 ppm as the center, and by the NMR spectra (if the line connecting positions with the smallest signal intensity is positioned above the NMR spectra, $X_7$ is 0).

(1) to (5) in the formulas (5) and (6) are values obtained from the formulas (1) to (5), respectively.

The vinyl bond content can be controlled to fall within the above numerical range by adding a Lewis base, for example, a compound such as ether or amine, as a vinyl bond content adjusting agent (hereinafter, referred to as a "vinylating agent") in the production of the modified conjugated diene polymer.

In the modified conjugated diene polymer of the present embodiment, at least one or more conjugated diene monomer units in the polymer block mainly including conjugated diene monomer units are hydrogenated. The hydrogenation rate is preferably 50% by mol or more based on 100% by mol of total of the conjugated diene monomer units, from the viewpoint of further improving the adhesiveness of a modified conjugated diene polymer composition to a polar resin. The hydrogenation rate is more preferably 80% by mol or more, further preferably 85% by mol or more, from the viewpoint of further improving the compatibility of the modified conjugated diene polymer with polyolefin resin. The hydrogenation rate is still more preferably 90% by mol or more, particularly preferably 95% by mol or more, from the viewpoint of improving heat stability. The upper limit of the hydrogenation rate of the modified conjugated diene polymer is not particularly limited. The hydrogenation rate may be 100% by mol or less or may be 99% by mol or less, based on 100% by mol of total of the conjugated diene monomer units.

The hydrogenation rate of the modified conjugated diene polymer can be measured using a nuclear magnetic resonance (NMR) apparatus or the like and, specifically, can be measured by a method described in Examples.

The hydrogenation rate can be controlled to fall within the above numerical range, for example, by adjusting the amount of hydrogen supplied for hydrogenation.

In the modified conjugated diene polymer of the present embodiment, a butylene content and/or a propylene content in the polymer block mainly including conjugated diene monomer units is preferably 50% by mol or more and 100% by mol or less, more preferably 60% by mol or more and 99% by mol or less, further preferably 65% by mol or more and 98% by mol or less, based on 100% by mol of total of the conjugated diene monomer units. In the polymer block mainly including conjugated diene monomer units, the butylene content and/or the propylene content may be 90% by mol or less or may be 80% by mol or less, based on 100% by mol of total of the conjugated diene monomer units.

The butylene content and/or the propylene content can be measured using a nuclear magnetic resonance (NMR) apparatus or the like and, specifically, can be measured by a method described in Examples mentioned later.

In this context, the "butylene content and/or propylene content" means the ratio (molar ratio), in the modified conjugated diene polymer after hydrogenation, of an unsaturated bond-free (i.e., hydrogenated) conjugated diene monomer moiety incorporated in the polymer through a 1,2-bond to moieties derived from the conjugated diene monomer units. Specifically, this term means the ratio (molar ratio) of the amount of the unsaturated bond-free 1,2-bond moiety to the total amount (100% by mol) of the 1,4-bond moiety (including cis and trans) and the 1,2-bond moiety. However, when a conjugated diene monomer unit is incorporated in the polymer through a 3,4-bond, this term refers to the ratio (molar ratio) of the total amount of the unsaturated bond-free 1,2-bond moiety and 3,4-bond moiety to the total amount (100% by mol) of the 1,4-bond moiety, the 1,2-bond moiety and the 3,4-bond moiety.

The butylene content and/or the propylene content can be controlled by the vinyl bond content before hydrogenation and the hydrogenation rate. For example, when the vinyl bond content is 60% by mol and the hydrogenation rate is 100%, the butylene content and/or the propylene content is 60% by mol. When the vinyl bond content is 75% by mol, the butylene content and/or the propylene content is 60% by mol at a hydrogenation rate of 80% and is 75% by mol at a hydrogenation rate of 100%.

The term "butylene content" used alone, not the "butylene content and/or propylene content", means the ratio (molar ratio) of an unsaturated bond-free (i.e., hydrogenated) moiety incorporated in the polymer through a 1,2-bond to moieties derived from 1,3-butadiene.

In the modified conjugated diene polymer of the present embodiment, the content of the polymer block mainly including vinyl aromatic monomer units is 20% by mass or less based on the total amount of the modified conjugated diene polymer from the viewpoint of further improving the adhesiveness of a modified conjugated diene polymer composition to a polar resin. From the same viewpoint and from the viewpoint of further improving flexibility, the content is more preferably 3% by mass or more and 20% by mass or less, further preferably 5% by mass or more and 20% by mass or less. The content of the polymer block mainly including vinyl aromatic monomer units is still more preferably 10% by mass or more and 20% by mass or less from the viewpoint of further improving the fluidity and non-deformability (mechanical characteristics) of a modified conjugated diene polymer composition.

The content of the polymer block mainly including vinyl aromatic monomer units in the modified conjugated diene polymer can be calculated using the mass of the polymer block mainly including vinyl aromatic monomer units in the conjugated diene polymer before hydrogenation which is determined by a method of oxidatively degrading the conjugated diene polymer before hydrogenation with t-butyl hydroperoxide in the presence of an osmium tetroxide catalyst (method described in I.M. KOLTHOFF, et al., Polym. Sci., 1,429 (1946)) (hereinafter, referred to as an "osmium tetroxide degradation method"). The osmium tetroxide degradation method can detect a polymer block mainly including vinyl aromatic monomer units with an average degree of polymerization of approximately 30 or more.

The content of the polymer block mainly including vinyl aromatic monomer units in the modified conjugated diene polymer can also be measured in a nuclear magnetic resonance (NMR) apparatus by a method described in Y. Tanaka, et al., RUBBER CHEMISTRY and TECHNOLOGY, 54, 685 (1981) using the conjugated diene polymer after hydrogenation. Hereinafter, this method is referred to as an NMR method.

The NMR method will be specifically described by taking, as an example, a conjugated diene polymer having styrene as a vinyl aromatic monomer unit and 1,3-butadiene as a conjugated diene monomer unit.

Proton nuclear magnetic resonance ($^1$H-NMR) is measured using a sample of 30 mg of the conjugated diene polymer after hydrogenation dissolved in 1 g of deuterated chloroform. In the obtained measurement results, the ratio of an integral value in the chemical shift range of 6.9 ppm to 6.3 ppm to a total integral value can be calculated to determine the content (hereinafter, referred to as an "Ns value") of the polymer block mainly including vinyl aromatic monomer units (in this case, the polystyrene block). More specifically, the content can be determined according to the following formulas (7) to (10):

$$\text{Block styrene intensity (b-St intensity)} = (\text{Integral value from 6.9 ppm to 6.3 ppm})/2 \tag{7}$$

$$\text{Random styrene intensity (r-St intensity)} = (\text{Integral value from 7.5 ppm to 6.9 ppm}) - 3 \times (\text{b-St}) \tag{8}$$

$$\text{Ethylene/butylene intensity (EB intensity)} = \text{Total integral value} - 3 \times \{(\text{b-St intensity}) + (\text{r-St intensity})\}/8 \tag{9}$$

$$\text{Polystyrene block content measured by NMR method (Ns value)} = 104 \times (\text{b-St intensity})/[104 \times \{(\text{b-St intensity}) + (\text{r-St intensity})\} + 56 \times (\text{EB intensity})] \tag{10}$$

In this context, it is known that the following formula (11) holds between the content of the polymer block mainly including vinyl aromatic monomer units in the conjugated diene polymer before hydrogenation measured by the osmium tetroxide degradation method (Os value) and the content of the polymer block mainly including vinyl aromatic monomer units in the conjugated diene polymer after hydrogenation measured by the NMR method (Ns value).

$$Os\ value = -0.012 \times (Ns\ value)^2 + 1.8 \times (Ns\ value) - 13.0$$

$$(11)$$

In addition, the content of the polymer block mainly including vinyl aromatic monomer units in the modified conjugated diene polymer can be measured by a method described in Examples.

The polymer block mainly including vinyl aromatic monomer units means a polymer block having a content of the vinyl aromatic monomer units of more than 70% by mass based on the whole polymer block. The content of the vinyl aromatic monomer units in the polymer block mainly including vinyl aromatic monomer units is preferably 80% by mass or more, more preferably 90% by mass or more, further preferably 95% by mass or more, from the viewpoint of further improving the adhesiveness of a modified conjugated diene polymer composition to a polar resin. The content of the vinyl aromatic monomer units in the polymer block mainly including vinyl aromatic monomer units may be 100% by mass or less or may be 99% by mass or less.

In the modified conjugated diene polymer of the present embodiment, the content of the vinyl aromatic monomer units is preferably 40% by mass or less based on the total amount of the modified conjugated diene polymer from the viewpoint of further improving the adhesiveness of a modified conjugated diene polymer composition to a polar resin. From the same viewpoint and from the viewpoint of further improving flexibility, the content is more preferably 3% by mass or more and 30% by mass or less, further preferably 5% by mass or more and 25% by mass or less. The content of the vinyl aromatic monomer units is still more preferably 10% by mass or more and 20% by mass or less from the viewpoint of further improving the fluidity and non-deformability (mechanical characteristics) of a modified conjugated diene polymer composition.

The content of the vinyl aromatic monomer units in the modified conjugated diene polymer can be measured by a method using an ultraviolet spectrophotometer or a proton nuclear magnetic resonance ($^1$H-NMR) method. Specifically, the content can be measured by a method described in Examples.

Examples of the vinyl aromatic monomer include, but are not limited to, vinyl aromatic compounds such as styrene, α-methylstyrene, p-methylstyrene, divinylbenzene, 1,1-diphenylethylene, N,N-dimethyl-p-aminoethylstyrene and N,N-diethyl-p-aminoethylstyrene.

Among them, styrene, α-methylstyrene and 4-methylstyrene are preferred, and styrene is more preferred, from the viewpoint of availability and productivity.

The polymer block mainly including the vinyl aromatic compound may include one vinyl aromatic monomer or may include two or more vinyl aromatic monomers. Likewise, the modified conjugated diene polymer of the present embodiment may include one of the vinyl aromatic monomers described above singly, or two or more thereof in combination.

The modified conjugated diene polymer used in the polymer composition of the present embodiment may further have a copolymer block of conjugated diene monomer units and vinyl aromatic monomer units. This copolymer block may be an alternating copolymer block or may be a random copolymer block.

Examples of the vinyl aromatic monomer and the conjugated diene monomer that may be contained in the copolymer block of a conjugated diene compound and a vinyl aromatic compound include the listed monomers that may be contained in the block mainly including vinyl aromatic monomer units and the block mainly including conjugated diene monomer units mentioned above.

The distribution state of the vinyl aromatic monomer units in the random copolymer block is not particularly limited. The vinyl aromatic monomer units may be uniformly distributed or may be distributed in a tapered pattern. Alternatively, there may exist a plurality of moieties in which the vinyl aromatic monomer units are uniformly distributed and/or moieties in which the vinyl aromatic monomer units are distributed in a tapered pattern, or there may exist a plurality of segments differing in the content of the vinyl aromatic monomer units.

In the modified conjugated diene polymer of the present embodiment, an additional monomer copolymerizable with the conjugated diene monomer and the vinyl aromatic monomer may be used in addition to the conjugated diene monomer and the vinyl aromatic monomer.

The structure of the modified conjugated diene polymer of the present embodiment is not particularly limited. Examples thereof include a polymer having, in its part, a structure as represented by any of the formulas given below, and a polymer having a structure as represented by any of the formulas given below.

In the following formulas, the description of the modifying group may be omitted.

b, c, (b)$_m$-X, (c)$_m$-X, (b-c)$_n$, c-(b-c)$_n$, b-(c-b)$_n$, (b-c)$_m$-X, (c-b)$_m$-X, [(b-c)$_n$]$_m$-X, [(c-b)$_n$]$_m$-X, [c-(b-c)$_n$]$_m$-X, [b-(c-b)$_n$]$_m$-X,

$[(b-c)_n-b]_m$-X, $[(c-b)_n-c]_m$-X,

$(a-b)_n$, $b-(a-b)_n$, $a-(b-a)_n$, $(a-b)_m$-X, $(b-a)_m$-X, $[(a-b)_n]_m$-X, $[(b-a)_n]_m$=X, $[b-(a-b)_n]_m$-X, $[a-(b-a)_n]_m$-X, $[(a-b)_n-a]_m$-X, $[(b-a)_n-b]_m$-x,

$(a-c)_n$, $c-(a-c)_n$, $a-(c-a)_n$, $(a-c)_m$-X, $(c-a)_m$-X, $[(a-c)_n]_m$-X, $[(c-a)_n]_m$-X, $[c-(a-c)_n]_m$-X, $[a-(c-a)_n]_m$-X, $[(a-c)_n-a]_m$-X, $[(c-a)_n-c]_m$-X,

$c-(b-a)_n$, $c-(a-b)_n$,

$c-(a-b-a)_n$, $c-(b-a-b)_n$,

$a-c-(b-a)_n$, $a-c-(a-b)_n$,

$a-c-(b-a)_n-b$, $[(a-b-c)_n]_m$-X,

$[a-(b-c)_n]_m$-X, $[(a-b)_n-c]_m$-X,

$[(a-b-a)_n-c]_m$-X,

$[(b-a-b)_n-c]_m$-X, $[(c-b-a)_n]_m$-X,

$[c-(b-a)n]_m$-X, $[c-(a-b-a)_n]_m$-X, $[c-(b-a-b)_n]_m$-X,

$a-(b-c)_n$, $a-(c-b)_n$,

$a-(c-b-c)_n$, $a-(b-c-b)_n$,

$c-a-(b-c)_n$, $c-a-(c-b)_n$,

$c-a-(b-c)_n-b$, $[(c-b-a)_n]_m$-X,

$[c-(b-a)_n]_m$-X, $[(c-b)_n-a]_m$-X,

$[(c-b-c)_n-a]_m$-X,

$[(b-c-b)_n-a]_m$-X, $[(a-b-c)_n]_m$-X,

$[a-(b-c)_n]_m$-X, $[a-(c-b-c)_n]_m$-X, $[a-(b-c-b)_n]_m$-X,

$b-(a-c)_n$, $b-(c-a)_n$,

$b-(c-a-c)_n$, $b-(a-c-a)_n$,

$c-b-(a-c)_n$, $c-b-(c-a)_n$,

$c-b-(a-c)_n-a$, $[(c-a-b)_n]_m$-X,

$[c-(a-b)_n]_m$-X, $[(c-a)_n-b]_m$-X,

$[(c-a-c)_n-b]_m$-X,

$[(b-c-b)_n-b]_m$-X, $[(b-a-c)_n]_m$-X,

$[b-(a-c)_n]_m$-X, $[b-(c-a-c)_n]_m$-X, $[b-(a-c-a)_n]_m$-X,

$(b_1-b_2)_n-a$,

$a-(b_1-b_2)_n-a$,

$(b_1-b_2-b)_n-a$,

$(b_1-b_2-a)_n$,

$(b_1-b_2-a)_n-b$,

$(b_1-b_2-a-b)_n$,

$(b_1-b_2-a)_m$-X, and

$(b_1-b_2-a-b)_m$-X.

In each of the formulas, a represents a vinyl aromatic polymer block mainly including vinyl aromatic monomer units, b represents a conjugated diene polymer block mainly including conjugated diene monomer units, $b_1$ and $b_2$ each represent a conjugated diene polymer block mainly including conjugated diene monomer units (wherein the vinyl bond content in $b_1$ is smaller than that in $b_2$), and c represents a random copolymer block of a conjugated diene monomer and a vinyl aromatic monomer. n is an integer of 1 or larger, preferably an integer of 1 to 5. m is an integer of 2 or larger, preferably an integer of 2 to 11. X is a residue of a coupling agent or a residue of a polyfunctional initiator.

Preferably, the modified conjugated diene polymer of the present embodiment mainly has a structure having the b-, $b_1$- or $b_2$-blocks from the viewpoint of improving flexibility. The structure preferably has the a-block, and a polymer represented by at least one of the structural formulas a-b, a-b-a, a-b-a-b, $b_1-b_2$-a, $a-b_1-b_2$-a, $b_1-b_2$-a-b and $b_1-b_2$-b-a is more preferred, from the viewpoint of improving mechanical strength. The structure preferably has two or more a-blocks in the molecular chain, also the $b_1$-block preferably has crystalline nature, and a polymer represented by at least one of the structural formulas a-b-a, a-b-a-b, $b_1-b_2$-a, $a-b_1-b_2$-a, $b_1-b_2$-a-b and $b_1-b_2$-b-a is more preferred, from the viewpoint of improving low stickiness.

The modified conjugated diene polymer preferably has a structure having at least a total of two or more a-block(s) and/or crystalline $b_1$-block(s) in the molecular chain, from the viewpoint of improving the adhesion strength of the modified conjugated diene polymer or its composition to a layer including a polar resin by the anchor effect of the modified conjugated diene polymer. The presence of two or more physically cross-linked blocks in the molecular chain makes it difficult to withdraw the modified conjugated diene polymer involved in adhesion from a layer of the modified conjugated diene polymer or a layer of its composition and tends to contribute to improvement in adhesion strength.

The weight-average molecular weight (Mw) (hereinafter, also simply referred to as "Mw") of the modified conjugated diene polymer is preferably 80000 or higher and 600000 or lower, more preferably 100000 or higher and 400000 or lower, further preferably 120000 or higher and 300000 or lower, from the viewpoint of further improving the adhesiveness of a modified conjugated diene polymer composition to a polar resin, and the fluidity of the modified conjugated diene polymer composition.

The weight-average molecular weight (Mw) of the modified conjugated diene polymer is a weight-average molecular weight (Mw) determined as a molecular weight at a peak of a chromatogram obtained by gel permeation chromatography (GPC) measurement on the basis of a calibration curve prepared by the measurement of commercially available standard polystyrene. The calibration curve can be prepared using the peak molecular weight of the standard polystyrene.

The molecular weight distribution of the conjugated diene polymer before modification can also be determined by GPC measurement in the same manner as above. The molecular weight distribution can be determined from the ratio between the weight-average molecular weight (Mw) and a number-average molecular weight (Mn) (hereinafter, also simply referred to as "Mn") (Mw/Mn).

The molecular weight distribution (Mw/Mn) of the modified conjugated diene polymer at a single peak measured by GPC is preferably 5.0 or less, more preferably 4.0 or less, further preferably 3.0 or less, still more preferably 2.5 or less. The molecular weight distribution may be 1.0 or more and 2.0 or less, or 1.1 or more and 1.5 or less within the above range.

In the modified conjugated diene polymer composition of the present embodiment, the examples and preferred embodiments mentioned in each of the above sections can be arbitrarily selected and combined based on the respective parameters such as the vinyl bond content, the hydrogenation rate, the content of the polymer block mainly including the conjugated diene monomer units or vinyl aromatic monomer units, the content of the modifying group, the butylene content and/or the propylene content, and the molecular weight, etc., and the specific types of the conjugated diene monomer, the vinyl aromatic monomer and the modifying group, etc..

The numerical range of any of the parameter described herein can be a numerical range obtained by arbitrarily combining the upper limit value and the lower limit value described as an example or preferred range, etc. thereof.

[Modified conjugated diene polymer composition]

The modified conjugated diene polymer composition of the present embodiment includes at least (A) a modified conjugated diene polymer which is the modified conjugated diene polymer of the present embodiment, and (B) a polyolefin. The modified conjugated diene polymer composition thus including the polyolefin (B) exhibits improved fluidity during melting and improved adhesiveness to a polar resin. Since the modified conjugated diene polymer (A) is hydrogenated, the modified conjugated diene polymer (A) is excellent in compatibility with the polyolefin (B). As a result, the modified conjugated diene polymer composition is excellent in mechanical strength, flexibility and adhesiveness to a polar resin. The balance among the mechanical strength, flexibility and adhesiveness to a polar resin in the modified conjugated diene polymer composition can be improved by controlling the compatibility of the modified conjugated diene polymer (A) with the polyolefin (B).

(Polyolefin (B))

The modified conjugated diene polymer composition of the present embodiment contains a polyolefin.

The polyolefin used may be any polymer that belongs to the category of polyolefin. Polypropylene-based resin and polyethylene-based resin are preferred from the viewpoint of improving the mechanical strength of the modified conjugated diene polymer composition.

Examples of the polypropylene-based resin include homopolypropylene, random polypropylene and block polypropylene.

In this context, the term "random" in the random polypropylene means that in the copolymerization of propylene and a monomer other than propylene, the monomer other than propylene is incorporated at random in the propylene chain and is substantially not chained.

The random polypropylene is not particularly limited as long as the content of the propylene units is less than 99% by mass.

Examples of the random polypropylene include random copolymers of propylene and $\alpha$-olefin having 2 to 20 carbon atoms (except for propylene).

Examples of the $\alpha$-olefin in the random copolymer of propylene and $\alpha$-olefin having 2 to 20 carbon atoms include, but are not limited to, ethylene, 1-butene, 1-pentene, 3-methyl-1-butene, 1-hexene, 3-methyl-1-pentene, 4-methyl-1-pentene, 1-heptene, 1-octene, 1-nonene, 1-decene, 1-dodecene, 1-tetradecene, 1-hexadecene, 1-octadecene and 1-eicosene. The $\alpha$-olefin is preferably $\alpha$-olefin having 2 to 8 carbon atoms (except for propylene). Examples thereof include ethylene, 1-butene, 3-methyl-1-butene, 1-hexene and 4-methyl-1-pentene. One of these $\alpha$-olefins can be used singly, or two or more thereof can be used in combination. Also, each of the homopolypropylenes, the random polypropylenes and the block polypropylenes can be used singly, or two or more thereof can be used in combination.

Examples of the polyethylene-based resin include low-density polyethylene, linear low-density polyethylene, high-density polyethylene and copolymers of ethylene and $\alpha$-olefin having 3 to 8 carbon atoms.

Examples of the $\alpha$-olefin in the copolymer of ethylene and $\alpha$-olefin having 3 to 8 carbon atoms include propylene, butene-1, isobutene, pentene-1, hexene-1, 4-methylpentene-1 and octene-1. In this case, the proportion of the $\alpha$-olefin in the copolymer is preferably 30% by mass or less.

The polyolefin (B) is preferably polypropylene-based resin from the viewpoint of further improving the molding processability of the modified conjugated diene polymer composition. The polyolefin (B) more preferably includes one or more members selected from the group consisting of homopolypropylene and random polypropylene, or consists of homopolypropylene and/or random polypropylene, from the viewpoint of further improving compatibility with the modified conjugated diene polymer.

The polyolefin (B) may have a modifying group and may have, for example, a functional group such as an acid anhydride group, a hydroxyl group, a carbonyl group, a thiocarbonyl group, an acid halide group, a carboxyl group, a thiocarboxyl group, an aldehyde group, a thioaldehyde group, a carboxylic acid ester group, amide group, a sulfonic acid ester group, a phosphoric acid ester group, an amino group, an imino group, a cyano group, a urethane group, a urea group, a pyridyl group, a quinoline group, an epoxy group, a thioepoxy group, a sulfide group, an isocyanate group, an isothiocyanate group, a silicon halide group, a silanol group, an alkoxysilane group, a tin halide group, an alkoxy tin group, a phenyl tin group or an ionic group. The polyolefin (B) may have no modifying group.

(Conjugated diene polymer (C))

The modified conjugated diene polymer composition of the present embodiment preferably includes (C) a conjugated diene polymer having a weight-average molecular weight of 150000 or higher, in addition to the modified conjugated diene polymer (A) described above, from the viewpoint of improvement in adhesiveness.

The conjugated diene polymer (C) preferably has two or more polymer blocks selected from the group consisting of the following polymer blocks (i) to (iii):

(i) a vinyl aromatic polymer block having 80% by mass or more of vinyl aromatic monomer units;
(ii) a conjugated diene polymer block having 80% by mass or more of conjugated diene monomer units; and
(iii) a random copolymer block of a conjugated diene monomer and a vinyl aromatic monomer.

The modified conjugated diene polymer composition of the present embodiment preferably includes a conjugated diene polymer having at least the polymer block (iii) as the conjugated diene polymer (C).

The modified conjugated diene polymer composition of the present embodiment may include a conjugated diene polymer having the polymer block (iii), and a conjugated diene polymer having the polymer block (i) and/or a conjugated diene polymer having the polymer block (ii) as the conjugated diene polymer (C).

The modified conjugated diene polymer composition of the present embodiment also preferably includes a conjugated diene polymer having the polymer block (i) and/or the polymer block (ii) as the conjugated diene polymer (C). In this case, the modified conjugated diene polymer composition may include a conjugated diene polymer having the polymer block (i) and the polymer block (ii), or may include a conjugated diene polymer having the polymer block (i) or the polymer block (ii).

The modified conjugated diene polymer composition of the present embodiment preferably includes a conjugated diene polymer (C) having the polymer block (i) and the polymer block (ii) (which may be a further hydrogenated polymer, called SEBS, with some conjugated diene blocks hydrogenated) for further improving breaking elongation, compression set and/or low-temperature toughness, and preferably includes a conjugated diene polymer (C) having the polymer block (i) and the polymer block (iii) for further improving adhesiveness to a polar resin, a peel trace in a peel interface with a polar resin, vibration-damping properties and/or abrasion resistance.

Examples of the vinyl aromatic monomer contained in the vinyl aromatic polymer block (i) having 80% by mass or more of vinyl aromatic monomer units include, but are not limited to, vinyl aromatic compounds such as styrene, $\alpha$-methylstyrene, p-methylstyrene, divinylbenzene, 1,1-diphenylethylene, N,N-dimethyl-p-aminoethylstyrene and N,N-diethyl-p-aminoethylstyrene.

The vinyl aromatic monomer is preferably styrene, $\alpha$-methylstyrene and 4-methylstyrene, more preferably styrene, from the viewpoint of availability and productivity.

The vinyl aromatic polymer block (i) having 80% by mass or more of vinyl aromatic monomer units may include one type of vinyl aromatic monomer unit or may include two or more types of vinyl aromatic monomer units.

The content of the vinyl aromatic monomer units contained in the vinyl aromatic polymer block (i) is 80% by mass or more, preferably 90% by mass or more, more preferably 95% by mass or more, from the viewpoint of improving the strength of a molded article obtained from the modified conjugated diene polymer composition.

Examples of the conjugated diene monomer contained in the conjugated diene polymer block (ii) having 80% by mass or more of conjugated diene monomer units include, but are not limited to, diolefin having a pair of conjugated double bonds. Examples of such diolefin include, but are not limited to, 1,3-butadiene, 2-methyl-1,3-butadiene (isoprene), 2,3-dimethyl-1,3-butadiene, 1,3-pentadiene, 2-methyl-1,3-pentadiene, 1,3-hexadiene and farnesene. Among them, the conjugated diene monomer is preferably 1,3-butadiene and isoprene from the viewpoint of availability and productivity. Among them, the conjugated diene monomer is more preferably 1,3-butadiene from the viewpoint of heat stability.

The conjugated diene polymer block (ii) having 80% by mass or more of conjugated diene monomer units may include one type of conjugated diene monomer unit or may include two or more types of conjugated diene monomer units.

The content of the conjugated diene monomer units contained in the conjugated diene polymer block (ii) is 80% by mass or more, preferably 90% by mass or more, more preferably 95% by mass or more, from the viewpoint of improvement in the impact resistance of the modified conjugated diene polymer composition.

Examples of the vinyl aromatic monomer and the conjugated diene monomer contained in the random copolymer block (iii) of a conjugated diene monomer and a vinyl aromatic monomer include the listed monomers that may be contained in the vinyl aromatic polymer block (i) and the conjugated diene polymer block (ii).

The content of the vinyl aromatic monomer contained in the random copolymer block (iii) of a conjugated diene monomer and a vinyl aromatic monomer is preferably 30% by mass or more and less than 80% by mass based on the total mass of the random copolymer block.

When the content of the vinyl aromatic monomer units is 30% by mass or more, the modified conjugated diene polymer composition tends to be excellent in abrasion resistance and scratch resistance and exhibit improved adhesiveness owing to decreased difference in surface energy from a polar resin. When the content of the vinyl aromatic monomer units is 80% by mass or less, the modified conjugated diene polymer composition tends to be excellent in flexibility and repellence.

The content of the vinyl aromatic monomer units in the random copolymer block is more preferably 40% by mass or more and 75% by mass or less, further preferably 45% by mass or more and 70% by mass or less.

The content of the vinyl aromatic monomer units in the random copolymer block can be calculated from a measurement value obtained by extracting the polymers before and after polymerization for the random copolymer block, and performing the quantification of the content of the vinyl aromatic monomer units using an ultraviolet spectrophotometer and the quantification of the vinyl aromatic polymer block component by the "osmium tetroxide degradation method".

The content of the vinyl aromatic monomer units in the random copolymer block can be controlled to fall within the above numerical range by adjusting the amount of the vinyl aromatic monomer added and the timing of this addition in a polymerization step.

The distribution state of the vinyl aromatic monomer units in the random copolymer block (iii) is not particularly limited. The vinyl aromatic monomer units may be uniformly distributed or may be distributed in a tapered pattern. In addition, there may exist a plurality of moieties in which the vinyl aromatic monomer units are uniformly distributed and/or moieties in which the vinyl aromatic monomer units are distributed in a tapered pattern, or there may exist a plurality of segments differing in the content of the vinyl aromatic monomer units.

The modified conjugated diene polymer composition of the present embodiment preferably includes the conjugated diene polymer (C) including (iii) the random copolymer block of a conjugated diene monomer and a vinyl aromatic monomer, because its compatibility with a softening agent can be controlled by adjusting the compositional ratio between the conjugated diene monomer and the vinyl aromatic monomer contained in the random copolymer block. In this embodiment, a modified conjugated diene polymer composition excellent in fluidity during molding processing (high-temperature state) without causing oil bleed in routine use (low-temperature state) tends to be provided.

In the conjugated diene polymer (C), an additional monomer copolymerizable with the conjugated diene monomer and the vinyl aromatic monomer may be used in addition to the conjugated diene monomer and the vinyl aromatic monomer.

The structure of the conjugated diene polymer (C) is not particularly limited. Examples thereof include a polymer having, in its part, a structure as represented by any of the formulas given below, and a polymer having a structure as represented by any of the formulas given below.

In the following formulas, the description of the modifying group may be omitted.

b, c, $(b)_m$-X, $(c)_m$-X, $(b-c)_n$, $c-(b-c)_n$, $b-(c-b)_n$, $(b-c)_m$-X, $(c-b)_m$-X, $[(b-c)_n]_m$-X, $[(c-b)_n]_m$-X, $[c-(b-c)_n]_m$-X, $[b-(c-b)_n]_m$-X, $[(b-c)_n-b]_m$-X, $[(c-b)_n-c]_m$-X,

$(a-b)_n$, $b-(a-b)_n$, $a-(b-a)_n$, $(a-b)_m$-X, $(b-a)_m$-X, $[(a-b)_n]_m$-X, $[(b-a)_n]_m$-X, $[b-(a-b)_n]_m$-X, $[a-(b-a)_n]_m$-X, $[(a-b)_n-a]_m$-X, $[(b-a)_n-b]_m$-X,

$(a-c)_n$, $c-(a-c)_n$, $a-(c-a)_n$, $(a-c)_m$-X, $(c-a)_m$-X, $[(a-c)_n]_m$-X, $[(c-a)_n]_m$-X, $[c-(a-c)_n]_m$-X, $[a-(c-a)_n]_m$-X, $[(a-c)_n-a]_m$-X, $[(c-a)_n-c]_m$-X,

c-(b-a)$_n$, c-(a-b)$_n$,
c-(a-b-a)$_n$, c-(b-a-b)$_n$,
a-c-(b-a)$_n$, a-c-(a-b)$_n$,
a-c-(b-a)$_n$-b, [(a-b-c)$_n$]$_m$-X,
[a-(b-c)$_n$]$_m$-X, [(a-b)$_n$-c]$_m$-X,
[(a-b-a)$_n$-c]$_m$-X,
[(b-a-b)$_n$-c]$_m$-X, [(c-b-2a)$_n$]$_m$-X,
[c-(b-a)n]$_m$-X, [c-(a-b-a)$_n$]$_m$-X, [c-(b-a-b)$_n$]$_m$-X,
a-(b-c)$_n$, a-(c-b)$_n$,
a-(c-b-c)$_n$, a-(b-c-b)$_n$,
c-a-(b-c)$_n$, c-a-(c-b)$_n$,
c-a-(b-c)$_n$-b, [(c-b-a)$_n$]$_m$-X,
[c-(b-a)$_n$]$_m$-X, [(c-b)$_n$-a]$_m$-X,
[(c-b-c)$_n$-a]$_m$-X,
[(b-c-b)$_n$-a]$_m$-X, [(a-b-c)$_n$]$_m$-X,
[a- (b-c)$_n$]$_m$-X, [a- (c-b-c)$_n$]$_m$-X, [a- (b-c-b)$_n$]$_m$-X,
b-(a-c)$_n$, b-(c-a)$_n$,
b-(c-a-c)$_n$, b-(a-c-a)$_n$,
c-b-(a-c)$_n$, c-b-(c-a)$_n$,
c-b-(a-c)$_n$-a, [(c-a-b)$_n$]$_m$-X,
[c-(a-b)$_n$]$_m$-X, [(c-a)$_n$-b]$_m$-X,
[(c-a-c)$_n$-b]$_m$-X,
[(b-c-b)$_n$-b]$_m$-X, [(b-a-c)$_n$]$_m$-X,
[b-(a-c)$_n$]$_m$-X, [b-(c-a-c)$_n$]$_m$-X, [b-(a-c-a)$_n$]$_m$-X,
(b$_1$-b$_2$)$_n$-a,
a-(b$_1$-b$_2$)$_n$-a,
(b$_1$-b$_2$-b)$_n$-a,
(b$_1$b$_2$-a)$_n$,
(b$_1$-b$_2$-a)$_n$-b,
(b$_1$-b$_2$-a-b)$_n$,
(b$_1$-b$_2$-a)$_m$-X, and
(b$_c$b$_2$-a-b)$_m$-X.

In each of the general formulas, a represents the vinyl aromatic polymer block having 80% by mass or more of vinyl aromatic monomer units, b represents the conjugated diene polymer block having 80% by mass or more of conjugated diene monomer units, b$_1$ and b$_2$ each represent the conjugated diene polymer block having 80% by mass or more of conjugated diene monomer units (wherein the vinyl bond content in b$_1$ is smaller than that in b$_2$), and c represents the random copolymer block of a conjugated diene monomer and a vinyl aromatic monomer. n is an integer of 1 or larger, preferably an integer of 1 to 5. m is an integer of 2 or larger, preferably an integer of 2 to 11. X is a residue of a coupling agent or a residue of a polyfunctional initiator.

Preferably, the conjugated diene polymer (C) mainly has a structure having the b-, b$_1$- or b$_2$-blocks from the viewpoint of improvement in flexibility. The structure preferably has the a-block, and a polymer represented by at least one of the structural formulas a-b, a-b-a, a-b-a-b, (a-b)$_m$-X, b$_1$-b$_2$-a, a-(b$_1$-b$_2$)$_n$-a, b$_1$-b$_2$-a-b and b$_1$-b$_2$-b-a is preferred, from the viewpoint of improving mechanical strength. The structure preferably has two or more a-blocks in the molecular chain, also the b$_1$-block preferably has crystalline nature, and a polymer represented by at least one of the structural formulas a-b-a, a-b-a-b, (a-b)$_m$-X, b$_1$-b$_2$-a, a-b$_1$-b$_2$-a, b$_1$-b$_2$-a-b and b$_1$-b$_2$-b-a is more preferred, from the viewpoint of improving low stickiness. The structure preferably has the c-block, and a polymer represented by at least one of the structural formulas (a-c)$_m$-X, [a-(b-c)$_n$]$_m$-X, [a-(c-b-c)$_n$]$_m$-X and [a-(b-c-b)$_n$]$_m$-X is preferred, from the viewpoint of favorable balance among abrasion resistance, scratch resistance and flexibility.

In a multilayered article in which a layer including the modified conjugated diene polymer composition and a layer including a polar resin are laminated or a molded article including the multilayered article, whether or not a peel trace of the modified conjugated diene polymer composition remains on a peeled surface of the layer side including a polar resin when these two layers are separated may be confirmed as an index for determining the adhesion strength between the layer including the modified conjugated diene polymer composition and the layer including a polar resin. Specifically, after lamination of these two layers, the adhesive layer (the layer including the modified conjugated diene polymer composition) is detached from the base material (the layer including a polar resin), and a test on whether or not a peel trace remains may be utilized in order to examine the degree of adhesion strength between the two layers. When the conjugated diene polymer (C) has the c block and particularly is a polymer represented by at least one of the structural formulas (a-c)$_m$-X,

[a-(b-C)$_n$]$_m$-X, [a-(c-b-c)$_n$]$_m$-X and [a-(b-c-b)$_n$]$_m$-X, a peel trace tends to remain easily, i.e., the adhesion strength between the layer including the modified conjugated diene polymer composition and the layer including a polar resin tends to be high.

On the other hand, it is preferred to use a modified conjugated diene polymer composition with no peel trace remaining in the test described above, for example, when each layer in the multilayered article or the molded article including the multilayered article is separated and recycled. In such a case, the conjugated diene polymer (C) may include no c block.

The weight-average molecular weight (Mw) of the conjugated diene polymer (C) is preferably 150000 or higher and 1000000 or lower, more preferably 200000 or higher and 800000 or lower, further preferably 250000 or higher and 500000 or lower, from the viewpoint of improvement in mechanical strength and abrasion resistance. When the weight-average molecular weight (Mw) of the conjugated diene polymer (C) is 1000000 or lower, the fluidity of the modified conjugated diene polymer composition is further improved. The weight-average molecular weight of the conjugated diene polymer (C) may be 400000 or lower, 350000 or lower, or 300000 or lower.

The weight-average molecular weight (Mw) of the conjugated diene polymer (C) is a weight-average molecular weight (Mw) determined as a molecular weight at a peak of a chromatogram obtained by gel permeation chromatography (GPC) measurement on the basis of a calibration curve prepared by the measurement of commercially available standard polystyrene. The calibration curve can be prepared using the peak molecular weight of the standard polystyrene.

The molecular weight distribution of a modified conjugated diene polymer (C) can also be determined by GPC measurement in the same manner as above. The molecular weight distribution can be determined from the ratio between the weight-average molecular weight (Mw) and a number-average molecular weight (Mn) (Mw/Mn).

The molecular weight distribution (Mw/Mn) of the conjugated diene polymer (C) at a single peak measured by GPC is preferably 5.0 or less, more preferably 4.0 or less, further preferably 3.0 or less, still more preferably 2.5 or less. The molecular weight distribution may be 1.0 or more and 2.0 or less, or 1.1 or more and 1.5 or less within the above range.

In the conjugated diene polymer (C), the content of the vinyl aromatic monomer units in the vinyl aromatic polymer block (i) is 80% by mass or more and is more preferably 90% by mass or more, further preferably, 95% by mass or more, from the viewpoint of improvement in the mechanical strength and flexibility of the modified conjugated diene polymer composition.

In the conjugated diene polymer (C), the vinyl bond content before hydrogenation is preferably more than 0% by mol, more preferably 10% by mol or more and 90% by mol or less, further preferably 15% by mol or more and 85% by mol or less, still more preferably 18% by mol or more and 80% by mol or less, based on 100% by mol of total of the conjugated diene monomer units, from the viewpoint of improvement in the fluidity and flexibility of the modified conjugated diene polymer composition. The vinyl bond content of the conjugated diene polymer (C) may be 60% by mol or less, 50% by mol or less, 40% by mol or less, or 30% by mol or less based on 100% by mol of total of the conjugated diene monomer units.

In the conjugated diene polymer (C), the hydrogenation rate of a residual double bond is 0% by mol or more and 100% by mol or less. The hydrogenation rate in the conjugated diene polymer (C) is preferably 20% by mol or more and 100% by mol or less, more preferably 40% by mol or more and 100% by mol or less, further preferably 60% by mol or more and 100% by mol or less, still more preferably 80% by mol or more and 100% by mol or less, from the viewpoint of improving heat resistance by hydrogenating a thermally unstable 1,2-bond moiety (1,2-bond moiety and 3,4-bond moiety in the case of also having incorporation in the polymer through a 3,4-bond). Molding is often performed at a high temperature for adhesion to a polar resin. The modified conjugated diene polymer composition having a hydrogenation rate that falls within the above range in the conjugated diene polymer (C) is preferred because heat resistance is improved.

The conjugated diene polymer (C) may be modified. When the conjugated diene polymer (C) is modified, a preferred modifying group is the same as those for the modified conjugated diene polymer (A) mentioned above. More preferably, the modifying group is identical to the modifying group in the modified conjugated diene polymer (A) .

In the modified conjugated diene polymer composition of the present embodiment, the content of the modified conjugated diene polymer (A) is preferably 5% by mass or more and 80% by mass or less based on the total amount of components except for a filler of the modified conjugated diene polymer composition from the viewpoint of improvement in adhesiveness and the suppression of stickiness. The content is more preferably 10% by mass or more and 70% by mass or less, further preferably 15% by mass or more and 60% by mass or less, still more preferably 20% by mass or more and 50% by mass or less, still further preferably 23% by mass or more and 45% by mass or less, particularly preferably 25% by mass or more and 40% by mass or less. The content of the modified conjugated diene polymer (A) may be 30% by mass or less within the above range.

In the modified conjugated diene polymer composition of the present embodiment, the content of the conjugated diene polymer (C) is preferably 0% by mass or more and 50% by mass or less based on the total amount of components except for a filler of the modified conjugated diene polymer composition from the viewpoint of improving strength and fluidity. The content is more preferably 5% by mass or more and 40% by mass or less, further preferably 10% by mass or more and 30% by mass or less, still more preferably 15% by mass or more and 25% by mass or less. The content of the conjugated diene polymer (C) may be 20% by mass or more within the above range.

The content of the polyolefin (B) can be determined in consideration of a ratio to the content of the modified conjugated diene polymer (A) as described in [Method for producing modified conjugated diene polymer composition] mentioned later. The content of the polyolefin (B) is, for example, 3% by mass or more and 30% by mass or less, 5% by mass or more and 25% by mass or less, or 10% by mass or more and 20% by mass or less based on the total amount of components except for a filler of the modified conjugated diene polymer composition. The content of the polyolefin (B) may be 15% by mass or less within the above range.

The modified conjugated diene polymer composition of the present embodiment preferably includes a softening agent from the viewpoint of improvement in flexibility.

Examples of the softening agent include paraffin oil, naphthene oil, aromatic oil, paraffin wax, liquid paraffin, white mineral oil and plant-derived softening agents.

Among them, paraffin oil, liquid paraffin and white mineral oil are more preferred from the viewpoint of improvement in the low-temperature characteristics and bleed resistance, etc. of the modified conjugated diene polymer composition and its molded article.

The kinetic viscosity at 40°C of the softening agent in the modified conjugated diene polymer composition is preferably 500 $mm^2$/sec or less. The lower limit value of the kinetic viscosity at 40°C of the softening agent is not particularly limited and is preferably 10 $mm^2$/sec. When the kinetic viscosity at 40°C of the softening agent is 500 $mm^2$/sec or less, the modified conjugated diene polymer composition tends to exhibit more improved fluidity and more improved molding processability. The kinetic viscosity of the softening agent can be measured by, for example, a testing method using a glass capillary viscometer.

In the modified conjugated diene polymer composition, the amount of the softening agent blended is preferably 0 parts by mass or more and 200 parts by mass or less based on 100 parts by mass of total of the modified conjugated diene polymer (A) and the conjugated diene polymer (C). The amount of the softening agent blended is more preferably 5 parts by mass or more and 170 parts by mass or less, further preferably 30 parts by mass or more and 150 parts by mass or less, still more preferably 40 parts by mass or more and 140 parts by mass or less, particularly preferably 50 parts by mass or more and 130 parts by mass or less, from the viewpoint of improvement in flexibility and from the viewpoint of the suppression of oil bleed. The amount of the softening agent blended may be 100 parts by mass or less or 90 parts by mass or less within the above range.

The fluidity of the modified conjugated diene polymer composition of the present embodiment is not particularly limited. The melt flow rate (MFR) thereof at 230°C under 2.16 kg is preferably 10 g/10 min or more from the viewpoint of moldability. The melt flow rate is more preferably 15 g/10 min or more from the viewpoint of improvement in adhesiveness, 20 g/10 min or more from the viewpoint of improvement in the appearance of a molded product, 25 g/10 min or more or 30 g/10 min or more from the viewpoint of the thinning of a molded product, 50 g/10 min or more from the viewpoint of decrease in molding temperature, further preferably 100 g/10 min or more. The upper limit value of the melt flow rate is not particularly limited and may be, for example, 300 g/10 min, 200 g/10 min or 150 g/10 min.

The modified conjugated diene polymer composition of the present embodiment preferably includes a filler from the viewpoint of reduction in the cost of the composition, and improvement in flame retardancy and adhesiveness. Examples of the filler include, but are not limited to, talc, calcium carbonate, calcium oxide, zinc carbonate, wollastonite, zeolite, wollastonite, silica, alumina, clay, titanium oxide, magnesium hydroxide, magnesium oxide, sodium silicate, calcium silicate, magnesium silicate, sodium aluminate, calcium aluminate, sodium aluminosilicate, zinc oxide, potassium titanate, hydrotalcite, barium sulfate, titanium black, and carbon black such as furnace black, thermal black and acetylene black.

Only one of these fillers may be used singly, or two or more thereof may be used in combination. Among them, as the filler, talc, calcium carbonate, silica and clay are preferred, and talc and calcium carbonate are more preferred.

The content of the filler in the modified conjugated diene polymer composition is preferably 0% by mass or more and 50% by mass or less, more preferably 0% by mass or more and 40% by mass or less, based on the whole modified conjugated diene polymer composition. When the modified conjugated diene polymer composition includes a filler, the mechanical characteristics, such as tensile modulus and 100% modulus, of the modified conjugated diene polymer composition tends to be further improved. The content of the filler may be 35% by mass or less or 30% by mass or less within the above range.

The modified conjugated diene polymer composition of the present embodiment may include an additive other than the components mentioned above. Examples of such an additive include, but are not limited to, oils, filers, heat stabilizers, ultraviolet absorbers, nucleating agents, antioxidants, weathering agents, light stabilizers, plasticizers, antistatic agents, flame retardants, slip agents, anti-blocking agents, antifogging agents, lubricants, pigments, dyes, dispersants, copper inhibitors, neutralizing agents, anti-foaming agents, weld strength improving agents, natural oils, synthetic oils and waxes. Other elastomers or thermoplastic resins may be used as additives at arbitrary content.

Only one of these additives may be used, or two or more thereof may be used in combination.

In the modified conjugated diene polymer composition of the present embodiment, the examples and preferred ones of the components can be arbitrarily combined. The contents of the components may each independently be selected unless otherwise specified.

[Multilayered article]

The modified conjugated diene polymer composition of the present embodiment can form a multilayered article, together with a polar resin. The multilayered article of the present embodiment includes a layer including a polar resin and a layer including the aforementioned modified conjugated diene polymer composition laminated on the layer including a polar resin.

Examples of the polar resin include, but are not particularly limited to, polyvinyl chloride, ABS, acrylonitrile-styrene copolymers, polyacrylic acid, polyacrylic acid ester such as polymethyl acrylate, polymethacrylic acid, polymethacrylic acid ester such as polymethyl methacrylate, polyvinyl alcohol, polyvinylidene chloride, polyethylene terephthalate, polyamide, polyacetal, polycarbonate, polybutylene terephthalate, polyvinylidene fluoride, polysulfone, polyethersulfone, polyphenylene sulfide, polyarylate, polyamide imide, polyether imide, polyether ketone, polyether ether ketone, polyimide, liquid-crystal polymers, polytetrafluoroethylene, phenol resin, urea resin, melamine resin, unsaturated polyester, epoxy resin and polyurethane. One of these polar resins may be used singly, or two or more thereof may be used in combination.

Among them, as the polar resin, ABS, polymethyl methacrylate, polyamide, polyacetal, polyethylene terephthalate, polybutylene terephthalate, polycarbonate, and polyphenylene sulfide are preferred from the viewpoint of improvement in the mechanical strength, heat resistance and chemical resistance of the multilayered article. As the polar resin ABS, polymethyl methacrylate, polyamide, polycarbonate and polyphenylene sulfide are more preferred from the viewpoint of improvement in adhesiveness to the modified conjugated diene polymer composition and polyamide is further preferred from the viewpoint of abrasion resistance.

The polyamide is characterized on the basis of the number of carbon atoms in starting materials diamine and dibasic acid, or the number of carbon atoms in a lactam monomer. Examples of the polyamide include polyamide 6, polyamide 66, polyamide 610, polyamide 612, polyamide 11, polyamide 12, polyamide MXD6 (whose diamine is m-xylenediamine), polyamide 46, polyamide 6T (wherein T represents that the dibasic acid is terephthalic acid), polyamide 9T, polyamide 10T, polyamide 11T, polyamide 6I, polyamide 6/66 (wherein / represents a copolymer of polyamide 6 and polyamide 66; the same holds true for the description below), polyamide 6/6T, polyamide 66/6T, polyamide 66/6I, polyamide 66/6I/6, polyamide 6T/6I, nylon 6T/11, polyamide 6T/12, polyamide 66/6T/6I, polyamide 6T/5T, polyamide 6T/M5T, polyamide nylon 5T/10T, polyamide 10T/612, polyamide 10T/66 and their blends. Typical examples of the polyamide include polyamide 6 and polyamide 66. The weight-average molecular weight of such polyamide is preferably 5000 or higher and 200000 or lower and is more preferably 10000 or higher and 150000 or lower, further preferably 20000 or higher and 100000 or lower, from the viewpoint of improvement in heat resistance and moldability.

Any polyphenylene sulfide that belongs to the category of polyphenylene sulfide may be used. The polyphenylene sulfide preferably contains 70 mol% or more, more preferably 90 mol% or more, of p-phenylene sulfide units as its constituent units from the viewpoint of improvement in the heat resistance of the multilayered article.

For example, o-phenylene sulfide units, m-phenylene sulfide units, phenylene sulfide ether units, phenylene sulfide sulfone units, phenylene sulfide ketone units, diphenylene sulfide units, substituent-containing phenylene sulfide units and branched structure-containing phenylene sulfide units may be contained as other constituent units.

The polyphenylene sulfide resin may be linear or may have a cross-linked or branched structure.

The polyphenylene sulfide resin may have a functional group such as a thiol group or a carboxyl group at an end and/or in the backbone in the polymer structure.

The method for producing the polyphenylene sulfide resin is not particularly limited. Examples of a generally known production method include a production method of reacting an alkali metal sulfide with a dihalo aromatic compound in a polymerization solvent.

The layer including a polar resin may include a filler in addition to the polar resin.

Examples of the filler in the layer including a polar resin include, but are not limited to, fibrous inorganic fillers such as glass fiber, glass spheres, hollow glass spheres, carbon fiber, cellulose nanofiber, wollastonite, potassium titanate whisker, calcium carbonate whisker, aluminum borate whisker, magnesium sulfate whisker, meerschaum, xonotlite, and zinc oxide whisker, talc, calcium carbonate, calcium oxide, zinc carbonate, wollastonite, zeolite, wollastonite, silica, alumina, clay, titanium oxide, magnesium hydroxide, magnesium oxide, sodium silicate, calcium silicate, magnesium silicate, sodium aluminate, calcium aluminate, sodium aluminosilicate, zinc oxide, potassium titanate, hydrotalcite, barium sulfate, titanium black, and carbon black such as furnace black, thermal black and acetylene black.

Among them, a fibrous filler is preferred, and glass fiber, carbon fiber, cellulose nanofiber and wollastonite are more preferred, because the strength, rigidity and heat resistance of the multilayered article are easily enhanced.

The fibrous filler may be surface-treated with a compound having an affinity group or a reactive group for the polar resin.

One of these fibrous fillers may be used singly, or two or more thereof may be used.

In the multilayered article of the present embodiment, the number of laminated layers is not particularly limited as long as one each of the layer including the modified conjugated diene polymer composition and the layer including a polar resin is contained. One or two or more layers including the modified conjugated diene polymer composition are preferably contained as an outermost layer from the viewpoint of conferring flexible and favorable texture.

The method for forming the layers of the multilayered article is not particularly limited. A conventional method known in the art, for example, extrusion molding, injection molding (insert molding), two-color injection molding, sandwich molding, hollow molding, compression molding, vacuum molding, rotational molding, powder slush molding, foam molding, lamination molding, calendar molding and blow molding, can be used. In the multilayered article of the present embodiment, preferably, the layer including the modified conjugated diene polymer composition is thermally fused to the layer including a polar resin. A detailed method for producing the multilayered article will be mentioned later.

[Molded article]

The multilayered article of the modified conjugated diene polymer composition of the present embodiment and the polar resin can be prepared as a molded article. The molded article of the present embodiment includes the multilayered article including the layer including the modified conjugated diene polymer composition and the layer including a polar resin.

The molded article of the present embodiment can have a shape appropriate for various purposes such as automobile parts, industrial tools, toys, electrical and electronic equipment parts, medical appliances, building and piping member, cutleries, housewares, cosmetic products, industrial parts, various hoses, various housings, various module cases, various power control unit parts, writing implements, robot hands and medical appliances.

Among them, articles having a handle and articles required to have ease to grip or favorable texture upon touch of humans are preferred. Examples of such a molded article include industrial tools, electrical wires, connectors, handy electronic equipment, toothbrushes, shavers, pens such as ballpoint pens, touch pens and stylus pens, cutleries such as forks, knives and spoons, and automobile interior members having a grip portion. Among them, a power tool which places a large load on human bodies due to vibration when used is preferred.

In the molded article of the present embodiment, the multilayered article of the modified conjugated diene polymer composition and the polar resin preferably is included in a grip portion from the viewpoint of effectively and reliably exerting the advantageous effects of the present embodiment. More specifically, the multilayered article is preferably included in at least one member selected from a grip of an industrial tool, an electrical wire covering member, a connector housing, a grip of handy electronic equipment, a grip of a toothbrush, a grip of a shaver, a grip of a cutlery, a grip of a writing implement, a grip portion of a robot hand and a grip portion of an automobile interior member. The "grip portion of a robot hand" means a portion, in the robot hand, that comes into contact with an object when the robot hand gets a hold of the object.

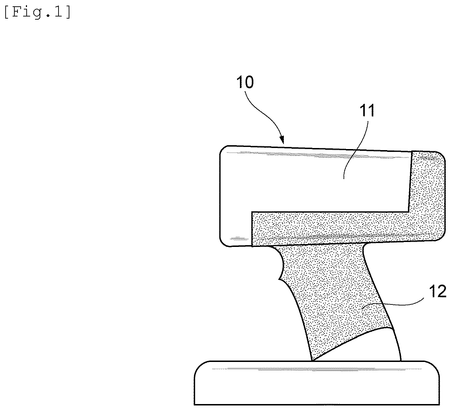

Figure 1 shows power drill 10 which is one aspect of the molded article of the present embodiment. The power drill 10 includes power drill housing 11 including the polar resin and grip portion 12 of the power drill. The grip portion 12 of the power drill includes the modified conjugated diene polymer composition and can thereby reduce burdens on users' bodies upon use of the power drill 10.

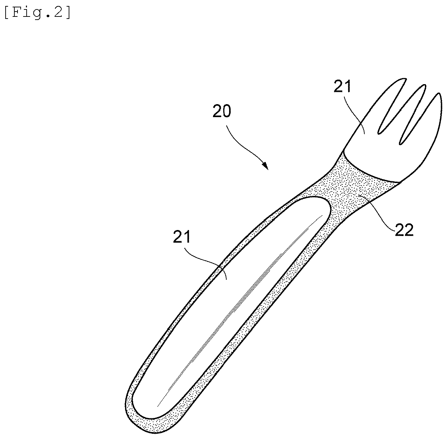

Figure 2 shows cutlery 20 which is one aspect of the molded article of the present embodiment. The cutlery 20 includes main body 21 of the cutlery including the polar resin and grip portion 22 of the cutlery. The grip portion 22 of the cutlery includes the modified conjugated diene polymer composition and thereby facilitates operating the cutlery 20.

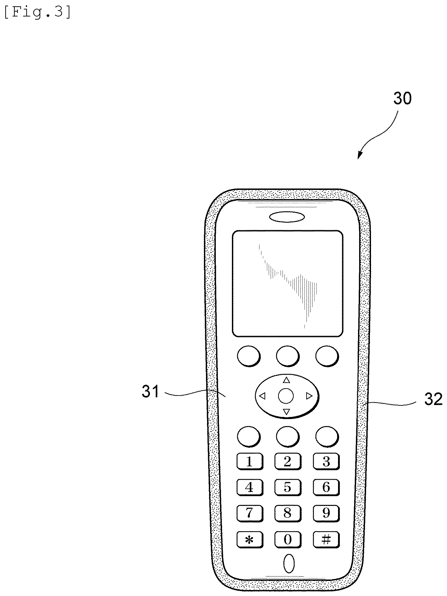

Figure 3 shows mobile phone housing 30 which is one aspect of the molded article of the present embodiment. The mobile phone housing 30 includes main body 31 of the mobile phone housing including the polar resin and grip portion 32 of the mobile phone housing. The grip portion 32 of the mobile phone housing includes the modified conjugated diene polymer composition and thereby provides favorable texture of the mobile phone housing 30 to users.

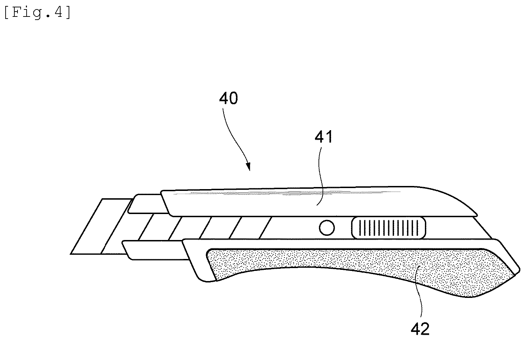

Figure 4 shows cutter 40, an industrial tool, which is one aspect of the molded article of the present embodiment. The industrial tool (cutter) 40 includes cutter housing 41 including the polar resin and grip portion 42 of the cutter. The grip portion 42 of the cutter includes the modified conjugated diene polymer composition and thereby improves the safety of the cutter 40 in use.

[Method for producing modified conjugated diene polymer]

The method for producing the modified conjugated diene polymer of the present embodiment is not limited and may have, for example, a polymerization step, a modification step and a hydrogenation step, as described below.

The polymerization step is not particularly limited and is, for example, the step of polymerizing a conjugated diene compound alone or a conjugated diene compound and a vinyl aromatic compound with an organic alkali metal compound as a polymerization initiator in an organic solvent to obtain a homopolymer, a random copolymer and/or a block copolymer.

The hydrogenation step is not particularly limited and is, for example, the step of hydrogenating the conjugated diene polymer obtained by the polymerization step.

The modification step is not particularly limited and is, for example, the step of reacting the conjugated diene polymer hydrogenated by the hydrogenation step with a modifying agent for modification reaction to obtain a modified conjugated diene polymer. Alternatively, this step may involve reacting the conjugated diene polymer before hydrogenation with a modifying agent.

The order of the hydrogenation step and the modification step is not particularly limited. Specifically, the polymerization step, the hydrogenation step and the modification step may be performed in this order, or the polymerization step, the modification step and the hydrogenation step may be performed in this order. The polymerization step, the hydrogenation step and the modification step are preferably performed in this order from the viewpoint that the modified conjugated diene polymer mentioned above can be more easily obtained.

The modification step may be performed in parallel with the polymerization step as mentioned later.

(Polymerization step)

The polymerization step is, for example, the step of polymerizing a conjugated diene compound alone or a conjugated diene compound and a vinyl aromatic compound with an organic alkali metal compound as a polymerization initiator in an organic solvent to obtain a homopolymer, a random copolymer and/or a block copolymer.

The embodiment of the polymerization may be batch polymerization, may be continuous polymerization or may be a combination thereof. A batch polymerization method which narrows a molecular weight distribution is preferably used from the viewpoint of a constant size of a dispersion phase in the modified conjugated diene polymer composition having influence on impact resistance and toughness.

The reaction temperature in the polymerization step may be 0°C or higher and 180°C or lower. The reaction temperature is preferably 20°C or higher and 160°C or lower, more preferably 30°C or higher and 150°C or lower, from the viewpoint that the modified conjugated diene polymer of the present embodiment can be more easily obtained.

The reaction time in the polymerization step differs depending on the polymer of interest and may be within 48 hours. The reaction time is preferably 0.1 hours or longer and 10 hours or shorter from the viewpoint that the modified conjugated diene polymer of the present embodiment can be more easily obtained. The reaction time is more preferably 0.5 hours or longer and 5 hours or shorter from the viewpoint of obtaining a modified conjugated diene polymer having a narrow molecular weight distribution and high strength.

The atmosphere of the polymerization system in the polymerization step is not particularly limited as long as the pressure can fall within a range sufficient for maintaining nitrogen and a solvent in a liquid phase.

Impurities that inactivate the polymerization initiator and a living polymer, such as water, oxygen and carbon dioxide, are preferably absent in the polymerization system.

Examples of the organic solvent include, but are not limited to: aliphatic hydrocarbons such as n-butane, isobutane, n-pentane, n-hexane, n-heptane and n-octane; alicyclic hydrocarbons such as cyclohexane, cycloheptane, and methylcyclopentane; and aromatic hydrocarbons such as benzene, xylene, toluene and ethylbenzene.

The organic alkali metal compound serving as a polymerization initiator is preferably an organic lithium compound.

Examples of the organic lithium compound include organic monolithium compounds, organic dilithium compounds and organic polylithium compounds.

Examples of the organic lithium compound include, but are not limited to, ethyllithium, n-propyllithium, isopropyllithium, n-butyllithium, sec-butyllithium, t-butyllithium, n-pentyllithium, n-hexyllithium, benzyllithium, phenyllithium, hexamethylene dilithium, butadienyllithium, isopropenyl dilithium and lithium piperidide.

In the case of using an organic lithium compound containing a nitrogen atom, such as lithium piperidide, as a polymerization initiator, a modified conjugated diene polymer having a nitrogen atom is obtained.

Only one of these polymerization initiators may be used singly, or two or more thereof may be used in combination. Among them, as the polymerization initiator, n-butyllithium, sec-butyllithium and lithium piperidide are preferred from the viewpoint of improvement in polymerization activity.

The amount of the organic alkali metal compound used as a polymerization initiator depends on the molecular weight of the modified conjugated diene polymer of interest but is typically preferably in the range of 0.01 phm or more and 1.5 phm or less (wherein phm represents parts by mass based on 100 parts by mass of monomers; the same holds true for the description below), more preferably in the range of 0.02 phm or more and 0.3 phm or less, further preferably in the range of 0.03 phm or more and 0.2 phm or less.

The vinyl bond content of the modified conjugated diene polymer can be controlled by adding a Lewis base, for example, a compound such as ether or amine, as a vinylating agent.

The amount of the vinylating agent used can be adjusted according to the vinyl bond content of interest.

Examples of the vinylating agent include, but are not limited to, ether compounds and tertiary amine compounds.

Examples of the ether compound include linear ether compounds and cyclic ether compounds.

Examples of the linear ether compound include, but are not limited to, dimethyl ether, diethyl ether, diphenyl ether, dialkyl ether compounds of ethylene glycol such as ethylene glycol dimethyl ether, ethylene glycol diethyl ether and ethylene glycol dibutyl ether, and dialkyl ether compounds of diethylene glycol such as diethylene glycol dimethyl ether, diethylene glycol diethyl ether and diethylene glycol dibutyl ether.

Examples of the cyclic ether compound include, but are not limited to, alkyl ether such as tetrahydrofuran, dioxane, 2,5-dimethyloxolane, 2,2,5,5-tetramethyloxolane, 2,2-bis(2-oxolanyl)propane and furfuryl alcohol.

Examples of the tertiary amine compound include, but are not limited to, trimethylamine, triethylamine, tributylamine, N,N-dimethylaniline, N-ethylpiperidine, N-methylpyrrolidine, N,N,N',N'-tetramethylethylenediamine, N,N,N',N'-tetraethylethylenediamine, 1,2-dipiperidinoethane, trimethylaminoethylpiperazine, N,N,N',N",N"-pentamethylethylenetriamine, N,N'-dioctyl-p-phenylenediamine, pyridine, tetramethylpropanediamine and bis[2-(N,N-dimethylamino)ethyl] ether.

The tertiary amine compound is preferably a compound having two amines. Among others, the tertiary amine compound more preferably has a structure that exhibits symmetry in the molecule, and is further preferably N,N,N',N'-tetramethylethylenediamine, bis[2-(N,N-dimethylamino)ethyl] ether and 1,2-dipiperidinoethane.

Only one of these vinylating agents may be used singly, or two or more thereof may be used in combination.

In the polymerization step, a conjugated diene monomer alone or a conjugated diene monomer and a vinyl aromatic monomer may be polymerized in the presence of alkali metal alkoxide in addition to the vinylating agent and the organic lithium compound mentioned above.

In this context, the alkali metal alkoxide is a compound represented by the general formula MOR wherein M represents an alkali metal and R represents an alkyl group.

In the polymerization step, the copresence of the alkali metal alkoxide tends to facilitate controlling a vinyl bond content, a molecular weight distribution, a polymerization rate and a block ratio, etc.

The alkali metal of the alkali metal alkoxide is preferably sodium or potassium from the viewpoint that a high vinyl bond content, a narrow molecular weight distribution, a high polymerization reaction rate and a high block ratio can be obtained.

Examples of the alkali metal alkoxide include, but are not limited to, sodium alkoxide, lithium alkoxide and potassium alkoxide having an alkyl group having 2 to 12 carbon atoms. As the alkali metal alkoxide, sodium alkoxide and potassium alkoxide having an alkyl group having 3 to 6 carbon atoms are preferred, and sodium t-butoxide, sodium t-pentoxide, potassium t-butoxide and potassium t-pentoxide are more preferred.

Among them, sodium t-butoxide and sodium t-pentoxide are further preferred.

(Hydrogenation step)

The hydrogenation step is the step of hydrogenating the conjugated diene polymer or the modified conjugated diene polymer. Examples of the hydrogenation method in the hydrogenation step include, but are not particularly limited to, a method of hydrogenating the conjugated diene polymer obtained in the polymerization step by supplying a hydrogen gas thereto in the presence of a hydrogenation catalyst. By having such a hydrogenation step, the method for producing the modified conjugated diene polymer can produce a thermally more stable hydrogenated conjugated diene polymer by hydrogenating double bond residues in the conjugated diene monomer units.

The hydrogenation rate can be controlled, for example, by the amount of the catalyst and the amount of the hydrogen gas supplied (also referred to as the "feed" of the hydrogen gas), etc. in hydrogenation. The hydrogenation rate can be controlled, for example, by the amount of the catalyst, the amount of the hydrogen gas supplied, the pressure of the hydrogen gas and a reaction temperature, etc. in hydrogenation. The hydrogenation step is preferably carried out at a timing after termination of the production reaction of the conjugated diene polymer in the polymerization step.

After the completion of hydrogenation reaction, a stabilizer may be added. Examples of the stabilizer include, but are not particularly limited to, octadecyl-3-(3,5-di-t-butyl-4-hydroxyphenyl) propionate.

(Modification step)

The modification step is not particularly limited as long as the step produces a conjugated diene polymer having a modifying group. This step involves, for example, reacting the conjugated diene polymer and/or the hydrogenated conjugated diene polymer with a modifying agent to obtain a modified conjugated diene polymer. As a result, the resulting modified conjugated diene polymer has a modifying group.

The modification step may be performed in parallel with the polymerization step mentioned above. Examples of such a modification reaction method include, but are not particularly limited to: a method using a polymerization initiator having an affinity group or a reactive group for a polar resin in polymerization reaction in the polymerization step; and a method using an unsaturated monomer having an affinity group or a reactive group for a polar resin in polymerization reaction in the polymerization step. Alternatively, a method of adding a modifying agent that forms or contains an affinity group or a reactive group for a polar resin to the living end of the conjugated diene polymer obtained through polymerization reaction in the polymerization step may be used as the modification reaction method.

Examples of the "polymerization initiator having an affinity group or a reactive group for a polar resin" include, but are not limited to, 3-lithio-1-[N,N-bis(trimethylsilyl)]aminopropane, 2-lithio-1-[N,N-bis(trimethylsilyl)]aminoethane, 3-lithio-2,2-dimethyl-1-[N,N-bis(trimethylsilyl)]aminopropane, 2,2,5,5-tetramethyl-1-(3-lithiopropyl)-1-aza-2,5-disilacyclopentane, 2,2,5,5-tetramethyl-1-(3-lithio-2,2-dimethyl-propyl)-1-aza-2,5-disilacyclopentane, 2,2,5,5-tetramethyl-1-(2-lithioethyl)-1-aza-2,5-disilacyclopentane, 3-lithio-1-[N-(tert-butyldimethylsilyl)-N-trimethylsilyl]aminopropane, 3-lithio-1-(N-methyl-N-trimethylsilyl)aminopropane, 3-lithio-1-(N-ethyl-N-trimethylsilyl)aminopropane and lithium piperidide.

Examples of the "unsaturated monomer having an affinity group or a reactive group for a polar resin" include, but are not limited to, p-[N,N-bis(trimethylsilyl)amino]styrene, p-[N,N-bis(trimethylsilyl)aminomethyl]styrene, p-{2-[N,N-bis(trimethylsilyl)amino]ethyl}styrene, m-[N,N-bis(trimethylsilyl)amino]styrene, p-(N-methyl-N-trimethylsilylamino)styrene and p-(N-methyl-N-trimethylsilylaminomethyl)styrene.

Examples of the "modifying agent that forms or contains an affinity group or a reactive group for a polar resin" include, but are not limited to, tetraglycidyl m-xylenediamine, tetraglycidyl-1,3-bisaminomethylcyclohexane, ε-caprolactone, 1,3-dimethyl-2-imidazolidinone, 1,3-diethyl-2-imidazolidinone, N,N'-dimethylpropyleneurea and N-methylpyrrolidone.

Another example of the method for introducing the modifying group includes a method of reacting the conjugated diene polymer with an organic alkali metal compound such as an organic lithium compound (metalation reaction) to obtain an organic alkali metal-added polymer, and adding a modifying agent having an affinity group or a reactive group for a polar resin to the organic alkali metal-added polymer.

A further alternative example of the method for introducing the modifying group include a method of graft-adding an atomic group having an affinity group or a reactive group for a polar resin to the conjugated diene polymer.

Such a method may be a direct graft addition method to the conjugated diene polymer or may be a method of further reacting the conjugated diene polymer with a primary modifying group introduced, with an atomic group having an affinity group or a reactive group for a polar resin (secondary modification).

Examples of the "atomic group having an affinity group or a reactive group for a polar resin" include, but are not limited to, molecular units containing $\alpha,\beta$-unsaturated carboxylic acid or a derivative thereof. Examples of the $\alpha,\beta$-unsaturated carboxylic acid or the derivative thereof include: maleic acid, halogenated maleic acid, itaconic acid, cis-4-cyclohexene-1,2-dicarboxylic acid, endo-cis-bicyclo[2,2,1]-5-heptene-2,3-dicarboxylic acid and anhydrides of these dicarboxylic acids; acrylic acid, methacrylic acid, crotonic acid and esters of these monocarboxylic acids (e.g., 2-hydroxyethyl acrylate, methyl methacrylate, glycidyl methacrylate and 3-(trimethoxysilyl)propyl methacrylate); and alkoxysilane compounds (e.g., vinyltrimethoxysilane, vinyltriethoxysilane, vinyltripropoxysilane, vinyltributoxysilane, vinyldimethoxymethylsilane, vinyldiethoxyethylsilane, vinyldipropoxypropylsilane and vinyldibutoxybutylsilane). Among them, an anhydride is preferred, and maleic anhydride is more preferred from the viewpoint of improvement in reactivity.

The amount of the added molecular unit containing $\alpha,\beta$-unsaturated carboxylic acid or a derivative thereof is preferably 0.1 parts by mass or more and 20 parts by mass or less, more preferably 0.2 parts by mass or more and 10 parts by mass or less, further preferably 0.3 parts by mass or more and 5.0 parts by mass or less, still more preferably 0.3 parts by mass or more and 2.0 parts by mass or less, still further preferably 0.3 parts by mass or more and 1.3 parts by mass or less, particularly preferably 0.7 parts by mass or more and 1.3 parts by mass or less, based on 100 parts by mass of the modified conjugated diene polymer.

The amount of the molecular unit added is preferably 0.1 parts by mass or more from the viewpoint of improvement in compatibility with a polar resin composition. On the other hand, the amount of the molecular unit added is preferably 20 parts by mass or less from the viewpoint of improvement in the fluidity of the modified conjugated diene polymer composition. For a modified conjugated diene polymer having a higher vinyl bond content before hydrogenation, the amount of the added molecular unit containing $\alpha,\beta$-unsaturated carboxylic acid or a derivative thereof tends to be lower. However, the amount of the molecular unit added may be higher from the viewpoint of improvement in adhesion strength. In the production method of the present embodiment, the amount of the molecular unit added may be elevated by appropriately adjusting a modification method.

Examples of the graft addition method include: a method of reacting a radical initiator, the conjugated diene polymer and a compound containing $\alpha,\beta$-unsaturated carboxylic acid or a derivative group thereof in a solution containing these components; a method of reacting a radical initiator, the conjugated diene polymer and a compound containing $\alpha,\beta$-unsaturated carboxylic acid or a derivative group thereof under melting by heating or under heating without melting; a method of reacting the conjugated diene polymer and a compound containing $\alpha,\beta$-unsaturated carboxylic acid or a derivative group thereof under melting by heating or under heating without melting; a method of reacting a compound that forms a bond through reaction with both the conjugated diene polymer and a compound containing $\alpha,\beta$-unsaturated carboxylic acid or a derivative group thereof, the conjugated diene polymer, and the compound containing $\alpha,\beta$-unsaturated carboxylic acid or a derivative group thereof in a solution containing these components; and a method of reacting a compound that forms a bond through reaction with both the conjugated diene polymer and a compound containing α,β-unsaturated carboxylic acid or a derivative group thereof, the conjugated diene polymer, and the compound containing α,β-unsaturated carboxylic acid or a derivative group thereof under melting by heating or under heating without melting.

The graft addition method is preferably a method of reacting a radical initiator, the conjugated diene polymer and a compound containing an α,β-unsaturated carboxylic acid group or a derivative group thereof under melting by heating or under heating without melting, more preferably a method of reacting these components under melting by heating.

Examples of the method of reacting a radical initiator, the conjugated diene polymer and a compound containing an α,β-unsaturated carboxylic acid group or a derivative group thereof under melting by heating include a method of melt-kneading these components using a general mixing machine such as a Banbury mixer, a single-screw extruder, a twin-screw extruder, a co-kneader and a multi-screw extruder. A method using a single-, twin- or multi-screw extruder is preferred, and a method using a twin-screw extruder is more preferred, from the viewpoint of cost and production stability.

The radical initiator, the conjugated diene polymer and the compound containing an α,β-unsaturated carboxylic acid group or a derivative group thereof may be dryblended and added in one portion, or each starting material may be added in a separate feed, or one starting material may be added in a plurality of portions.

The number of screw rotations is preferably 50 rpm or more and 400 rpm or less, more preferably, 100 rpm or more and 350 rpm or less, from the viewpoint of uniformly adding the compound containing α,β-unsaturated carboxylic acid or a derivative group thereof into the conjugated diene polymer. The number of rotations is preferably 150 rpm or more and 300 rpm or less from the viewpoint of suppressing the deterioration of a resin by shear and uniformly adding the compound containing α,β-unsaturated carboxylic acid or a derivative group thereof into the conjugated diene polymer.

The kneading temperature is not particularly limited as long as the temperature allows the conjugated diene polymer to be melted and allows the radical initiator to generate a radical. The temperature is preferably 100°C or higher and 350°C or lower. The kneading temperature is more preferably 120°C or higher and 300°C or lower, further preferably 150°C or higher and 250°C or lower, from the viewpoint of controlling the amount of the added compound containing α,β-unsaturated carboxylic acid or a derivative group thereof, and suppressing the deterioration of a resin by heat.

The melt kneading may be performed under an inert gas (e.g., nitrogen) atmosphere in order to suppress the inactivation of radical active species by oxygen.

Examples of the radical initiator in graft addition include, but are not limited to, ketone peroxide, peroxyketal, hydroperoxide, dialkyl peroxide, diacyl peroxide, peroxyester and peroxydicarbonates. Among them, a radical initiator having a 1-minute half-life temperature of within the kneading temperature range is preferred. A radical initiator having a 1-minute half-life temperature of 150°C or higher and 250°C or lower is more preferred. Examples of such a radical initiator include 1,1-di(t-hexylperoxy)cyclohexane, 1,1-di(t-butylperoxy)cyclohexane, 2,2-di(4,4-di-(t-butylperoxy) cyclohexyl) propane, t-hexylperoxyisopropyl monocarbonate, t-butyl peroxymaleate, t-butylperoxy-3,5,5-trimethyl hexanoate, t-butyl peroxylaurate, t-butylperoxyisopropyl monocarbonate, t-butylperoxy 2-ethylhexyl monocarbonate, t-hexyl peroxybenzoate, 2,5-dimethyl-2,5-di(benzoylperoxy)hexane, t-butyl peroxyacetate, 2,2-di-(t-butylperoxy)butane, t-butyl peroxybenzoate, n-butyl-4,4-di-(t-butylperoxy)valerate, di(2-t-butylperoxyisopropyl)benzene, dicumyl peroxide, di-t-hexyl peroxide, 2,5-dimethyl-2,5-di(t-butylperoxy) hexane, t-butylcumyl peroxide, di-t-butyl peroxide, p-methane hydroperoxide, 2,5-dimethyl-2,5-di(t-butylperoxy)hexyne-3, diisopropylbenzene hydroperoxide and 1,1,3,3-tetramethylbutyl hydroperoxide. Di(2-t-butylperoxyisopropyl)benzene, dicumyl peroxide, di-t-hexyl peroxide, 2,5-dimethyl-2,5-di(t-butylperoxy) hexane, t-butylcumyl peroxide, di-t-butyl peroxide and 2,5-dimethyl-2,5-di(t-butylperoxy)hexyne-3 are preferred from the viewpoint of improvement in compatibility with the conjugated diene polymer. Among them, 2,5-dimethyl-2,5-di(t-butylperoxy)hexane and 2,5-dimethyl-2,5-di(t-butylperoxy)hexyne-3 are more preferred.

The molar equivalent of the compound containing α,β-unsaturated carboxylic acid or a derivative group thereof is preferably 300 molar equivalents or less, more preferably 200 molar equivalents or less, still more preferably 100 molar equivalents or less, based on the radical initiator. When the molar equivalent falls within the above range, more than 0 parts by mass and up to approximately 20 parts by mass of the compound containing α,β-unsaturated carboxylic acid or a derivative group thereof can be more easily added based on 100 parts by mass of the conjugated diene polymer.

In the case of further secondarily modifying the conjugated diene polymer with a primary modifying group introduced, with the atomic group having an affinity group or a reactive group for a polar resin, the reaction method is not particularly limited, and a method known in the art can be used. Examples thereof include a method of dry-blending the primarily modified conjugated diene polymer and the atomic group having an affinity group or a reactive group for a polar resin, and then melt-kneading these components using a general mixing machine such as a Banbury mixer, a single-screw extruder, a twin-screw extruder, a co-kneader and a multi-screw extruder, and a method of dissolving or dispersing and mixing the components in a solvent, and then removing the solvent by heating.

Among them, a melt kneading method using an extruder is preferred from the viewpoint of improvement in productivity and favorable kneadability.

The modified conjugated diene polymer of the present embodiment may be molded into an appropriate shape. Examples of the shape include, but are not particularly limited to, pellets, crumbs, powders, sheets, strands and chips. Alternatively, the melt-kneaded product may be molded directly into the shape of a molded product.

Examples of the pelletization method include: a method of extruding the modified conjugated diene polymer into strands by a single- or twin-screw extruder, and cutting the strands in water with a rotary blade installed on the foreside of a die portion (underwater cut); a method of extruding the modified conjugated diene polymer into strands by a single- or twin-screw extruder, and water-cooling or air-cooling the strands, followed by cutting with a strand cutter; and a method of melt-kneading the modified conjugated diene polymer using an open roll or a Banbury mixer, molding the melt-kneaded product into sheets using a roll, and further cutting the sheets into strips, followed by cutting into cubic pellets with a pelletizer.

The size or shape of the pellets is not particularly limited. Nearly spherical pellets are more preferred than cylindrical pellets obtained by cutting strands vertically to the major axis of the strands, because the adhesive surfaces of the pellets are kept small, from the viewpoint of suppressing the adhesion between the pellets. Examples of a general method for producing the nearly spherical pellets include underwater cut and center hot cut.

The pellets of the modified conjugated diene polymer may contain an anti-blocking agent for the purpose of suppressing pellet blocking.

Examples of the anti-blocking agent include, but are not limited to, calcium stearate, magnesium stearate, zinc stearate, polyethylene, polypropylene, ethylenebisstearylamide, talc and amorphous silica.

The anti-blocking agent is preferably calcium stearate, polyethylene, polypropylene and ethylenebisstearylamide from the viewpoint of improving the transparency of the resulting modified conjugated diene polymer composition, the multilayered article and the molded article including the multilayered article. The anti-blocking agent is preferably calcium stearate, polyethylene and polypropylene from the viewpoint of improving the thermal fusion properties of the modified conjugated diene polymer to a polar resin.

The amount of the anti-blocking agent used is preferably 500 ppm or more and 8000 ppm or less based on the modified conjugated diene polymer. The amount of the anti-blocking agent used is more preferably 1000 ppm or more and 7000 ppm or less based on the modified conjugated diene polymer from the viewpoint of suppressing pellet blocking during long-term storage of the pellets of the modified conjugated diene polymer and from the viewpoint of reducing the scattering of the anti-blocking agent when the pellets of the modified conjugated diene polymer are used. The anti-blocking agent is preferably contained in a state attached to pellet surfaces but may be contained inside the pellets.

[Method for producing modified conjugated diene polymer composition]

The method for producing the modified conjugated diene polymer composition of the present embodiment is not particularly limited, and a method known in the art can be used.

Examples thereof include a method of melt-kneading components such as the modified conjugated diene polymer (A) and the polyolefin (B) mentioned above using a general mixing machine such as a Banbury mixer, a single-screw extruder, a twin-screw extruder, a co-kneader and a multi-screw extruder, and a method of dissolving or dispersing and mixing the components in a solvent and then removing the solvent by heating.

Among them, a melt kneading method using an extruder is preferred from the viewpoint of productivity and favorable kneadability. Particularly, sufficient kneading using two or more multiple screws renders the blend states of the modified conjugated diene polymer (A) and the polyolefin (B) homogenous as a whole, and applies a more even adhesive force to the whole adhesive interface between the modified conjugated diene polymer composition and a polar resin. Hence, the modified conjugated diene polymer composition can adhere suitably to the entire portion of the surface of the layer including a polar resin in the molded article.

The maximum resin temperature during kneading can be a temperature at which the modified conjugated diene polymer (A), the polyolefin (B) and the conjugated diene polymer (C) are melted, and is preferably 120°C or higher and 350°C or lower. The maximum resin temperature is more preferably 180°C or higher and 300°C or lower from the viewpoint of suppressing the deterioration of each of these components by heat by shear heat generation or the like during kneading.

The melt kneading may be performed under an inert gas (e.g., nitrogen) atmosphere in order to suppress the oxidation of the modified conjugated diene polymer (A).

In the case of producing the modified conjugated diene polymer composition using an extruder, the positions and order of feed of the modified conjugated diene polymer (A), the polyolefin (B) and other components are not particularly limited.

In the modified conjugated diene polymer composition of the present embodiment, the mass compositional ratio between the modified conjugated diene polymer (A) and the polyolefin (B) is not particularly limited. The modified conjugated diene polymer composition preferably includes the modified conjugated diene polymer (A) at a content larger than that of the polyolefin (B), from the viewpoint of suppressing, owing to the mixing of the modified conjugated diene polymer (A) and the polyolefin (B), reduction in thermal fusion properties by the crystal domain of the polyolefin having no thermal fusion properties to a polar resin. In the modified conjugated diene polymer composition, the content of the modified conjugated diene polymer (A) is preferably 1.2 or more times the content of the polyolefin (B). The content of the modified conjugated diene polymer (A) is more preferably 1.5 or more times the content of the polyolefin (B) from the viewpoint of improvement in the fluidity of the modified conjugated diene polymer composition. The content of the modified conjugated diene polymer (A) is further preferably 2 or more times the content of the polyolefin (B) from the viewpoint of improvement in the flexibility of the modified conjugated diene polymer composition.

The content of the polyolefin (B) is preferably 1/5 or more times, more preferably 1/4 or more times, further preferably 1/3 or more times, particularly preferably 1/2.5 or more times, the content of the modified conjugated diene polymer (A). In the modified conjugated diene polymer composition, when the content of the polyolefin (B) falls within the above range, the mechanical characteristics, such as tensile modulus and 100% modulus, of the modified conjugated diene polymer composition tends to be further improved.

In the process of producing the modified conjugated diene polymer composition of the present embodiment, the shape of the resulting modified conjugated diene polymer composition is not particularly limited and may be any of pellets, crumbs, powders, sheets, strands and chips, etc. Alternatively, the melt-kneaded product may be prepared into a molded product having the desired shape.

The modified conjugated diene polymer composition of the present embodiment may be produced by pelletization.

Examples of the pelletization method include: a method of extruding the modified conjugated diene polymer composition into strands by a single- or twin-screw extruder, and cutting the strands in water with a rotary blade installed on the foreside of a die portion (underwater cut); a method of extruding the modified conjugated diene polymer composition into strands by a single- or twin-screw extruder, and water-cooling or air-cooling the strands, followed by cutting with a strand cutter; and a method of melt-kneading the modified conjugated diene polymer composition using an open roll or a Banbury mixer, molding the melt-kneaded product into sheets using a roll, and further cutting the sheets into strips, followed by cutting into cubic pellets with a pelletizer.

The size or shape of the pellets is not particularly limited. Nearly spherical pellets are more preferred than cylindrical pellets obtained by cutting strands vertically to the major axis of the strands, because the adhesive surfaces of the pellets are kept small, from the viewpoint of suppressing the adhesion between the pellets. Examples of a general method for producing the nearly spherical pellets include underwater cut.

The pellets of the modified conjugated diene polymer composition may contain an anti-blocking agent for the purpose of suppressing pellet blocking.

Examples of the anti-blocking agent include, but are not limited to, calcium stearate, magnesium stearate, zinc stearate, polyethylene, polypropylene, ethylenebisstearylamide, talc and amorphous silica.

The anti-blocking agent is preferably calcium stearate, polyethylene, polypropylene and ethylenebisstearylamide from the viewpoint of improving the transparency of the resulting modified conjugated diene polymer composition, the multilayered article and the molded article including the multilayered article. The anti-blocking agent is preferably calcium stearate, polyethylene and polypropylene from the viewpoint of improving the thermal fusion properties of the modified conjugated diene polymer composition to a polar resin.

The amount of the anti-blocking agent used is preferably 500 ppm or more and 8000 ppm or less based on the modified conjugated diene polymer composition. The amount of the anti-blocking agent used is more preferably 1000 ppm or more and 7000 ppm or less based on the modified conjugated diene polymer composition from the viewpoint of suppressing pellet blocking during long-term storage of the pellets of the modified conjugated diene polymer composition and from the viewpoint of reducing the scattering of the anti-blocking agent when the pellets of the modified conjugated diene polymer composition are used. The anti-blocking agent is preferably contained in a state attached to pellet surfaces but may be contained inside the pellets.

[Method for producing multilayered article and molded article]

The modified conjugated diene polymer and the modified conjugated diene polymer composition of the present embodiment can each be processed into a multilayered article or a practically useful molded article by a conventional method known in the art, for example, extrusion molding, injection molding, insert molding, two-color injection molding, sandwich molding, hollow molding, compression molding, vacuum molding, rotational molding, powder slush molding, foam molding, lamination molding, calendar molding and blow molding.

If necessary, processing such as foaming, powdering, drawing, adhesion, printing, painting and plating may be performed.

Such a method can produce a variety of molded articles such as sheets, films, multilayered articles, injection-molded products having various shapes, hollow-molded products, compressed air-molded products, vacuum- molded products, extrusion-molded products, foam-molded products, nonwoven fabrics, fibrous molded products and artificial leather. These molded articles can be used in automobile interior and exterior materials, building materials, toys, home electrical appliance parts, medical appliances, industrial parts, various hoses, various housings, various module cases, various power control unit parts and other sundries, etc.

In the method for producing the multilayered article of the present embodiment, the multilayered article is formed by at least one method selected from the group consisting of an injection molding method, an insert molding method, an extrusion molding method and a compression molding method.

Specifically, the method for producing the multilayered article of the present embodiment includes the step of forming a layer including the modified conjugated diene polymer composition on an already formed layer including a polar resin by use of at least one method selected from the group consisting of an injection molding method, an insert molding method, an extrusion molding method and a compression molding method. The method for producing the multilayered article of the present embodiment may include, prior to this step, the step of forming the layer including a polar resin (polar resin base material) by an arbitrary method, preferably, at least one method selected from the group consisting of an injection molding method, an insert molding method, an extrusion molding method and a compression molding method.

The multilayered article of the present embodiment is produced using the modified conjugated diene polymer composition of the present embodiment and can therefore be suitably produced by any of various methods, particularly, at least one method selected from the group consisting of an injection molding method, an insert molding method, an extrusion molding method and a compression molding method.

The multilayered article of the present embodiment may be produced not only by the production method described above but by use of a conventional method known in the art, for example, extrusion molding, injection molding (insert molding), two-color injection molding, sandwich molding, hollow molding, compression molding, vacuum molding, rotational molding, powder slush molding, foam molding, lamination molding, calendar molding and blow molding. The multilayered article in which at least one layer including the modified conjugated diene polymer composition and at least one layer including a polar resin are laminated can be obtained by use of such a method. Specifically, after formation of the layer including a polar resin, the modified conjugated diene polymer composition may be thermally fused to the layer including a polar resin to form the layer of the modified conjugated diene polymer composition.

The temperature of the modified conjugated diene polymer composition immediately before thermal fusion of the modified conjugated diene polymer composition to the layer including a polar resin is preferably equal to or higher than the glass transition temperature of the polar resin, more preferably equal to or higher than the melting point of the polar resin. The thermal fusion of the modified conjugated diene polymer composition at the temperature described above further improves the adhesiveness between the layer including a polar resin and the layer of the modified conjugated diene polymer composition. In the case of thermally fusing the modified conjugated diene polymer composition in a mold having a temperature equal to or lower than the melting point of the polar resin, as in injection molding (insert molding) or two-color injection molding, the thermal fusion is preferably performed at a temperature equal to or higher than the melting point of the modified conjugated diene polymer composition. The temperature equal to or higher than the melting point of the modified conjugated diene polymer composition facilitates the motion of a molecular chain at the interface between the modified conjugated diene polymer composition and the polar resin. As a result, the intermolecular force and/or the number of chemical bond points between the modifying group of the modified conjugated diene polymer and the polar resin is increased. Thus, the thermal fusion occurs easily even if rapid cooling is performed in the mold. The thermal fusion is preferably performed at 300°C or lower from the viewpoint of suppressing the thermal deterioration of the modified conjugated diene polymer composition.

The molded article of the present embodiment may be prepared by heat press, thermal fusion and cutting, etc. after temporal formation of the multilayered article, or may be prepared so as to have a shape of the molded article when the multilayered article is formed.

The molded article may have any shape according to various purposes such as automobile parts, industrial tools, toys, electrical and electronic equipment parts, medical appliances, building and piping member, cutleries, writing implements, robot hands, housewares, cosmetic products, industrial parts, various hoses, various housings, various module cases, various power control unit parts and medical appliances.

Among them, articles having a handle and articles required to have ease to grip or favorable texture upon touch of humans are preferred. Examples of such a molded article include industrial tools, electrical wires, connectors, handy electronic equipment, toothbrushes, shavers, pens such as ballpoint pens, touch pens and stylus pens, cutleries such as forks, knives and spoons, and automobile interior members having a grip portion. Among them, a power tool which places a large load on human bodies due to vibration when used is suitable.

Examples

Hereinafter, the present embodiment will be described in detail with reference to specific Examples and Comparative Examples. However, the present embodiment is not limited by Examples and Comparative Examples given below.

Methods for measuring and evaluating the structures of modified conjugated diene polymers and the physical properties of modified conjugated diene polymer compositions, multilayered articles of the modified conjugated diene polymer compositions and polar resins, and molded articles in Examples and Comparative Examples will be given below.

[Measurement and evaluation of structures of conjugated diene polymer and modified conjugated diene polymer and physical properties of conjugated diene polymer composition and modified conjugated diene polymer composition]

Hereinafter, a modified conjugated diene polymer and an unmodified conjugated diene polymer are collectively referred to as a conjugated diene polymer.

(1) Content of each monomer unit in conjugated diene polymer

The content of each monomer unit in an unmodified conjugated diene polymer before hydrogenation was calculated according to the following formula, and the content of each polymer block in a conjugated diene polymer was calculated.

Content of each monomer unit in an unmodified conjugated diene polymer before hydrogenation = [(Total amount of each monomer fed in steps) / (Total amount of monomers)] × 100 (% by mass)

At that time, the percentage of polymerization of a butadiene monomer and a styrene monomer were confirmed to be 100% on a step basis of each polymerization process for the conjugated diene polymer, as follows.

Approximately 20 mL of a polymer solution sampled at each step of the polymerization process was injected to a 100 mL bottle containing 0.50 mL of n-propylbenzene and approximately 20 mL of toluene for use as internal standards to prepare a sample. Each sample was measured using gas chromatography (manufactured by Shimadzu Corp., GC-14B (product name)) equipped with a packed column carrying Apiezone Grease. The amount of residual monomers in the polymer solution was determined from calibration curves of the butadiene monomer and the styrene monomer obtained beforehand to confirm that the residual monomers were absent.

Temperature conditions for the measurement by gas chromatography were set to conditions involving a constant temperature of 90°C for the rate of polymerization of butadiene, and 90°C (held for 10 min) elevated to 150°C (10°C/min) for the rate of polymerization of styrene.

(2) Vinyl bond content of conjugated diene polymer before hydrogenation

The vinyl bond content of a conjugated diene polymer before hydrogenation was measured by the proton nuclear magnetic resonance ($^1$H-NMR) method using a polymer solution sampled at each step of the polymerization process for the conjugated diene polymer.

The measurement was performed under conditions given below using ECS400 (name of the product manufactured by JEOL Ltd.) as measurement equipment, deuterated chloroform as a solvent, and a sample concentration of 50 mg/mL. The vinyl bond content was calculated from the signal ratio between the 1,4-bond moiety and the 1,2-bond moiety after determination of integral values of signals attributed to the 1,4-bond moiety and the 1,2-bond moiety in the conjugated diene monomer units.

(Measurement conditions)

Observation frequency: 400 MHz
Chemical shift reference: tetramethylsilane
Pulse delay: 2.904 sec
The number of scans: 64
Pulse width: 45°
Measurement temperature: 26°C

(3) Hydrogenation rate of conjugated diene polymer

The hydrogenation rate of unsaturated bonds based on the conjugated diene monomer units of a conjugated diene polymer was measured by proton nuclear magnetic resonance ($^1$H-NMR) using an unmodified conjugated diene polymer before and after hydrogenation.

Measurement conditions and a method for processing measurement data were the same as in the preceding section (2).

The hydrogenation rate was calculated from the signal ratio between determined integral values of signals derived from double bonds from 4.5 to 5.5 ppm and signals derived from hydrogenated conjugated diene.

(4) Butylene content of conjugated diene polymer

The butylene content based on 100% by mol of total of conjugated diene monomer units in a conjugated diene polymer was measured by proton nuclear magnetic resonance ($^1$H-NMR) using an unmodified conjugated diene polymer after hydrogenation.

Measurement conditions and a method for processing measurement data were the same as in the preceding sections (2) and (3).

The butylene content based on 100% by mol of total of conjugated diene monomer units was calculated from the signal ratio between determined integral values of signals derived from all the conjugated diene monomer units in the unmodified conjugated diene polymer after hydrogenation, and signals derived from the butylene moiety (hydrogenated 1,2-bond moiety) of 0 to 2.0 ppm of the spectra.

(5) Styrene content of conjugated diene polymer

The styrene content of a modified conjugated diene polymer was calculated by measuring absorption intensity at 262 nm using a conjugated diene polymer before hydrogenation as a sample and an ultraviolet spectrophotometer (manufactured by Shimadzu Corp., UV-2450 (product name)).

The content of vinyl aromatic monomer units is known to hardly vary between before and after hydrogenation in a conjugated diene polymer. Therefore, the styrene content of the conjugated diene polymer before hydrogenation was regarded as the styrene content of the modified conjugated diene polymer. The styrene content refers to the content of styrene units corresponding to a vinyl aromatic monomer in the modified conjugated diene polymer.

(6) Content of polymer block mainly including styrene units in conjugated diene polymer (Os value)

The content of a polymer block mainly including styrene units in a conjugated diene polymer (hereinafter, also referred to as an "Os value") was measured by the osmium tetroxide degradation method described in I.M. KOLTHOFF, et al., J. Polym. Soi., 1, 429 (1946) using an unmodified conjugated diene polymer before hydrogenation.

The unmodified conjugated diene polymer before hydrogenation was degraded using a solution of 0.1 g of osmic acid in 125 mL of tertiary butanol.

(7) Weight-average molecular weight and molecular weight distribution of conjugated diene polymer

The weight-average molecular weight and molecular weight distribution of a conjugated diene polymer were measured by GPC [GPC apparatus: HLC8220 (name of the product manufactured by Tosoh Corp.), column: 4.6 mm × 30 cm TSKgel SUPER-HZM-N (name of the product manufactured by Sigma-Aldrich Co. LLC)] using an unmodified conjugated diene polymer after hydrogenation.

Tetrahydrofuran was used as a solvent.

The weight-average molecular weight was determined on the basis of a calibration curve obtained using commercially available standard polystyrene and a peak of a chromatogram.

When a chromatogram had a plurality of peaks, the molecular weight was determined as a weight-average molecular weight from a molecular weight at each peak and a compositional ratio at each peak (which is determined from the area ratio of each peak in the chromatogram).

The molecular weight distribution was calculated from the ratio of the obtained weight-average molecular weight (Mw) to a number-average molecular weight (Mn) (Mw/Mn).

(8) Amount of acid anhydride added in modified conjugated diene polymer

The amount of an acid anhydride added in a modified conjugated diene polymer was calculated by dissolving the modified conjugated diene polymer after modification with the acid anhydride in toluene, and titrating the solution with a methanol solution of sodium methoxide having a factor of 1 ± 0.05.

(9) Fluidity of conjugated diene polymer and conjugated diene polymer composition

The fluidity of a conjugated diene polymer and a conjugated diene polymer composition was measured in accordance with ISO 1133. Specifically, a melt flow rate (MFR) value at 230°C under a load of 2.16 kg was measured and evaluated according to evaluation criteria given below. A high MFR value means that the polymer or the composition is excellent in fluidity.

(Evaluation criteria)

> 5: 100 g/10 min or more
> 4: 50 g/10 min or more and less than 100 g/10 min
> 3: 30 g/10 min or more and less than 50 g/10 min
> 2: 10 g/10 min or more and less than 30 g/10 min
> 1: less than 10 g/10 min

(10) Flexibility of conjugated diene polymer and conjugated diene polymer composition

The flexibility of a conjugated diene polymer and a conjugated diene polymer composition was measured in accordance with JIS K6253. Shore A hardness was measured at a measurement temperature of 23°C for a measurement time of 10 seconds and evaluated according to evaluation criteria given below. Low Shore A hardness means that the polymer or the composition is excellent in flexibility.

(Evaluation criteria)

> 3: less than 50
> 2: 50 or more and less than 60
> 1: 60 or more

(11) Tensile modulus, 100% modulus, 300% modulus, tensile strength and breaking elongation of conjugated diene polymer composition

The tensile modulus, 100% modulus, 300% modulus, tensile strength and breaking elongation of a conjugated diene polymer composition were measured under conditions of No. 3 dumbbell and a crosshead speed of 500 mm/min in accordance with JIS K6251. The test was conducted using three or more test samples per composition, and an average value (arithmetic average) therefrom was regarded as a physical property value. The 100% modulus and the 300% modulus mean stress required for a test sample before drawing to be drawn by 100% and 300%, respectively (i.e., at draw ratios of 2 and 4, respectively).

The tensile modulus was determined from a slope in a stress-strain curve (SS curve) of a region having the proportional relation between stress and elongation immediately after measurement. Since non-deformability in a region with a small deformation volume is practically required, a larger tensile modulus and 100% modulus tend to be more preferred.

(12) Interfacial peel strength of multilayered article of conjugated diene polymer composition and polar resin

The interfacial peel strength of a multilayered article of a conjugated diene polymer composition and a polar resin was measured by the 180° peel test using a multilayered article obtained by thermally fusing the conjugated diene polymer composition to the polar resin. Specifically, a 2 mm thick flat sheet made of each polar resin was fixed in a 3 mm deep mold for injection molding (temperature of mold: 40°C). The conjugated diene polymer composition was poured into this mold by injection molding to obtain a multilayered article consisting of a 2 mm thick layer of the polar resin and a 1 mm thick layer of the conjugated diene polymer composition. A 10 mm wide slit was made on the surface on the polymer composition side of the obtained multilayered article, and the end of the layer consisting of the polymer composition was peeled by several cm. At the peel site, the layer consisting of the polymer composition and the layer consisting of the polar resin were separately fixed to chucks of a tensile tester [manufactured by MinebeaMitsumi Inc., TGE-500N (product name)]. The layer consisting of the polymer composition and the layer consisting of the polar resin were pulled at 300 mm/min in a direction of 180° to separate these two layers. The tension applied for the peel was regarded as the interfacial peel strength (N/cm) of the multilayered article of the conjugated diene polymer composition and the polar resin and evaluated according to the following evaluation criteria.

(Evaluation criteria)

4: 10 N/cm or more
3: 5 N/cm or more and less than 10 N/cm
2: 1 N/cm or more and less than 5 N/cm
1: less than 1 N/cm

(13) Interfacial peel trace of multilayered article of conjugated diene polymer composition and polar resin

After the peel test of the multilayered article of the conjugated diene polymer composition and the polar resin conducted in the preceding section "(12) Interfacial peel strength of multilayered article of conjugated diene polymer composition and polar resin", the peeled polar resin base material was visually observed. A peel trace of the modified conjugated diene polymer composition remaining on the polar resin base material was evaluated according to the following evaluation criteria.

(Evaluation criteria)

4: the peel trace remained on 90% or more of the peeled surface.
3: the peel trace remained on 50% or more and less than 90% of the peeled surface.
2: the peel trace remained on 1% or more and less than 50% of the peeled surface.
1: no peel trace

[Production of conjugated diene block copolymer]

(Preparation of hydrogenation catalyst)

A hydrogenation catalyst for use in the hydrogenation reaction of a conjugated diene polymer was prepared by the following method.
To a reaction container purged with nitrogen, 1 L of dried and purified cyclohexane was added, then 100 mmol of bis($\eta$5-cyclopentadienyl)titanium dichloride was added, and a n-hexane solution containing 200 mmol of trimethylaluminum was added with thorough stirring, followed by reaction at room temperature for approximately 3 days to obtain a hydrogenation catalyst.

[Production Example 1]

(Production of conjugated diene block copolymer (a-1))

<Step 1>

Batch polymerization was performed using a tank reactor (internal capacity: 10 L) equipped with a stirring apparatus and a jacket. To the reactor, 1 L of cyclohexane was added, then 0.13 parts by mass of n-butyllithium were added based on 100 parts by mass of all monomers, and 0.3 mol of N,N,N',N'-tetramethylethylenediamine (TMEDA) was further added per mol of n-butyllithium.
Next, a cyclohexane solution containing 16 parts by mass (based on 100 parts by mass of all monomers; hereinafter, the same holds true for this paragraph) of styrene (styrene concentration: 20% by mass) was added to the reactor, followed by polymerization at 70°C for 45 minutes. Next, a cyclohexane solution containing 68 parts by mass of butadiene (butadiene concentration: 20% by mass) was added thereto, followed by polymerization at 70°C for 1.5 hours. Finally, a cyclohexane solution containing 16 parts by mass of styrene (styrene concentration: 20% by mass) was added thereto, followed by polymerization at 70°C for 45 minutes. After the completion of reaction, methanol was added thereto to obtain a conjugated diene block copolymer in step 1.
The obtained conjugated diene block copolymer had a styrene content of 32% by mass, an Os value of 32% by mass and a vinyl bond content of 36% by mol.

<Step 2>

To the obtained conjugated diene block copolymer, the hydrogenation catalyst mentioned above was added such that a concentration based on titanium was 100 ppm based on 100 parts by mass of the conjugated diene block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer.

The obtained hydrogenated conjugated diene block copolymer (a-1) had a styrene content of 32% by mass, an Os value of 32% by mass, a butylene content of 36% by mol, a weight-average molecular weight of 82000, a molecular weight distribution of 1.2 and a hydrogenation rate of 99% by mol.

[Production Example 2]

(Production of conjugated diene block copolymer (a-2))

<Step 1>

Batch polymerization was performed using a tank reactor (internal capacity: 10 L) equipped with a stirring apparatus and a jacket. To the reactor, 1 L of cyclohexane was added, then 0.12 parts by mass of n-butyllithium were added based on 100 parts by mass of all monomers, and 0.3 mol of N,N,N',N'-tetramethylethylenediamine (TMEDA) was further added per mol of n-butyllithium.

Next, a cyclohexane solution containing 9.5 parts by mass (based on 100 parts by mass of all monomers; hereinafter, the same holds true for this paragraph) of styrene (styrene concentration: 20% by mass) was added to the reactor, followed by polymerization at 70°C for 45 minutes. Next, a cyclohexane solution containing 81 parts by mass of butadiene (butadiene concentration: 20% by mass) was added thereto, followed by polymerization at 70°C for 1.5 hours. Finally, a cyclohexane solution containing 9.5 parts by mass of styrene (styrene concentration: 20% by mass) was added thereto, followed by polymerization at 70°C for 45 minutes. After the completion of reaction, methanol was added thereto to obtain a conjugated diene block copolymer in step 1.

The obtained conjugated diene block copolymer had a styrene content of 19% by mass, an Os value of 19% by mass and a vinyl bond content of 36% by mol.

<Step 2>

To the obtained conjugated diene block copolymer, the hydrogenation catalyst mentioned above was added such that a concentration based on titanium was 100 ppm based on 100 parts by mass of the conjugated diene block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer.

The obtained hydrogenated conjugated diene block copolymer (a-2) had a styrene content of 19% by mass, an Os value of 19% by mass, a butylene content of 36% by mol, a weight-average molecular weight of 95000, a molecular weight distribution of 1.2 and a hydrogenation rate of 99% by mol.

[Production Example 3]

(Production of conjugated diene block copolymer (a-3))

<Step 1>

Batch polymerization was performed using a tank reactor (internal capacity: 10 L) equipped with a stirring apparatus and a jacket. To the reactor, 1 L of cyclohexane was added, then 0.08 parts by mass of n-butyllithium were added based on 100 parts by mass of all monomers, and 0.5 mol of TMEDA (tetramethylethylenediamine) was further added per mol of n-butyllithium.

Next, a cyclohexane solution containing 6.5 parts by mass (based on 100 parts by mass of all monomers; hereinafter, the same holds true for this paragraph) of styrene (styrene concentration: 20% by mass) was added to the reactor, followed by polymerization at 70°C for 45 minutes. Next, a cyclohexane solution containing 87 parts by mass of butadiene (butadiene concentration: 20% by mass) was added thereto, followed by polymerization at 50°C for 80 minutes.

Next, a cyclohexane solution containing 6.5 parts by mass of styrene (styrene concentration: 20% by mass) was added thereto, followed by polymerization at 70°C for 45 minutes. After the completion of reaction, methanol was added thereto to obtain a conjugated diene block copolymer.

The obtained conjugated diene block copolymer had a styrene content of 13% by mass, an Os value of 13% by mass and a vinyl bond content of 45% by mol.

<Step 2>

To the obtained conjugated diene block copolymer, the hydrogenation catalyst mentioned above was added such that a concentration based on titanium was 100 ppm based on 100 parts by mass of the conjugated diene block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer.

The obtained hydrogenated conjugated diene block copolymer (a-3) had a styrene content of 13% by mass, an Os value of 13% by mass, a butylene content of 45% by mol, a weight-average molecular weight of 80000, a molecular weight distribution of 1.2 and a hydrogenation rate of 99% by mol.

[Production Example 4]

(Production of conjugated diene block copolymer (a-4))

<Step 1>

Batch polymerization was performed using a tank reactor (internal capacity: 10 L) equipped with a stirring apparatus and a jacket. To the reactor, 1 L of cyclohexane was added, then 0.11 parts by mass of n-butyllithium were added based on 100 parts by mass of all monomers, and 1.5 mol of TMEDA (tetramethylethylenediamine) and 0.05 mol of sodium t-pentoxide were further added per mol of n-butyllithium.

Next, a cyclohexane solution containing 5 parts by mass (based on 100 parts by mass of all monomers; hereinafter, the same holds true for this paragraph) of butadiene (butadiene concentration: 20% by mass) was added to the reactor, followed by polymerization at 70°C for 20 minutes. Next, a cyclohexane solution containing 9 parts by mass of styrene (styrene concentration: 20% by mass) was added thereto, followed by polymerization at 70°C for 45 minutes. Next, a cyclohexane solution containing 77 parts by mass of butadiene (butadiene concentration: 20% by mass) was added thereto, followed by polymerization at 50°C for 80 minutes. Next, a cyclohexane solution containing 9 parts by mass of styrene (styrene concentration: 20% by mass) was added thereto, followed by polymerization at 70°C for 45 minutes. After the completion of reaction, methanol was added thereto to obtain a conjugated diene block copolymer.

The obtained conjugated diene block copolymer had a styrene content of 18% by mass, an Os value of 18% by mass and a vinyl bond content of 73% by mol.

<Step 2>

To the obtained conjugated diene block copolymer, the hydrogenation catalyst mentioned above was added such that a concentration based on titanium was 100 ppm based on 100 parts by mass of the conjugated diene block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer (a-4) without modification.

The obtained hydrogenated conjugated diene block copolymer (a-4) had a styrene content of 18% by mass, an Os value of 18% by mass, a butylene content of 73% by mol, a weight-average molecular weight of 107000, a molecular weight distribution of 1.2 and a hydrogenation rate of 99% by mol.

[Production Example 5]

(Production of conjugated diene block copolymer (a-5))

<Step 1>

Batch polymerization was performed using a tank reactor (internal capacity: 10 L) equipped with a stirring apparatus and a jacket. To the reactor, 1 L of cyclohexane was added, then 0.07 parts by mass of n-butyllithium were added based on 100 parts by mass of all monomers, and 1.8 mol of TMEDA (tetramethylethylenediamine) and 0.05 mol of sodium t-pentoxide were further added per mol of n-butyllithium.

Next, a cyclohexane solution containing 5 parts by mass (based on 100 parts by mass of all monomers; hereinafter, the same holds true for this paragraph) of butadiene (butadiene concentration: 20% by mass) was added to the reactor, followed by polymerization at 70°C for 20 minutes. Next, a cyclohexane solution containing 7 parts by mass of styrene (styrene concentration: 20% by mass) was added thereto, followed by polymerization at 70°C for 45 minutes. Next, a cyclohexane solution containing 82 parts by mass of butadiene (butadiene concentration: 20% by mass) was added thereto, followed by polymerization at 50°C for 80 minutes. Next, a cyclohexane solution containing 6 parts by mass of styrene (styrene concentration: 20% by mass) was added thereto, followed by polymerization at 70°C for 45 minutes. After the completion of reaction, methanol was added thereto to obtain a conjugated diene block copolymer.

The obtained conjugated diene block copolymer had a styrene content of 13% by mass, an Os value of 13% by mass and a vinyl bond content of 78% by mol.

<Step 2>

To the obtained conjugated diene block copolymer, the hydrogenation catalyst mentioned above was added such that a concentration based on titanium was 100 ppm based on 100 parts by mass of the block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer (a-5).

The obtained hydrogenated conjugated diene block copolymer (a-5) had a styrene content of 13% by mass, an Os value of 13% by mass, a butylene content of 78% by mol, a weight-average molecular weight of 160000, a molecular weight distribution of 1.2 and a hydrogenation rate of 99% by mol.

[Production Example 6]

(Production of conjugated diene block copolymer (a-6))

<Step 1>

Batch polymerization was performed using a tank reactor (internal capacity: 10 L) equipped with a stirring apparatus and a jacket. To the reactor, 1 L of cyclohexane was added, then 0.07 parts by mass of n-butyllithium were added based on 100 parts by mass of all monomers, and 1.8 mol of TMEDA (tetramethylethylenediamine) and 0.05 mol of sodium t-pentoxide were further added per mol of n-butyllithium.

Next, a cyclohexane solution containing 6.5 parts by mass (based on 100 parts by mass of all monomers; hereinafter, the same holds true for this paragraph) of styrene (styrene concentration: 20% by mass) was added to the reactor, followed by polymerization at 70°C for 45 minutes. Next, a cyclohexane solution containing 87 parts by mass of butadiene (butadiene concentration: 20% by mass) was added thereto, followed by polymerization at 50°C for 80 minutes. Next, a cyclohexane solution containing 6.5 parts by mass of styrene (styrene concentration: 20% by mass) was added thereto, followed by polymerization at 70°C for 45 minutes. After the completion of reaction, methanol was added thereto to obtain a conjugated diene block copolymer.

The obtained conjugated diene block copolymer had a styrene content of 13% by mass, an Os value of 13% by mass and a vinyl bond content of 78% by mol.

<Step 2>

To the obtained conjugated diene block copolymer, the hydrogenation catalyst mentioned above was added such that a concentration based on titanium was 100 ppm based on 100 parts by mass of the block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer (a-6).

The obtained hydrogenated conjugated diene block copolymer (a-6) had a styrene content of 13% by mass, an Os value of 13% by mass, a butylene content of 78% by mol, a weight-average molecular weight of 160000, a molecular weight distribution of 1.2 and a hydrogenation rate of 99% by mol.

[Production Example 7]

(Production of conjugated diene block copolymer (a-7))

<Step 1>

Batch polymerization was performed using a tank reactor (internal capacity: 10 L) equipped with a stirring apparatus and a jacket. To the reactor, 1 L of cyclohexane was added, then 0.05 parts by mass of n-butyllithium were added based on 100 parts by mass of all monomers, and 0.05 mol of TMEDA (tetramethylethylenediamine) was further added per mol of n-butyllithium.

Next, a cyclohexane solution containing 10 parts by mass (based on 100 parts by mass of all monomers; hereinafter, the same holds true for this paragraph) of butadiene (butadiene concentration: 20% by mass) was added to the reactor, followed by polymerization at 65°C for 20 minutes. Next, 1.50 mol of TMEDA and 0.05 mol of sodium t-pentoxide were added based on mol of n-butyllithium. Then, a cyclohexane solution containing 85 parts by mass of butadiene (butadiene concentration: 20% by mass) was added thereto, followed by polymerization at 60°C for 70 minutes. Next, a cyclohexane solution containing 5 parts by mass of styrene (styrene concentration: 20% by mass) was added thereto, followed by polymerization at 65°C for 15 minutes. After the completion of reaction, methanol was added thereto to obtain a conjugated diene block copolymer.

The obtained conjugated diene block copolymer had a styrene content of 5% by mass, an Os value of 5% by mass and a vinyl bond content of 78% by mol.

<Step 2>

To the obtained conjugated diene block copolymer, the hydrogenation catalyst mentioned above was added such that a concentration based on titanium was 100 ppm based on 100 parts by mass of the block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer (a-7).

The obtained hydrogenated conjugated diene block copolymer (a-7) had a styrene content of 5% by mass, an Os value of 5% by mass, a butylene content of 78% by mol, a weight-average molecular weight of 249000, a molecular weight distribution of 1.2 and a hydrogenation rate of 99% by mol.

[Production Example 8]

(Production of conjugated diene block copolymer (a-8))

<Step 1>

Batch polymerization was performed using a tank reactor (internal capacity: 10 L) equipped with a stirring apparatus and a jacket. To the reactor, 1 L of cyclohexane was added, then 0.10 parts by mass of n-butyllithium were added based on 100 parts by mass of all monomers, and 1.8 mol of TMEDA (tetramethylethylenediamine) and 0.05 mol of sodium t-pentoxide were further added per mol of n-butyllithium.

Next, a cyclohexane solution containing 5 parts by mass (based on 100 parts by mass of all monomers; hereinafter, the same holds true for this paragraph) of butadiene (butadiene concentration: 20% by mass) was added to the reactor, followed by polymerization at 70°C for 20 minutes. Next, a cyclohexane solution containing 21.5 parts by mass of styrene (styrene concentration: 20% by mass) was added thereto, followed by polymerization at 70°C for 45 minutes. Next, a cyclohexane solution containing 52 parts by mass of butadiene (butadiene concentration: 20% by mass) was added thereto, followed by polymerization at 50°C for 80 minutes. Next, a cyclohexane solution containing 21.5 parts by mass of styrene (styrene concentration: 20% by mass) was added thereto, followed by polymerization at 70°C for 45 minutes. After the completion of reaction, methanol was added thereto to obtain a conjugated diene block copolymer.

The obtained conjugated diene block copolymer had a styrene content of 43% by mass, an Os value of 43% by mass and a vinyl bond content of 78% by mol.

<Step 2>

To the obtained block copolymer, the hydrogenation catalyst mentioned above was added such that a concentration based on titanium was 100 ppm based on 100 parts by mass of the block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer (a-8).

The obtained hydrogenated conjugated diene block copolymer (a-8) had a styrene content of 43% by mass, an Os value of 43% by mass, a butylene content of 78% by mol, a weight-average molecular weight of 103000, a molecular weight distribution of 1.2 and a hydrogenation rate of 99% by mol.

[Production Example 9]

(Production of conjugated diene block copolymer (c-2))

<Step 1>

Batch polymerization was performed using a tank reactor (internal capacity: 10 L) equipped with a stirring apparatus and a jacket. To the reactor, 1 L of cyclohexane was added, then 0.085 parts by mass of n-butyllithium were added based on 100 parts by mass of all monomers, and 0.8 mol of N,N,N',N'-tetramethylethylenediamine (TMEDA) was further added per mol of n-butyllithium.

Next, a cyclohexane solution containing 20 parts by mass (based on 100 parts by mass of all monomers; hereinafter, the same holds true for this paragraph) of styrene (styrene concentration: 20% by mass) was added to the reactor, followed by polymerization at 70°C for 20 minutes. Next, a cyclohexane solution containing 3 parts by mass of butadiene (butadiene concentration: 20% by mass) was added thereto, followed by polymerization at 70°C for 5 minutes. Next, a cyclohexane solution containing 27 parts by mass of butadiene and 47 parts by mass of styrene (monomer concentration: 20% by mass) was supplied such that the reaction temperature was constant, followed by polymerization at 70°C for 45 minutes. Next, a cyclohexane solution containing 3 parts by mass of butadiene (butadiene concentration: 20% by mass) was added thereto, followed by polymerization at 70°C for 5 minutes. Finally, 0.2 mol of tetraethoxysilane was added per mol of n-butyllithium and reacted at 70°C for 30 minutes. After the completion of reaction, methanol was added thereto to obtain a conjugated diene block copolymer in step 1.

The obtained conjugated diene block copolymer had a styrene content of 67% by mass, an Os value of 20% by mass, a styrene content of 63.4% by mass in random blocks and a vinyl bond content of 20% by mol.

<Step 2>

To the obtained conjugated diene block copolymer, the hydrogenation catalyst mentioned above was added such that a concentration based on titanium was 100 ppm based on 100 parts by mass of the conjugated diene block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer.

The obtained hydrogenated conjugated diene block copolymer (c-2) had a styrene content of 67% by mass, an Os value of 20% by mass, a styrene content of 63.4% by mass in random blocks, a butylene content of 20% by mol, a weight-average molecular weight of 291000, a molecular weight distribution of 1.2 and a hydrogenation rate of 99% by mol.

[Production Example 10]

(Production of conjugated diene block copolymer (d))

<Step 1>

Batch polymerization was performed using a tank reactor (internal capacity: 10 L) equipped with a stirring apparatus and a jacket. To the reactor, 1 L of cyclohexane was added, then 0.084 parts by mass of n-butyllithium were added based on 100 parts by mass of all monomers, and 1.8 mol of N,N,N',N'-tetramethylethylenediamine (TMEDA) and 0.05 mol of sodium t-pentoxide were further added per mol of n-butyllithium.

Next, a cyclohexane solution containing 9 parts by mass (based on 100 parts by mass of all monomers; hereinafter, the same holds true for this paragraph) of styrene (styrene concentration: 20% by mass) was added to the reactor, followed by polymerization at 70°C for 20 minutes. Next, a cyclohexane solution containing 21 parts by mass of butadiene and 25 parts by mass of styrene (monomer concentration: 20% by mass) was supplied such that the reaction temperature was constant, followed by polymerization at 70°C for 45 minutes. Next, a cyclohexane solution containing 45 parts by mass of butadiene (butadiene concentration: 20% by mass) was added thereto, followed by polymerization at 60°C for 1 hour. After the completion of reaction, methanol was added thereto to obtain a conjugated diene block copolymer in step 1.

The obtained conjugated diene block copolymer had a styrene content of 34% by mass, an Os value of 9% by mass, a styrene content of 54.3% by mass in random blocks and a vinyl bond content of 77% by mol.

<Step 2>

To the obtained conjugated diene block copolymer, the hydrogenation catalyst mentioned above was added such that a concentration based on titanium was 100 ppm based on 100 parts by mass of the conjugated diene block copolymer, followed by hydrogenation reaction at a temperature of 70°C at a hydrogen pressure of 0.7 MPa.

After the completion of hydrogenation reaction, octadecyl-3-(3,5-di-t-butyl-4-hydroxyphenyl) propionate was subsequently added as a stabilizer at 0.3 parts by mass based on 100 parts by mass of the conjugated diene block copolymer to produce a hydrogenated conjugated diene block copolymer.

The obtained hydrogenated conjugated diene block copolymer (d) had a styrene content of 34% by mass, an Os value of 9% by mass, a styrene content of 54.3% by mass in random blocks, a butylene content of 77% by mol, a weight-average molecular weight of 148000, a molecular weight distribution of 1.2 and a hydrogenation rate of 99% by mol.

[Production of modified conjugated diene block copolymer]

Each modified conjugated diene polymer (modified conjugated diene block copolymer) was produced using the following materials.

Maleic anhydride (manufactured by Fuso Chemical Co., Ltd.)

Radical initiator: Perhexa 25B (manufactured by NOF Corp.)

[Production Example 11 (Comparative Example 1)]

(Production of modified conjugated diene block copolymer (aa-1))

<Step 3>

100 parts by mass of pellets of the hydrogenated conjugated diene block copolymer (a-1), 2.1 parts by mass of maleic anhydride and 0.12 parts by mass of Perhexa 25B were dry-blended. The blend was melt-kneaded in twin-screw extruder TEX30 (manufactured by The Japan Steel Works, LTD.) at a cylinder set temperature of 210°C, the number of screw rotations of 253 rpm, and a discharge rate of 5 kg/hr to produce a maleic anhydride-modified conjugated diene polymer (aa-1).

[Production Example 12 (Comparative Example 2)]

(Production of modified conjugated diene block copolymer (aa-2))

<Step 3>

A modified conjugated diene polymer (aa-2) was produced in the same manner as in Production Example 11 except that 100 parts by mass of pellets of the hydrogenated conjugated diene block copolymer (a-2), 2.1 parts by mass of maleic anhydride and 0.12 parts by mass of Perhexa 25B were used in the dry blending.

[Production Example 13(Comparative Example 3)]

(Production of modified conjugated diene block copolymer (aa-3))

<Step 3>

A modified conjugated diene polymer (aa-3) was produced in the same manner as in Production Example 11 except that the components to be dry-blended were changed to 100 parts by mass of pellets of the hydrogenated conjugated diene block copolymer (a-3), 2.1 parts by mass of maleic anhydride and 0.12 parts by mass of Perhexa 25B.

[Production Example 14 (Example 1)]

(Production of modified conjugated diene block copolymer (aa-4))

<Step 3>

A maleic anhydride-modified conjugated diene polymer (aa-4) was produced in the same manner as in Production Example 11 except that the components to be dry-blended were changed to 100 parts by mass of pellets of the hydrogenated conjugated diene block copolymer (a-4), 1.4 parts by mass of maleic anhydride and 0.08 parts by mass of Perhexa 25B.

[Production Example 15 (Example 2)]

(Production of modified conjugated diene block copolymer (aa-5))

<Step 3>

A maleic anhydride-modified conjugated diene polymer (aa-5) was produced in the same manner as in Production Example 11 except that the components to be dry-blended were changed to 100 parts by mass of pellets of the hydrogenated conjugated diene block copolymer (a-5), 1.4 parts by mass of maleic anhydride and 0.08 parts by mass of Perhexa 25B.

[Production Example 16 (Example 3)]

(Production of modified conjugated diene block copolymer (aa-6))

<Step 3>

A maleic anhydride-modified conjugated diene polymer (aa-6) was produced in the same manner as in Production Example 11 except that the components to be dry-blended were changed to 100 parts by mass of pellets of the hydrogenated conjugated diene block copolymer (a-6), 1.4 parts by mass of maleic anhydride and 0.08 parts by mass of Perhexa 25B.

[Production Example 17 (Example 4)]

(Production of modified conjugated diene block copolymer (aa-7))

<Step 3>

A maleic anhydride-modified conjugated diene polymer (aa-7) was produced in the same manner as in Production Example 11 except that the components to be dry-blended were changed to 100 parts by mass of pellets of the hydrogenated conjugated diene block copolymer (a-7), 1.4 parts by mass of maleic anhydride and 0.08 parts by mass of Perhexa 25B.

[Production Example 18 (Comparative Example 4)]

(Production of modified conjugated diene block copolymer (aa-8))

<Step 3>

A maleic anhydride-modified conjugated diene polymer (aa-8) was produced in the same manner as in Production Example 11 except that the components to be dry-blended were changed to 100 parts by mass of pellets of the hydrogenated conjugated diene block copolymer (a-8), 2.1 parts by mass of maleic anhydride and 0.12 parts by mass of Perhexa 25B.

[Production Example 19 (Example 26)]

(Production of modified conjugated diene block copolymer (aa-9))

<Step 3>

A maleic anhydride-modified conjugated diene polymer (aa-9) was produced in the same manner as in Production Example 11 except that the components to be dry-blended were changed to 100 parts by mass of pellets of the hydrogenated conjugated diene block copolymer (a-5), 3.0 parts by mass of maleic anhydride and 0.17 parts by mass of Perhexa 25B.

Table 1 shows results of measuring the physical properties and the structures of the modified conjugated diene polymers obtained in Examples 1 to 4 and 26 and Comparative Examples 1 to 4.

[Table 1]

| | Example 1 | Example 2 | Example 3 | Example 4 | Example 26 | Comparative Example 1 | Comparative Example 2 | Comparative Example 3 | Comparative Example 4 |
|---|---|---|---|---|---|---|---|---|---|
| Modified conjugated diene copolymer | aa-4 | aa-5 | aa-6 | aa-7 | aa-9 | aa-1 | aa-2 | aa-3 | aa-8 |
| Styrene content (mass%) | 18 | 13 | 13 | 5 | 13 | 32 | 19 | 13 | 43 |
| Os value (mass%) | 18 | 13 | 13 | 5 | 13 | 32 | 19 | 13 | 43 |
| Vinyl bond content (mol%) | 73 | 78 | 78 | 78 | 78 | 36 | 36 | 45 | 78 |
| Butylene content (mol%) | 73 | 78 | 78 | 78 | 78 | 36 | 36 | 45 | 78 |
| hydrogenation rate (mol%) | 99 | 99 | 99 | 99 | 99 | 99 | 99 | 99 | 99 |
| Weight-average molecular weight ($\times 10^4$) | 10.7 | 16.0 | 16.0 | 24.9 | 16.0 | 8.2 | 9.5 | 8.0 | 10.3 |
| Amount of acid anhydride added (parts by mass/100 parts by mass of polymer) | 1.0 | 0.9 | 0.9 | 0.4 | 1.2 | 1.5 | 1.5 | 1.5 | 0.4 |
| MFR(g/10min) | 18 | 10 | 4 | 9 | 13 | 4 | 6 | 2 | 7 |
| Shore A hardness | 36 | 36 | 45 | 37 | 36 | 84 | 67 | 50 | 92 |

[Production of conjugated diene polymer composition and formation of multilayered article]

Each conjugated diene polymer resin composition was produced using the following materials in the blending amounts (unit: "parts by mass") shown in [Examples 5 to 25 and 27 to 38] and [Comparative Examples 5 to 18] described in Tables 2 to 6 given below, and its multilayered article test sample with each base material was further prepared.

Conjugated diene block copolymers (a-1), (a-5) and (d): conjugated diene block copolymers produced by the methods described above

Modified conjugated diene block copolymers (aa-1) to (aa-9): modified conjugated diene block copolymers produced by the methods described above

Polyolefin resin (b-1): polypropylene PL500A (name of the product manufactured by SunAllomer Ltd.)

Polyolefin resin (b-2): polypropylene PM900C (name of the product manufactured by SunAllomer Ltd.)

Polyolefin resin (b-3): polypropylene S13B (name of the product manufactured by Prime Polymer Co., Ltd.)

Polyolefin resin (b-4): polypropylene PC630S (name of the product manufactured by SunAllomer Ltd.)

Conjugated diene block copolymer (number-average molecular weight: 150000 or higher) (c-1): styrene thermoplastic elastomer Tuftec N504 (styrene content: 32% by mass, name of the product manufactured by Asahi Kasei Corp.)

Conjugated diene block copolymer (number-average molecular weight: 150000 or higher) (c-2): conjugated diene block copolymer produced by the method described above

Softening agent (e): paraffin oil PW-90 (name of the product manufactured by Idemitsu Kosan Co., Ltd.)

Stabilizer (f): Irgafos 168 (name of the product manufactured by BASF Japan Ltd.)

Filler (g): calcium carbonate Whiton SB (name of the product manufactured by Shiraishi Calcium Kaisha, Ltd.)

Polyamide resin: nylon 66 Leona 1300S (name of the product manufactured by Asahi Kasei Corp.), glass fiber-reinforced nylon 66 Leona 1300G (name of the product manufactured by Asahi Kasei Corp.), nylon 6 UBE nylon 1015B (name of the product manufactured by Ube Industries, Ltd.) and glass fiber-reinforced nylon 6 Zytel 73G30L (name of the product manufactured by DuPont Japan)

Polyphenylene sulfide resin: polyphenylene sulfide Torelina M2888 (name of the product manufactured by Toray Industries, Inc.) and glass fiber-reinforced polyphenylene sulfide Torelina A604 (name of the product manufactured by Toray Industries, Inc.)

Polycarbonate resin: polycarbonate resin sheet PC1600 (name of the product manufactured by C.I. TAKIRON Corp.)

ABS resin: ABS Toughace R EAR-003 (name of the product manufactured by Sumitomo Bakelite Co., Ltd.)

Polymethyl methacrylate resin: polymethyl methacrylate Delpet 80N (name of the product manufactured by Asahi Kasei Corp.)

A base material made of each polar resin was prepared as an adherend (polar resin base material) of the multilayered article test sample by injection molding using a 150 mm × 100 mm × 2 mm (length × width × thickness) mold.

[Example 5-7]

The modified conjugated diene block copolymer (aa-4), the polyolefin resin (b-1), the conjugated diene block copolymer (c-1) impregnated with the softening agent (e) in advance, and the stabilizer (f) were dry-blended. The blend was melt-kneaded using twin-screw extruder TEX-30αII (name of the product manufactured by The Japan Steel Works, LTD., cylinder bore: 30 mm) at a cylinder set temperature of 220°C, the number of screw rotations of 253 rpm and a discharge rate of 5 kg/hr to obtain a modified conjugated diene block copolymer composition.

Then, a 2 mm thick base material made of each polar resin was fixed in a 150 mm × 100 mm × 3 mm (length × width × thickness) mold. The modified conjugated diene block copolymer composition was poured into the mold by injection molding at a cylinder set temperature of 280°C and a mold set temperature of 40°C to obtain a multilayered article consisting of a 2 mm thick layer of the polar resin and a 1 mm thick layer of the modified conjugated diene block copolymer composition.

[Example 8]

A modified conjugated diene block copolymer composition and a multilayered article were obtained in the same manner as in Example 5 except that the modified conjugated diene block copolymer (aa-5) was used as the modified conjugated diene block copolymer.

[Example 9]

A modified conjugated diene block copolymer composition and a multilayered article were obtained in the same manner as in Example 8 except that the cylinder set temperature of the injection molding machine in the preparation of the multilayered article was set to 270°C.

[Example 10]

A modified conjugated diene block copolymer composition and a multilayered article were obtained in the same manner as in Example 8 except that the cylinder set temperature of the injection molding machine in the preparation of the multilayered article was set to 260°C.

[Example 11]

A modified conjugated diene block copolymer composition and a multilayered article were obtained in the same manner as in Example 6 except that the modified conjugated diene block copolymer (aa-5) was used as the modified conjugated diene block copolymer.

[Example 12]

A modified conjugated diene block copolymer composition and a multilayered article were obtained in the same manner as in Example 7 except that the modified conjugated diene block copolymer (aa-5) was used as the modified conjugated diene block copolymer.

[Example 13]

A modified conjugated diene block copolymer composition and a multilayered article were obtained in the same manner as in Example 5 except that the modified conjugated diene block copolymer (aa-6) was used as the modified conjugated diene block copolymer.

[Example 14]

A modified conjugated diene block copolymer composition and a multilayered article were obtained in the same manner as in Example 5 except that the modified conjugated diene block copolymer (aa-7) was used as the modified conjugated diene block copolymer.

[Example 15]

The modified conjugated diene block copolymer (aa-5), the polyolefin resin (b-1), the conjugated diene block copolymers (c-1) and (c-2) impregnated with the softening agent (e) in advance, and the stabilizer (f) were dry-blended. The blend was melt-kneaded using twin-screw extruder TEX-30αII (name of the product manufactured by The Japan Steel Works, LTD., cylinder bore: 30 mm) at a cylinder set temperature of 220°C, the number of screw rotations of 253 rpm and a discharge rate of 5 kg/hr to obtain a modified conjugated diene block copolymer composition.
Then, a 2 mm thick base material made of each polar resin was fixed in a 150 mm × 100 mm × 3 mm (length × width × thickness) mold. The modified conjugated diene block copolymer composition was poured into the mold by injection molding at a cylinder set temperature of 280°C and a mold set temperature of 40°C to obtain a multilayered article consisting of a 2 mm thick layer of the polar resin and a 1 mm thick layer of the modified conjugated diene block copolymer composition.

[Example 16]

The modified conjugated diene block copolymer (aa-5), the polyolefin resin (b-1), the conjugated diene block copolymers (c-1) and (c-2) impregnated with the softening agent (e) in advance, the conjugated diene block copolymer (d), and the stabilizer (f) were dry-blended. The blend was melt-kneaded using twin-screw extruder TEX-30αII (name of the product manufactured by The Japan Steel Works, LTD., cylinder bore: 30 mm) at a cylinder set temperature of 220°C, the number of screw rotations of 253 rpm and a discharge rate of 5 kg/hr to obtain a modified conjugated diene block copolymer composition.
Then, a 2 mm thick base material made of each polar resin was fixed in a 150 mm × 100 mm × 3 mm (length × width × thickness) mold. The modified conjugated diene block copolymer composition was poured into the mold by injection molding at a cylinder set temperature of 280°C and a mold set temperature of 40°C to obtain a multilayered article consisting of a 2 mm thick layer of the polar resin and a 1 mm thick layer of the modified conjugated diene block copolymer composition.

[Example 17]

The modified conjugated diene block copolymer (aa-5), the polyolefin resin (b-1), the conjugated diene block copolymer (c-1) impregnated with the softening agent (e) in advance, the stabilizer (f), and the filler (g) were dry-blended. The blend was melt-kneaded using twin-screw extruder TEX-30αII (name of the product manufactured by The Japan Steel Works, LTD., cylinder bore: 30 mm) at a cylinder set temperature of 220°C, the number of screw rotations of 253 rpm and a discharge rate of 5 kg/hr to obtain a modified conjugated diene block copolymer composition.
Then, a 2 mm thick base material made of each polar resin was fixed in a 150 mm × 100 mm × 3 mm (length × width × thickness) mold. The modified conjugated diene block copolymer composition was injection-molded in the mold at a cylinder set temperature of 280°C and a mold set temperature of 40°C to obtain a multilayered article consisting of a 2 mm thick layer of the polar resin and a 1 mm thick layer of the modified conjugated diene block copolymer composition.

[Example 18]

A modified conjugated diene block copolymer composition and a multilayered article were obtained in the same manner as in Example 5 except that the polyolefin resin (b-2) was used as the polyolefin resin.

[Example 19]

A modified conjugated diene block copolymer composition and a multilayered article were obtained in the same manner as in Example 5 except that the polyolefin resin (b-3) was used as the polyolefin resin.

[Example 20]

A modified conjugated diene block copolymer composition and a multilayered article were obtained in the same manner as in Example 17 except that the polyolefin resin (b-3) was used as the polyolefin resin.

[Example 21]

A modified conjugated diene block copolymer composition and a multilayered article were obtained in the same manner as in Example 19 except that the blending amounts of the conjugated diene block copolymer (c-1) and the softening agent (e) were changed.

[Example 22]

A modified conjugated diene block copolymer composition and a multilayered article were obtained in the same manner as in Example 8 except that the polyolefin resin (b-4) was used as the polyolefin resin.

[Example 23]

A modified conjugated diene block copolymer composition was obtained in the same manner as in Example 8. Then, a multilayered article was obtained in the same manner as in Example 8 except that the polar resins described in Table 6 were used in obtaining the multilayered article consisting of the layer of the polar resin and the layer of the modified conjugated diene block copolymer composition.
In Table 6, "PPS" means polyphenylene sulfide resin, "PC" means polycarbonate resin, "ABS" means ABS resin, and "PMMA" means polymethyl methacrylate resin.

[Example 24]

A modified conjugated diene block copolymer composition was obtained in the same manner as in Example 22. Then, a multilayered article was obtained in the same manner as in Example 22 except that the polar resins described in Table 6 were used in obtaining the multilayered article consisting of the layer of the polar resin and the layer of the modified conjugated diene block copolymer composition.

[Example 25]

The modified conjugated diene block copolymer (aa-5) and the polyolefin resin (b-2) were dry-blended. The blend was melt-kneaded using twin-screw extruder TEX-30αII (name of the product manufactured by The Japan Steel Works, LTD., cylinder bore: 30 mm) at a cylinder set temperature of 220°C, the number of screw rotations of 253 rpm and a discharge rate of 5 kg/hr to obtain a modified conjugated diene block copolymer composition.

Then, a 2 mm thick base material made of each polar resin was fixed in a 150 mm × 100 mm × 3 mm (length × width × thickness) mold. The modified conjugated diene block copolymer composition was poured into the mold by injection molding at a cylinder set temperature of 280°C and a mold set temperature of 40°C to obtain a multilayered article consisting of a 2 mm thick layer of the polar resin and a 1 mm thick layer of the modified conjugated diene block copolymer composition.

[Example 27]

A modified conjugated diene block copolymer composition and a multilayered article were obtained in the same manner as in Example 5 except that the modified conjugated diene block copolymer (aa-9) was used as the modified conjugated diene block copolymer.

[Example 28]

A modified conjugated diene block copolymer composition and a multilayered article were obtained in the same manner as in Example 7 except that the modified conjugated diene block copolymer (aa-9) was used as the modified conjugated diene block copolymer.

[Example 29]

The modified conjugated diene block copolymer (aa-5), the conjugated diene block copolymer (a-5), the polyolefin resin (b-1), the conjugated diene block copolymer (c-1) impregnated with the softening agent (e) in advance, and the stabilizer (f) were dry-blended. The blend was melt-kneaded using twin-screw extruder TEX-30αII (name of the product manufactured by The Japan Steel Works, LTD., cylinder bore: 30 mm) at a cylinder set temperature of 220°C, the number of screw rotations of 253 rpm and a discharge rate of 5 kg/hr to obtain a modified conjugated diene block copolymer composition.

Then, a 2 mm thick base material made of each polar resin was fixed in a 150 mm × 100 mm × 3 mm (length × width × thickness) mold. The modified conjugated diene block copolymer composition was poured into the mold by injection molding at a cylinder set temperature of 280°C and a mold set temperature of 40°C to obtain a multilayered article consisting of a 2 mm thick layer of the polar resin and a 1 mm thick layer of the modified conjugated diene block copolymer composition.

[Example 30]

A modified conjugated diene block copolymer composition and a multilayered article were obtained in the same manner as in Example 15 except that the amount of each component blended was changed.

[Example 31]

A modified conjugated diene block copolymer composition and a multilayered article were obtained in the same manner as in Example 15 except that the amount of each component blended was changed.

[Example 32]

A modified conjugated diene block copolymer composition and a multilayered article were obtained in the same manner as in Example 15 except that the amount of each component blended was changed.

[Example 33]

A modified conjugated diene block copolymer composition and a multilayered article were obtained in the same manner as in Example 15 except that the amount of each component blended was changed.

[Example 34]

A modified conjugated diene block copolymer composition and a multilayered article were obtained in the same manner as in Example 5 except that the modified conjugated diene block copolymer (aa-5) was used as the modified conjugated diene block copolymer and the conjugated diene block copolymer (c-2) was used as the conjugated diene block copolymer.

[Example 35]

A modified conjugated diene block copolymer composition and a multilayered article were obtained in the same manner as in Example 8 except that the amount of the softening agent (e) blended was changed.

[Example 36]

A modified conjugated diene block copolymer composition and a multilayered article were obtained in the same manner as in Example 15 except that the amount of each component blended was changed.

[Example 37]

A modified conjugated diene block copolymer composition and a multilayered article were obtained in the same manner as in Example 15 except that the amount of each component blended was changed.

[Example 38]

A modified conjugated diene block copolymer composition and a multilayered article were obtained in the same manner as in Example 34 except that the amount of the softening agent (e) blended was changed.

[Comparative Example 5]

The polyolefin resin (b-1), the conjugated diene block copolymer (c-1) impregnated with the softening agent (e) in advance, and the stabilizer (f) were dry-blended. The blend was melt-kneaded using twin-screw extruder TEX-30αII (name of the product manufactured by The Japan Steel Works, LTD., cylinder bore: 30 mm) at a cylinder set temperature of 220°C, the number of screw rotations of 253 rpm and a discharge rate of 5 kg/hr to obtain a modified conjugated diene block copolymer composition.

Then, a 2 mm thick base material made of each polar resin was fixed in a 150 mm × 100 mm × 3 mm (length × width × thickness) mold. The modified conjugated diene block copolymer composition was poured into the mold by injection molding at a cylinder set temperature of 280°C and a mold set temperature of 40°C to obtain a multilayered article consisting of a 2 mm thick layer of the polar resin and a 1 mm thick layer of the modified conjugated diene block copolymer composition.

[Comparative Example 6]

A conjugated diene block copolymer composition and a multilayered article were obtained in the same manner as in Example 5 except that the conjugated diene block copolymer (a-1) was used instead of the modified conjugated diene block copolymer (aa-4).

[Comparative Example 7]

A conjugated diene block copolymer composition and a multilayered article were obtained in the same manner as in Example 17 except that the conjugated diene block copolymer (a-1) was used instead of the modified conjugated diene block copolymer (aa-5).

[Comparative Example 8]

A conjugated diene block copolymer composition and a multilayered article were obtained in the same manner as in Example 5 except that the conjugated diene block copolymer (a-5) was used instead of the modified conjugated diene block copolymer (aa-4).

[Comparative Example 9]

A modified conjugated diene block copolymer composition and a multilayered article were obtained in the same manner as in Example 5 except that the modified conjugated diene block copolymer (aa-1) was used as the modified conjugated diene block copolymer.

[Comparative Example 10]

A modified conjugated diene block copolymer composition and a multilayered article were obtained in the same manner as in Example 17 except that the modified conjugated diene block copolymer (aa-1) was used as the modified conjugated diene block copolymer.

[Comparative Example 11]

A modified conjugated diene block copolymer composition and a multilayered article were obtained in the same manner as in Example 19 except that the modified conjugated diene block copolymer (aa-1) was used as the modified conjugated diene block copolymer.

[Comparative Example 12]

A modified conjugated diene block copolymer composition and a multilayered article were obtained in the same manner as in Example 20 except that the modified conjugated diene block copolymer (aa-1) was used as the modified conjugated diene block copolymer.

[Comparative Example 13]

A modified conjugated diene block copolymer composition and a multilayered article were obtained in the same manner as in Example 5 except that the modified conjugated diene block copolymer (aa-2) was used as the modified conjugated diene block copolymer.

[Comparative Example 14]

A modified conjugated diene block copolymer composition and a multilayered article were obtained in the same manner as in Example 5 except that the modified conjugated diene block copolymer (aa-11) was used as the modified conjugated diene block copolymer.

[Comparative Example 15]

A modified conjugated diene block copolymer composition and a multilayered article were obtained in the same manner as in Example 5 except that the modified conjugated diene block copolymer (aa-8) was used as the modified conjugated diene block copolymer.

[Comparative Example 16]

A modified conjugated diene block copolymer composition was obtained in the same manner as in Comparative Example 9. Then, a multilayered article was obtained in the same manner as in Comparative Example 9 except that the polar resins described in Table 6 were used in obtaining the multilayered article consisting of the layer of the polar resin and the layer of the modified conjugated diene block copolymer composition.

[Comparative Example 17]

A modified conjugated diene block copolymer composition and a multilayered article were obtained in the same manner as in Example 25 except that the modified conjugated diene block copolymer (aa-1) was used as the modified conjugated diene block copolymer.

[Comparative Example 18]

A modified conjugated diene block copolymer composition and a multilayered article were obtained in the same manner as in Example 34 except that the modified conjugated diene block copolymer (aa-1) was used as the modified conjugated diene block copolymer.

Tables 2 to 6 show the structures and physical properties of the conjugated diene polymer compositions obtained in Examples 5 to 25 and 27 to 38 and Comparative Examples 5 to 18, and measurement values and evaluation results of the physical properties of the multilayered articles obtained in Examples 5 to 25 and 27 to 38 and Comparative Examples 5 to 18.

[Table 2]

| | | Example 5 | Example 6 | Example 7 | Example 8 | Example 9 | Example 10 | Example 11 | Example 12 | Example 13 | Example 14 |
|---|---|---|---|---|---|---|---|---|---|---|---|
| Conjugated diene block co-polymer | a-1 | - | - | - | - | - | - | - | - | - | - |
| | a-5 | - | - | - | - | - | - | - | - | - | - |
| | aa-1 | - | - | - | - | - | - | - | - | - | - |
| | aa-2 | - | - | - | - | - | - | - | - | - | - |
| | aa-3 | - | - | - | - | - | - | - | - | - | - |
| | aa-4 | 130 | 100 | 75 | - | - | - | - | - | - | - |
| | aa-5 | - | - | - | 130 | 130 | 130 | 100 | 75 | - | - |
| | aa-6 | - | - | - | - | - | - | - | - | 130 | - |
| | aa-7 | - | - | - | - | - | - | - | - | - | 130 |
| | aa-8 | - | - | - | - | - | - | - | - | - | - |
| | aa-9 | - | - | - | - | - | - | - | - | - | - |
| Polyolefin resin | b-1 | 55 | 55 | 55 | 55 | 55 | 55 | 55 | 55 | 55 | 55 |
| | b-2 | - | - | - | - | - | - | - | - | - | - |
| | b-3 | - | - | - | - | - | - | - | - | - | - |
| | b-4 | - | - | - | - | - | - | - | - | - | - |
| Conjugated diene block copolymer | c-1 | 100 | 100 | 100 | 100 | 100 | 100 | 100 | 100 | 100 | 100 |
| | c-2 | - | - | - | - | - | - | - | - | - | - |
| Conjugated diene block copolymer | d | - | - | - | - | - | - | - | - | - | - |
| Softening agent | e | 150 | 150 | 150 | 150 | 150 | 150 | 150 | 150 | 150 | 150 |
| Stabilizer | f | 0.2 | 0.2 | 0.2 | 0.2 | 0.2 | 0.2 | 0.2 | 0.2 | 0.2 | 0.2 |
| Filler | g | - | - | - | - | - | - | - | - | - | - |
| MFR | g/10min | 60 | 54 | 45 | 53 | 53 | 53 | 47 | 38 | 31 | 27 |
| Shore A hardness | - | 45 | 48 | 51 | 44 | 44 | 44 | 48 | 51 | 48 | 42 |
| Tensile modulus | MPa | 4.2 | 5.5 | 6.2 | 3.6 | 3.6 | 3.6 | 5.1 | 5.7 | 4.0 | 3.2 |

(continued)

| | | Example 5 | Example 6 | Example 7 | Example 8 | Example 9 | Example 10 | Example 11 | Example 12 | Example 13 | Example 14 |
|---|---|---|---|---|---|---|---|---|---|---|---|
| 100% modulus | MPa | 1.2 | 1.5 | 1.6 | 1.1 | 1.1 | 1.1 | 1.4 | 1.5 | 1.1 | 1.0 |
| 300% modulus | MPa | 2.0 | 2.2 | 2.5 | 1.8 | 1.8 | 1.8 | 2.0 | 2.2 | 2.0 | 1.6 |
| Tensile breaking strength | MPa | 3.0 | 3.1 | 3.3 | 2.9 | 2.9 | 2.9 | 2.9 | 2.7 | 3.0 | 2.8 |
| Tensile breaking elongation | % | 650 | 570 | 550 | 690 | 690 | 690 | 600 | 570 | 670 | 750 |
| Adhesive sample molding temperature | °C | 280 | 280 | 280 | 280 | 270 | 260 | 280 | 280 | 280 | 280 |
| Peel strength (nylon 66 base material) | N/cm | 10 | 9 | 2 | 12 | 10 | 5 | 11 | 2 | 10 | 6 |
| Peel strength (glass fiber-reinforced nylon 66 base material) | N/cm | 4 | 4 | 1 | 4 | 4 | 2 | 4 | 1 | 4 | 1 |
| Peel strength (nylon 6 base material) | N/cm | 8 | 8 | 2 | 10 | 12 | 3 | 11 | 2 | 9 | 6 |
| Peel strength (glass fiber-reinforced nylon 6 base material) | N/cm | 5 | 5 | 1 | 6 | 4 | 2 | 7 | 1 | 5 | 6 |
| Fluidity | Evaluation | 4 | 4 | 3 | 4 | 4 | 4 | 3 | 3 | 3 | 2 |
| Flexibility | Evaluation | 3 | 3 | 2 | 3 | 3 | 3 | 3 | 2 | 3 | 3 |
| Peel strength (nylon 66 base material) | Evaluation | 4 | 3 | 2 | 4 | 3 | 3 | 4 | 2 | 4 | 3 |
| Peel strength (glass fiber-reinforced nylon 66 base material) | Evaluation | 2 | 2 | 2 | 2 | 2 | 2 | 2 | 2 | 2 | 2 |
| Peel strength (nylon 6 base material) | Evaluation | 3 | 3 | 2 | 3 | 4 | 2 | 4 | 2 | 3 | 3 |
| Peel strength (glass fiber-reinforced nylon 6 base material) | Evaluation | 3 | 3 | 2 | 3 | 2 | 2 | 3 | 2 | 3 | 3 |

(continued)

|  |  | Example 5 | Example 6 | Example 7 | Example 8 | Example 9 | Example 10 | Example 11 | Example 12 | Example 13 | Example 14 |
|---|---|---|---|---|---|---|---|---|---|---|---|
| Peel trace (nylon 66 base material) | Evaluation | 1 | 1 | 1 | 1 | 1 | 1 | 1 | 1 | 1 | 1 |
| Peel trace (glass fiber-reinforced nylon 66 base material) | Evaluation | 1 | 1 | 1 | 1 | 1 | 1 | 1 | 1 | 1 | 1 |
| Peel trace (nylon 6 base material) | Evaluation | 1 | 1 | 1 | 1 | 1 | 1 | 1 | 1 | 1 | 1 |
| Peel trace (glass fiber-reinforced nylon 6 base material) | Evaluation | 1 | 1 | 1 | 1 | 1 | 1 | 1 | 1 | 1 | 1 |

[Table 3]

| | | Example 15 | Example 16 | Example 17 | Example 18 | Example 19 | Example 20 | Example 21 | Example 22 | Example 27 | Example 28 |
|---|---|---|---|---|---|---|---|---|---|---|---|
| Conjugated diene block co-polymer | a-1 | - | - | - | - | - | - | - | - | - | - |
| | a-5 | - | - | - | - | - | - | - | - | - | - |
| | aa-1 | - | - | - | - | - | - | - | - | - | - |
| | aa-2 | - | - | - | - | - | - | - | - | - | - |
| | aa-3 | - | - | - | - | - | - | - | - | - | - |
| | aa-4 | - | - | - | - | - | - | - | - | - | - |
| | aa-5 | 130 | 130 | 130 | 130 | 130 | 130 | 130 | 130 | - | - |
| | aa-6 | - | - | - | - | - | - | - | - | - | - |
| | aa-7 | - | - | - | - | - | - | - | - | - | - |
| | aa-8 | - | - | - | - | - | - | - | - | - | - |
| | aa-9 | - | - | - | - | - | - | - | - | 130 | 75 |
| Polyolefin resin | b-1 | 55 | 55 | 55 | - | - | - | - | - | 55 | 55 |
| | b-2 | - | - | - | 55 | - | - | - | - | - | - |
| | b-3 | - | - | - | - | 55 | 55 | 55 | - | - | - |
| | b-4 | - | - | - | - | - | - | - | 55 | - | - |
| Conjugated diene block copolymer | c-1 | 50 | 50 | 100 | 100 | 100 | 100 | 90 | 100 | 100 | 100 |
| | c-2 | 50 | 40 | - | - | - | - | - | - | - | - |
| Conjugated diene block copolymer | d | - | 10 | - | - | - | - | - | - | - | - |
| Softening agent | e | 150 | 150 | 150 | 150 | 150 | 150 | 200 | 150 | 150 | 150 |
| Stabilizer | f | 0.2 | 0.2 | 0.2 | 0.2 | 0.2 | 0.2 | 0.2 | 0.2 | 0.2 | 0.2 |
| Filler | g | - | - | 170 | - | - | 170 | - | - | - | - |
| MFR | g/10 min | 64 | 71 | 26 | 51 | 92 | 127 | 110 | 61 | 49 | 42 |
| Hardness | - | 42 | 39 | 51 | 43 | 40 | 49 | 35 | 43 | 46 | 51 |

(continued)

| | | Example 15 | Example 16 | Example 17 | Example 18 | Example 19 | Example 20 | Example 21 | Example 22 | Example 27 | Example 28 |
|---|---|---|---|---|---|---|---|---|---|---|---|
| Tensile modulus | MPa | 3.6 | 3.3 | 3.1 | 4.2 | 4.4 | 5.3 | 2.6 | 3.3 | 4.9 | 5.4 |
| 100% modulus | MPa | 1.1 | 1.0 | 1.8 | 1.2 | 1.1 | 1.4 | 0.7 | 1.2 | 1.3 | 1.3 |
| 300% modulus | MPa | 1.8 | 1.5 | 2.3 | 1.8 | 1.6 | 1.8 | 1.1 | 1.9 | 1.9 | 1.9 |
| Tensile breaking strength | MPa | 2.0 | 1.5 | 4.0 | 2.7 | 3.4 | 2.0 | 2.8 | 2.7 | 2.0 | 1.9 |
| Tensile breaking elongation | % | 450 | 440 | 730 | 663 | 750 | 510 | 843 | 578 | 527 | 403 |
| Adhesive sample molding temperature | °C | 280 | 280 | 280 | 280 | 280 | 280 | 280 | 280 | 280 | 280 |
| Peel strength (nylon 66 base material) | N/cm | 9 | 9 | 7 | 11 | 9 | 19 | 8 | 12 | 17 | 14 |
| Peel strength (glass fiber-reinforced nylon 66 base material) | N/cm | 5 | 5 | 2 | 5 | 7 | 8 | 8 | 1 | 13 | 12 |
| Peel strength (nylon 6 base material) | N/cm | 9 | 11 | 15 | 10 | 9 | 19 | 9 | 11 | 15 | 12 |
| Peel strength (glass fiber-reinforced nylon 6 base material) | N/cm | 6 | 8 | 2 | 12 | 10 | 12 | 9 | 8 | 4 | 2 |
| Fluidity | Evaluation | 4 | 4 | 2 | 4 | 4 | 5 | 5 | 4 | 3 | 3 |
| Flexibility | Evaluation | 3 | 3 | 2 | 3 | 3 | 3 | 3 | 3 | 3 | 2 |
| Peel strength (nylon 66 base material) | Evaluation | 3 | 3 | 3 | 4 | 3 | 4 | 3 | 4 | 4 | 4 |
| Peel strength (glass fiber-reinforced nylon 66 base material) | Evaluation | 3 | 3 | 2 | 3 | 3 | 3 | 3 | 2 | 4 | 4 |
| Peel strength (nylon 6 base material) | Evaluation | 3 | 4 | 4 | 3 | 3 | 4 | 3 | 4 | 4 | 4 |

(continued)

| | | Example 15 | Example 16 | Example 17 | Example 18 | Example 19 | Example 20 | Example 21 | Example 22 | Example 27 | Example 28 |
|---|---|---|---|---|---|---|---|---|---|---|---|
| Peel strength (glass fiber-reinforced nylon 6 base material) | Evaluation | 3 | 3 | 2 | 4 | 4 | 4 | 3 | 3 | 2 | 2 |
| Peel trace (nylon 66 base material) | Evaluation | 1 | 1 | 1 | 1 | 1 | 1 | 1 | 1 | 1 | 1 |
| Peel trace (glass fiber-reinforced nylon 66 base material) | Evaluation | 1 | 1 | 1 | 1 | 1 | 1 | 1 | 1 | 1 | 1 |
| Peel trace (nylon 6 base material) | Evaluation | 1 | 1 | 1 | 1 | 1 | 1 | 1 | 1 | 1 | 1 |
| Peel trace (glass fiber-reinforced nylon 6 base material) | Evaluation | 1 | 1 | 1 | 1 | 1 | 1 | 1 | 1 | 1 | 1 |

[Table 4]

| | | Example 29 | Example 30 | Example 31 | Example 32 | Example 33 | Example 34 | Example 35 | Example 36 | Example 37 | Example 38 |
|---|---|---|---|---|---|---|---|---|---|---|---|
| Conjugated diene block co-polymer | a-1 | - | - | - | - | - | - | - | - | - | - |
| | a-5 | 55 | - | - | - | - | - | - | - | - | - |
| | aa-1 | - | - | - | - | - | - | - | - | - | - |
| | aa-2 | - | - | - | - | - | - | - | - | - | - |
| | aa-3 | - | - | - | - | - | - | - | - | - | - |
| | aa-4 | - | - | - | - | - | - | - | - | - | - |
| | aa-5 | 75 | 75 | 130 | 130 | 130 | 130 | 130 | 130 | 130 | 130 |
| | aa-6 | - | - | - | - | - | - | - | - | - | - |
| | aa-7 | - | - | - | - | - | - | - | - | - | - |
| | aa-8 | - | - | - | - | - | - | - | - | - | - |
| | aa-9 | - | - | - | - | - | - | - | - | - | - |
| Polyolefin resin | b-1 | 55 | 55 | 55 | 55 | 55 | 55 | 55 | 55 | 55 | 55 |
| | b-2 | - | - | - | - | - | - | - | - | - | - |
| | b-3 | - | - | - | - | - | - | - | - | - | - |
| | b-4 | - | - | - | - | - | - | - | - | - | - |
| Conjugated diene block copolymer | c-1 | 100 | 100 | 100 | 50 | 25 | - | 100 | 50 | 25 | - |
| | c-2 | - | 55 | 55 | 50 | 75 | 100 | - | 50 | 75 | 100 |
| Conjugated diene block copolymer | d | - | - | - | - | - | - | - | - | - | - |
| Softening agent | e | 150 | 150 | 150 | 150 | 150 | 150 | 100 | 100 | 100 | 100 |
| Stabilizer | f | 0.2 | 0.2 | 0.2 | 0.2 | 0.2 | 0.2 | 0.2 | 0.2 | 0.2 | 0.2 |
| Filler | g | - | - | - | - | - | - | - | - | - | - |
| MFR | g/10 min | 38 | 13 | 16 | 65 | 84 | 99 | 16 | 22 | 32 | 49 |
| Hardness | - | 45 | 51 | 47 | 44 | 40 | 40 | 53 | 51 | 49 | 48 |

(continued)

| | | Example 29 | Example 30 | Example 31 | Example 32 | Example 33 | Example 34 | Example 35 | Example 36 | Example 37 | Example 38 |
|---|---|---|---|---|---|---|---|---|---|---|---|
| Tensile modulus | MPa | 4.3 | 5.3 | 4.3 | 3.9 | 4.6 | 4.2 | 6.8 | 6.6 | 5.3 | 6.2 |
| 100% modulus | MPa | 1.1 | 1.5 | 1.3 | 1.2 | 1.3 | 1.2 | 1.6 | 1.7 | 1.5 | 1.7 |
| 300% modulus | MPa | 1.8 | 2.3 | 2.2 | 1.9 | 2.0 | 1.8 | 2.5 | 2.7 | 2.5 | 2.6 |
| Tensile breaking strength | MPa | 2.3 | 2.8 | 2.5 | 1.8 | 1.9 | 1.6 | 3.1 | 2.9 | 2.6 | 2.6 |
| Tensile breaking elongation | % | 557 | 490 | 493 | 440 | 408 | 368 | 595 | 483 | 435 | 418 |
| Adhesive sample molding temperature | °C | 280 | 280 | 280 | 280 | 280 | 280 | 280 | 280 | 280 | 280 |
| Peel strength (nylon 66 base material) | N/cm | 16 | 1 | 14 | 15 | 16 | 17 | 4 | 9 | 14 | 17 |
| Peel strength (glass fiber-reinforced nylon 66 base material) | N/cm | 9 | 1 | 10 | 13 | 10 | 17 | 3 | 1 | 3 | 12 |
| Peel strength (nylon 6 base material) | N/cm | 15 | 2 | 16 | 16 | 17 | 16 | 4 | 19 | 13 | 21 |
| Peel strength (glass fiber-reinforced nylon 6 base material) | N/cm | 4 | 1 | 14 | 16 | 19 | 17 | 2 | 3 | 5 | 18 |
| Fluidity | Evaluation | 3 | 2 | 2 | 4 | 4 | 4 | 2 | 2 | 3 | 3 |
| Flexibility | Evaluation | 3 | 2 | 3 | 3 | 3 | 3 | 2 | 2 | 3 | 3 |
| Peel strength (nylon 66 base material) | Evaluation | 4 | 2 | 4 | 4 | 4 | 4 | 2 | 3 | 4 | 4 |
| Peel strength (glass fiber-reinforced nylon 66 base material) | Evaluation | 3 | 2 | 4 | 4 | 4 | 4 | 2 | 2 | 2 | 4 |
| Peel strength (nylon 6 base material) | Evaluation | 4 | 2 | 4 | 4 | 4 | 4 | 2 | 4 | 4 | 4 |

| | | Example 29 | Example 30 | Example 31 | Example 32 | Example 33 | Example 34 | Example 35 | Example 36 | Example 37 | Example 38 |
|---|---|---|---|---|---|---|---|---|---|---|---|
| Peel strength (glass fiber-reinforced nylon 6 base material) | Evaluation | 2 | 2 | 4 | 4 | 4 | 4 | 2 | 2 | 3 | 4 |
| Peel trace (nylon 66 base material) | Evaluation | 1 | 1 | 1 | 1 | 2 | 4 | 1 | 1 | 1 | 2 |
| Peel trace (glass fiber-reinforced nylon 66 base material) | Evaluation | 1 | 1 | 1 | 1 | 2 | 4 | 1 | 1 | 1 | 2 |
| Peel trace (nylon 6 base material) | Evaluation | 1 | 1 | 1 | 1 | 3 | 4 | 1 | 1 | 1 | 4 |
| Peel trace (glass fiber-reinforced nylon 6 base material) | Evaluation | 1 | 1 | 1 | 2 | 3 | 4 | 1 | 1 | 1 | 3 |

[Table 5]

| | | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 18 |
|---|---|---|---|---|---|---|---|---|---|---|---|---|---|
| Conjugated diene block copolymer | a-1 | - | 130 | 130 | - | - | - | - | - | - | - | - | - |
| | a-5 | - | - | - | 130 | - | - | - | - | - | - | - | - |
| | aa-1 | - | - | - | - | 130 | 130 | 130 | 130 | - | - | - | 130 |
| | aa-2 | - | - | - | - | - | - | - | - | 130 | - | - | - |
| | aa-3 | - | - | - | - | - | - | - | - | - | 130 | - | - |
| | aa-4 | - | - | - | - | - | - | - | - | - | - | - | - |
| | aa-5 | - | - | - | - | - | - | - | - | - | - | - | - |
| | aa-6 | - | - | - | - | - | - | - | - | - | - | - | - |
| | aa-7 | - | - | - | - | - | - | - | - | - | - | - | - |
| | aa-8 | - | - | - | - | - | - | - | - | - | - | 130 | - |
| | aa-9 | - | - | - | - | - | - | - | - | - | - | - | - |
| Polyolefin resin | b-1 | 55 | 55 | 55 | 55 | 55 | 55 | - | - | 55 | 55 | 55 | 55 |
| | b-2 | - | - | - | - | - | - | - | - | - | - | - | - |
| | b-3 | - | - | - | - | - | - | 55 | 55 | - | - | - | - |
| | b-4 | - | - | - | - | - | - | - | - | - | - | - | - |
| Conjugated diene block copolymer | c-1 | 100 | 100 | 100 | 100 | 100 | 100 | 100 | 100 | 100 | 100 | 100 | - |
| | c-2 | - | - | - | - | - | - | - | - | - | - | - | 100 |
| Conjugated diene block copolymer | d | - | - | - | - | - | - | - | - | - | - | - | - |
| Softening agent | e | 150 | 150 | 150 | 150 | 150 | 150 | 150 | 150 | 150 | 150 | 150 | 150 |
| Stabilizer | f | 0.2 | 0.2 | 0.2 | 0.2 | 0.2 | 0.2 | 0.2 | 0.2 | 0.2 | 0.2 | 0.2 | 0.2 |
| Filler | g | - | - | 170 | - | - | 170 | - | 170 | - | - | - | - |

57

| | | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 18 |
|---|---|---|---|---|---|---|---|---|---|---|---|---|---|
| MFR | g/10 min | 12 | 6 | 1 | 76 | 2 | 1 | 23 | 5 | 3 | 7 | 14 | 87 |
| Shore A hardness | - | 63 | 52 | 60 | 46 | 52 | 58 | 47 | 55 | 55 | 50 | 63 | 53 |
| Tensile modulus | MPa | 9.1 | 6.0 | 5.2 | 3.7 | 4.2 | 4.6 | 4.5 | 6.0 | 5.0 | 4.7 | 10.5 | 4.3 |
| 100% modulus | MPa | 2.7 | 2.9 | 2.4 | 1.2 | 1.5 | 2.6 | 1.3 | 1.9 | 1.7 | 1.4 | 2.3 | 1.7 |
| 300% modulus | MPa | 3.5 | 5.2 | 4.1 | 1.9 | 2.8 | 4.3 | 2.4 | 3.1 | 2.9 | 2.3 | 3.6 | 2.2 |
| Tensile breaking strength | MPa | 5.9 | 7.0 | 6.7 | 3.0 | 5.2 | 5.3 | 3.8 | 4.2 | 4.4 | 4.2 | 4.1 | 2.2 |
| Tensile breaking elongation | % | 658 | 488 | 598 | 650 | 760 | 548 | 720 | 625 | 720 | 753 | 438 | 395 |
| Adhesive sample molding temperature | °C | 280 | 280 | 280 | 280 | 280 | 280 | 280 | 280 | 280 | 280 | 280 | 280 |
| Peel strength (nylon 66 base material) | N/cm | 0 | 0 | 0 | 0 | 2 | 1 | 0 | 3 | 0 | 0 | 0 | 1 |

EP 3 909 766 B1

58

(continued)

| | | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 18 |
|---|---|---|---|---|---|---|---|---|---|---|---|---|---|
| Peel strength (glass fiber-reinforced nylon 66 base material) | N/c m | 0 | 0 | 0 | 0 | 1 | 0 | 1 | 0 | 0 | 1 | 0 | 1 |
| Peel strength (nylon 6 base material) | N/c m | 0 | 0 | 0 | 0 | 1 | 1 | 4 | 4 | 0 | 0 | 0 | 2 |
| Peel strength (glass fiber-reinforced nylon 6 base material) | N/c m | 0 | 0 | 0 | 0 | 0 | 0 | 5 | 1 | 0 | 1 | 0 | 1 |
| Fluidity | Evaluation | 2 | 1 | 1 | 4 | 1 | 1 | 2 | 1 | 1 | 1 | 2 | 2 |
| Flexibility | Evaluation | 1 | 2 | 1 | 3 | 2 | 2 | 1 | 2 | 2 | 2 | 1 | 1 |
| Peel strength (nylon 66 base material) | Evaluation | 1 | 1 | 1 | 1 | 2 | 1 | 1 | 2 | 1 | 1 | 1 | 1 |

EP 3 909 766 B1

59

| | | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 18 |
|---|---|---|---|---|---|---|---|---|---|---|---|---|---|
| Peel strength (glass fiber-reinforced nylon 66 base material) | Evaluation | 1 | 1 | 1 | 1 | 2 | 1 | 2 | 1 | 1 | 1 | 1 | 1 |
| Peel strength (nylon 6 base material) | Evaluation | 1 | 1 | 1 | 1 | 2 | 2 | 3 | 2 | 1 | 1 | 1 | 1 |
| Peel strength (glass fiber-reinforced nylon 6 base material) | Evaluation | 1 | 1 | 1 | 1 | 1 | 1 | 2 | 2 | 1 | 1 | 1 | 1 |
| Peel trace (nylon 66 base material) | Evaluation | 1 | 1 | 1 | 1 | 1 | 1 | 1 | 1 | 1 | 1 | 1 | 1 |
| Peel trace (glass fiber-reinforced nylon 66 base material) | Evaluation | 1 | 1 | 1 | 1 | 1 | 1 | 1 | 1 | 1 | 1 | 1 | 1 |
| Peel trace (nylon 6 base material) | Evaluation | 1 | 1 | 1 | 1 | 1 | 1 | 1 | 1 | 1 | 1 | 1 | 1 |

EP 3 909 766 B1

(continued)

| | | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 18 |
|---|---|---|---|---|---|---|---|---|---|---|---|---|---|
| Peel trace (glass fiber-reinforced nylon 6 base material) | Evaluation | - | - | - | - | - | - | - | - | - | - | - | - |

[Table 6]

| | | Example 23 | Example 24 | Example 25 | Comparative Example 16 | Comparative Example 17 |
|---|---|---|---|---|---|---|
| Conjugated diene block copolymer | a-1 | - | - | - | - | - |
| | a-5 | - | - | - | - | - |
| | aa-1 | - | - | - | 130 | 70 |
| | aa-2 | - | - | - | - | - |
| | aa-3 | - | - | - | - | - |
| | aa-4 | - | - | - | - | - |
| | aa-5 | 130 | 130 | 70 | - | - |
| | aa-6 | - | - | - | - | - |
| | aa-7 | - | - | - | - | - |
| | aa-8 | - | - | - | - | - |
| Polyolefin resin | b-1 | 55 | - | - | 55 | - |
| | b-2 | - | - | 30 | - | 30 |
| | b-3 | - | - | - | - | - |
| | b-4 | - | 55 | - | - | - |
| Conjugated diene block copolymer | c-1 | 100 | 100 | - | 100 | - |
| | c-2 | - | - | - | - | - |
| Conjugated diene block copolymer | d | - | - | - | - | - |
| Softening agent | e | 150 | 150 | - | 150 | - |
| Stabilizer | f | 0.2 | 0.2 | 0.2 | 0.2 | 0.2 |
| Filler | g | - | - | - | - | - |
| MFR | g/10min | 53 | 61 | 10 | 2 | 7 |
| Shore A hardness | - | 44 | 43 | 81 | 52 | 88 |
| Tensile modulus | MPa | 3.6 | 3.3 | 25.3 | 4.2 | 71.7 |
| 100% modulus | MPa | 1.1 | 1.2 | 4.4 | 1.5 | 9.4 |
| 300% modulus | MPa | 1.8 | 1.9 | 5.6 | 2.8 | 11.4 |
| Tensile breaking strength | MPa | 2.9 | 2.7 | 11.8 | 5.2 | 13.0 |
| Tensile breaking elongation | % | 690 | 578 | 950 | 760 | 490 |
| Adhesive sample molding temperature | °C | 280 | 280 | 280 | 280 | 280 |
| Peel strength (PPS base material) | N/cm | 6 | 7 | 10 | 6 | 0 |
| Peel strength (glass fiber-reinforced PPS base material) | N/cm | 6 | 7 | 10 | 3 | 0 |
| Peel strength (PC base material) | N/cm | 10 | 11 | 38 | 1 | 1 |
| Peel strength (ABS base material) | N/cm | 3 | 6 | 4 | 0 | 1 |

# EP 3 909 766 B1

(continued)

| | | Example 23 | Example 24 | Example 25 | Comparative Example 16 | Comparative Example 17 |
|---|---|---|---|---|---|---|
| Peel strength (PMMA base material) | N/cm | 2 | 10 | 1 | 0 | 1 |
| Fluidity | Evaluation | 4 | 4 | 2 | 1 | 1 |
| Flexibility | Evaluation | 3 | 3 | 1 | 2 | 1 |
| Peel strength (PPS base material) | Evaluation | 3 | 3 | 4 | 3 | 1 |
| Peel strength (glass fiber-reinforced PPS base material) | Evaluation | 3 | 3 | 4 | 2 | 1 |
| Peel strength (PC base material) | Evaluation | 4 | 4 | 4 | 1 | 2 |
| Peel strength (ABS base material) | Evaluation | 2 | 3 | 2 | 1 | 2 |
| Peel strength (PMMA base material) | Evaluation | 2 | 4 | 2 | 1 | 2 |

As is evident from the results of Table 1, the modification grade was excellent in fluidity and flexibility in Examples 1 to 4 and 26.

As is evident from Tables 2 to 6, fluidity, flexibility, mechanical characteristics and adhesiveness to a polar resin were excellent in Examples 5 to 25 and 27 to 38. In addition, it was confirmed in Examples 32, 33, 34 and 38 that the peel trace of the modified conjugated diene polymer composition remained on the polar resin base material side after the peel test. For example, the comparison among Examples 30 to 34, etc. revealed that the compositional control of each component in the modified conjugated diene polymer composition is capable of enhancing the adhesion strength between the layer including the modified conjugated diene polymer composition and the layer including the polar resin to an extent that a peel trace remains. Whether or not a peel trace remains is presumably also influenced by a sample shape or molding conditions for the multilayered article. Thus, it is suggested that a peel trace may be confirmed even in the modified conjugated diene polymer composition confirmed this time to have no peel trace, by changing a sample shape or molding conditions for the multilayered article, etc.

In Comparative Examples 5 to 18, even a sample evaluated as having excellent fluidity or hardness was given "1" in the evaluation of peel strength depending on a base material, revealing insufficient adhesiveness to polar resins.

The modified conjugated diene block copolymer and the modified conjugated diene block copolymer resin composition of the present invention are excellent in fluidity, flexibility and adhesiveness to a polar resin and as such, have industrial applicability for various purposes such as automobile parts, power tools, toys, electrical and electronic equipment parts, medical appliances, building and piping member, cutleries, housewares, cosmetic products, industrial parts, various hoses, various housings, various module cases, various power control unit parts, writing implements, robot hands and medical appliances.

Reference Signs List

10 ... power drill, 11... power drill housing, 12, 22, 32, 42 ... grip portion, 20 ... cutlery, 21 ... main body of the cutlery, 30 ... mobile phone housing, 31 ... main body of the mobile phone housing, 40 ... cutter, and 41 ... cutter housing.

Claims

1.   A modified conjugated diene polymer having a polymer block mainly comprising conjugated diene monomer units, and satisfying the following conditions (a), (b), (c) and (d) :

(a) a vinyl bond content before hydrogenation in the polymer block mainly comprising conjugated diene monomer units is 65% by mol or more based on 100% by mol of total of the conjugated diene monomer units;
(b) at least one or more conjugated diene monomer units in the polymer block mainly comprising conjugated diene

**EP 3 909 766 B1**

monomer units are hydrogenated;

(c) a content of a polymer block mainly comprising vinyl aromatic monomer units in the modified conjugated diene polymer is 20% by mass or less based on the total amount of the modified conjugated diene polymer; and

(d) the modified conjugated diene polymer has a modifying group.

2. The modified conjugated diene polymer according to claim 1, wherein a butylene content and/or a propylene content in the polymer block mainly comprising conjugated diene monomer units is 60% by mol or more based on 100% by mol of total of the conjugated diene monomer units.

3. The modified conjugated diene polymer according to claim 1 or 2, wherein the modified conjugated diene polymer has the modifying group in a side chain.

4. The modified conjugated diene polymer according to any one of claims 1 to 3, wherein the modifying group is at least one group selected from the group consisting of an acid anhydride group, a carbonyl group, a carboxyl group, an amino group, an epoxy group, an alkoxysilane group, a hydroxyl group, an isocyanate group and an ionic group.

5. A modified conjugated diene polymer composition comprising (A) the modified conjugated diene polymer according to any one of claims 1 to 4 and (B) a polyolefin.

6. The modified conjugated diene polymer composition according to claim 5, wherein the polyolefin (B) is polypropylene.

7. The modified conjugated diene polymer composition according to claim 5 or 6, further comprising (C) a conjugated diene polymer having a weight-average molecular weight of 150000 or higher, measured as disclosed in the description.

8. The modified conjugated diene polymer composition according to claim 7, comprising at least a conjugated diene polymer having a random copolymer block of a conjugated diene monomer and a vinyl aromatic monomer as the conjugated diene polymer (C).

9. The modified conjugated diene polymer composition according to any one of claims 5 to 8, wherein a content of the modified conjugated diene polymer (A) is 5% by mass or more and 80% by mass or less.

10. The modified conjugated diene polymer composition according to any one of claims 5 to 9, wherein a weight-average molecular weight of the modified conjugated diene polymer (A) is 100000 or higher.

11. The modified conjugated diene polymer composition according to any one of claims 5 to 10, further comprising a softening agent.

12. The modified conjugated diene polymer composition according to any one of claims 5 to 11, wherein a melt flow rate of the modified conjugated diene polymer composition at 230°C under 2.16 kg is 10 g/10 min or more.

13. The modified conjugated diene polymer composition according to any one of claims 5 to 12, further comprising a filler.

14. A multilayered article comprising a layer comprising a polar resin, and a layer comprising the modified conjugated diene polymer composition according to any one of claims 5 to 13 laminated on the layer comprising a polar resin.

15. The multilayered article according to claim 14, wherein the layer comprising the modified conjugated diene polymer composition is thermally fused to the layer comprising a polar resin.

16. The multilayered article according to claim 14 or 15, wherein the polar resin is at least one resin selected from the group consisting of ABS, polymethyl methacrylate, polyamide, polyacetal, polyethylene terephthalate, polybutylene terephthalate, polycarbonate and polyphenylene sulfide.

17. A method for producing the multilayered article according to any one of claims 14 to 16, comprising:
forming the multilayered article by at least one method selected from the group consisting of an injection molding method, an insert molding method, an extrusion molding method and a compression molding method.

18. A molded article comprising the multilayered article according to any one of claims 14 to 16, wherein

the multilayered article is comprised in at least one member selected from a grip of an industrial tool, an electrical wire covering member, a connector housing, a grip of handy electronic equipment, a grip of a toothbrush, a grip of a shaver, a grip of a cutlery, a grip of a writing implement, a grip portion of a robot hand and a grip portion of an automobile interior member.

**Patentansprüche**

1. Modifiziertes konjugiertes Dienpolymer mit einem Polymerblock, der hauptsächlich konjugierte Dienmonomereinheiten enthält, und welches die folgenden Bedingungen (a), (b), (c) und (d) erfüllt:

   (a) der Vinylbindungsgehalt vor Hydrierung in dem Polymerblock, der hauptsächlich konjugierte Dienmonomereinheiten enthält, beträgt 65 Mol-% oder mehr, bezogen auf 100 Mol-% der Gesamtheit der konjugierten Dienmonomereinheiten;
   (b) mindestens eine oder mehrere konjugierte Dienmonomereinheiten in dem Polymerblock, der hauptsächlich konjugierte Dienmonomereinheiten enthält, ist/sind hydriert;
   (c) der Gehalt eines Polymerblocks, der hauptsächlich vinylaromatische Monomereinheiten enthält, in dem modifizierten konjugierten Dienpolymer ist 20 Massen-% oder weniger, bezogen auf die Gesamtmenge des modifizierten konjugierten Dienpolymers; und
   (d) das modifizierte konjugierte Dienpolymer weist eine modifizierende Gruppe auf.

2. Modifiziertes konjugiertes Dienpolymer nach Anspruch 1, wobei der Butylengehalt und/oder der Propylengehalt in dem Polymerblock, der hauptsächlich konjugierte Dienmonomereinheiten enthält, 60 Mol-% oder mehr beträgt, bezogen auf 100 Mol-% der Gesamtheit der konjugierten Dienmonomereinheiten.

3. Modifiziertes konjugiertes Dienpolymer nach Anspruch 1 oder 2, wobei das modifizierte konjugierte Dienpolymer die modifizierende Gruppe in einer Seitenkette aufweist.

4. Modifiziertes konjugiertes Dienpolymer nach einem der Ansprüche 1 bis 3, wobei die modifizierende Gruppe mindestens eine Gruppe ist, ausgewählt aus der Gruppe bestehend aus einer Säureanhydridgruppe, einer Carbonylgruppe, einer Carboxylgruppe, einer Aminogruppe, einer Epoxygruppe, einer Alkoxysilangruppe, einer Hydroxylgruppe, einer Isocyanatgruppe und einer ionischen Gruppe.

5. Modifizierte konjugierte Dienpolymerzusammensetzung, umfassend (A) das modifizierte konjugierte Dienpolymer nach einem der Ansprüche 1 bis 4 und (B) ein Polyolefin.

6. Modifizierte konjugierte Dienpolymerzusammensetzung nach Anspruch 5, wobei das Polyolefin (B) Polypropylen ist.

7. Modifizierte konjugierte Dienpolymerzusammensetzung nach Anspruch 5 oder 6, welche weiterhin (C) ein konjugiertes Dienpolymer mit einem gewichtsmittleren Molekulargewicht von 150000 oder höher, bestimmt wie in der Beschreibung beschrieben, enthält.

8. Modifizierte konjugierte Dienpolymerzusammensetzung nach Anspruch 7, welche als das konjugierte Dienpolymer (C) mindestens ein konjugiertes Dienpolymer, das einen statistischen Copolymerblock eines konjugierten Dienmonomers und eines vinylaromatischen Monomers aufweist, enthält.

9. Modifizierte konjugierte Dienpolymerzusammensetzung nach einem der Ansprüche 5 bis 8, wobei der Gehalt des modifizierten konjugierten Dienpolymers (A) 5 Massen-% oder mehr und 80 Massen-% oder weniger ist.

10. Modifizierte konjugierte Dienpolymerzusammensetzung nach einem der Ansprüche 5 bis 9, wobei das gewichtsmittlere Molekulargewicht des modifizierten konjugierten Dienpolymers (A) 100000 oder höher ist.

11. Modifizierte konjugierte Dienpolymerzusammensetzung nach einem der Ansprüche 5 bis 10, die weiterhin einen Weichmacher enthält.

12. Modifizierte konjugierte Dienpolymerzusammensetzung nach einem der Ansprüche 5 bis 11, wobei die Schmelzfließrate der modifizierten konjugierten Dienpolymerzusammensetzung bei 230 °C unter 2,16 kg 10 g/10 min oder mehr ist.

**13.** Modifizierte konjugierte Dienpolymerzusammensetzung nach einem der Ansprüche 5 bis 12, welche weiterhin einen Füllstoff enthält.

**14.** Mehrschichtiger Gegenstand, umfassend eine Schicht, die ein polares Harz enthält, und eine die modifizierte konjugierte Dienpolymerzusammensetzung nach einem Ansprüche 5 bis 13 enthaltende Schicht, welche auf die ein polares Harz enthaltende Schicht laminiert ist.

**15.** Mehrschichtiger Gegenstand nach Anspruch 14, wobei die die modifizierte konjugierte Dienpolymerzusammensetzung enthaltende Schicht thermisch mit der ein polares Harz enthaltenden Schicht verschmolzen ist.

**16.** Mehrschichtiger Gegenstand nach Anspruch 14 oder 15, wobei das polare Harz mindestens ein Harz ist, ausgewählt aus der Gruppe bestehend aus ABS, Polymethylmethacrylat, Polyamid, Polyacetal, Polyethylenterephthalat, Polybutylenterephthalat, Polycarbonat und Polyphenylensulfid.

**17.** Verfahren zur Herstellung des mehrschichtigen Gegenstands nach einem der Ansprüche 14 bis 16, umfassend: das Bilden des mehrschichtigen Gegenstands durch mindestens ein Verfahren, ausgewählt aus der Gruppe bestehend aus einem Spritzgießverfahren, einem Zweistufen-Spritzgießverfahren, Extrudieren in ein geschlossenes Werkzeug und einem Formpressverfahren.

**18.** Geformter Gegenstand, welcher den mehrschichtigen Gegenstand nach einem der Ansprüche 14 bis 16 umfasst, wobei
der mehrschichtige Gegenstand in mindestens einem Element enthalten ist, ausgewählt aus einem Griff eines industriellen Werkzeugs, einem elektrischen Drahtabdeckungselement, einem Verbindergehäuse, einem Griff eines handlichen elektronischen Geräts, einem Griff einer Zahnbürste, einem Griff eines Rasierapparats, einem Griff eines Bestecks, einem Griff eines Schreibgeräts, einem Griffabschnitt einer Roboterhand und einem Griffabschnitt eines Automobilinnenraumelements.

**Revendications**

**1.** Polymère de diène conjugué modifié présentant une séquence polymère comprenant principalement des motifs monomères de diène conjugué, et satisfaisant les conditions (a), (b), (c) et (d) suivantes :

(a) une teneur en liaisons vinyles avant hydrogénation dans la séquence polymère comprenant principalement des motifs monomères de diène conjugué est de 65 % en moles ou plus sur la base de 100 % en moles du total des motifs monomères de diène conjugué ;
(b) au moins un ou plusieurs motifs monomères de diène conjugué dans la séquence polymère comprenant principalement des motifs monomères de diène conjugué sont hydrogénés ;
(c) une teneur d'une séquence polymère comprenant principalement des motifs monomères vinyliques aromatiques dans le polymère de diène conjugué modifié est de 20 % en masse ou moins sur la base de la quantité totale du polymère de diène conjugué modifié ; et
(d) le polymère de diène conjugué modifié présente un groupe de modification.

**2.** Polymère de diène conjugué modifié selon la revendication 1, dans lequel une teneur en butylène et/ou une teneur en propylène dans la séquence polymère comprenant principalement des motifs monomères de diène conjugué est de 60 % en moles ou plus sur la base de 100 % en moles du total des motifs monomères de diène conjugué.

**3.** Polymère de diène conjugué modifié selon la revendication 1 ou 2, dans lequel le polymère de diène conjugué modifié présente le groupe de modification dans une chaîne latérale.

**4.** Polymère de diène conjugué modifié selon l'une quelconque des revendications 1 à 3, dans lequel le groupe de modification est au moins un groupe choisi dans le groupe constitué d'un groupe anhydride d'acide, d'un groupe carbonyle, d'un groupe carboxyle, d'un groupe amino, d'un groupe époxy, d'un groupe alcoxysilane, d'un groupe hydroxyle, d'un groupe isocyanate et d'un groupe ionique.

**5.** Composition de polymère de diène conjugué modifié comprenant (A) le polymère de diène conjugué modifié selon l'une quelconque des revendications 1 à 4 et (B) une polyoléfine.

**6.** Composition de polymère de diène conjugué modifié selon la revendication 5, dans laquelle la polyoléfine (B) est du polypropylène.

**7.** Composition de polymère de diène conjugué modifié selon la revendication 5 ou 6, comprenant en outre (C) un polymère de diène conjugué présentant un poids moléculaire moyen en poids de 150 000 ou supérieur, mesuré tel que décrit dans la description.

**8.** Composition de polymère de diène conjugué modifié selon la revendication 7, comprenant au moins un polymère de diène conjugué présentant une séquence copolymère aléatoire d'un monomère de diène conjugué et d'un monomère vinylique aromatique en tant que polymère de diène conjugué (C).

**9.** Composition de polymère de diène conjugué modifié selon l'une quelconque des revendications 5 à 8, dans laquelle une teneur du polymère de diène conjugué modifié (A) est de 5 % en masse ou plus et de 80 % en masse ou moins.

**10.** Composition de polymère de diène conjugué modifié selon l'une quelconque des revendications 5 à 9, dans laquelle un poids moléculaire moyen en poids du polymère de diène conjugué modifié (A) est de 100 000 ou supérieur.

**11.** Composition de polymère de diène conjugué modifié selon l'une quelconque des revendications 5 à 10, comprenant en outre un agent plastifiant.

**12.** Composition de polymère de diène conjugué modifié selon l'une quelconque des revendications 5 à 11, dans laquelle un indice de fluidité à chaud de la composition de polymère de diène conjugué modifié à 230 °C sous 2,16 kg est de 10 g/10 min ou plus.

**13.** Composition de polymère de diène conjugué modifié selon l'une quelconque des revendications 5 à 12, comprenant en outre une charge.

**14.** Article multicouche comprenant une couche comprenant une résine polaire, et une couche comprenant la composition de polymère de diène conjugué modifié selon l'une quelconque des revendications 5 à 13 stratifiée sur la couche comprenant une résine polaire.

**15.** Article multicouche selon la revendication 14, dans lequel la couche comprenant la composition de polymère de diène conjugué modifié est fusionnée thermiquement à la couche comprenant une résine polaire.

**16.** Article multicouche selon la revendication 14 ou 15, dans lequel la résine polaire est au moins une résine choisie dans le groupe constitué de l'ABS, du méthacrylate de polyméthyle, du polyamide, du polyacétal, du téréphtalate de polyéthylène, du téréphtalate de polybutylène, du polycarbonate et du sulfure de polyphénylène.

**17.** Procédé de production de l'article multicouche selon l'une quelconque des revendications 14 à 16, comprenant : la formation de l'article multicouche par au moins un procédé choisi dans le groupe constitué d'un procédé de moulage par injection, d'un procédé de moulage par insertion, d'un procédé de moulage par extrusion et d'un procédé de moulage par compression.

**18.** Article moulé comprenant l'article multicouche selon l'une quelconque des revendications 14 à 16, dans lequel l'article multicouche est compris dans au moins une pièce choisie parmi une poignée d'un outil industriel, une pièce de couverture de fil électrique, un logement de connecteur, une poignée d'un équipement électronique facile à manier, une poignée d'une brosse à dents, une poignée d'un rasoir, une poignée d'un article de coutellerie, une poignée d'un instrument d'écriture, une partie de poignée d'une main de robot et une partie de poignée d'une pièce d'intérieur d'automobile.

[Fig.1]

[Fig.2]

[Fig.3]

[Fig.4]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63254119 A
- JP 2007527461 W
- EP 1338621 A1
- JP 2009215360 A
- EP 1431342 A2
- US 4869963 A

**Non-patent literature cited in the description**

- **I.M. KOLTHOFF et al.** *Polym. Sci.*, 1946, vol. 1, 429
- **Y. TANAKA et al.** *RUBBER CHEMISTRY and TECHNOLOGY*, 1981, vol. 54, 685
- **I.M. KOLTHOFF et al.** *J. Polym. Soi.*, 1946, vol. 1, 429